# EUROPEAN PATENT APPLICATION

(11) **EP 1 667 063 A1**
(43) Date of publication of application: **07.06.2006**
(21) Application number: 04773248.2
(22) Date of filing: 10.09.2004
(51) Int. Cl.: G06T 1/00, G09G 5/02

(54) **IMAGE PROCESSING APPARATUS, IMAGE PROCESSING METHOD, AND IMAGE PROCESSING PROGRAM**

(30) Priority: 11.09.2003 JP 2003320061; 16.10.2003 JP 2003356226; 26.12.2003 JP 2003433324; 08.06.2004 JP 2004169693; 22.06.2004 JP 2004183339
(71) Applicant: MATSUSHITA ELECTRIC INDUSTRIAL CO., LTD., Kadoma-shi, Osaka 571-8501 (JP)
(72) Inventor: YAMASHITA, Haruo, Osaka 571-8501 (JP); KOJIMA, Akio, Osaka 571-8501 (JP); ITO, Takeshi, Osaka 571-8501 (JP); KUWAHARA, Yasuhiro, Osaka 571-8501 (JP); WATANABE, Tatsumi, Osaka 571-8501 (JP); MONOBE, Yusuke, Osaka 571-8501 (JP); KUROSAWA, Toshiharu, Osaka 571-8501 (JP)
(74) Representative: Eisenführ, Speiser & Partner
(86) International application number: PCT/JP2004/013604
(87) International publication number: WO 2005/027040

(57) **Abstract**

The present invention provides an image processing device with which the storage capacity for storing lookup tables can be reduced while allowing the degree to which various color processing operations are performed to be freely adjusted. The image processing device 10 performs color processing of an image signal d2, and is provided with a profile creation portion 15 and a color processing execution portion 16. The profile creation portion 15 creates a new color transformation profile that achieves a predetermined color processing to a predetermined degree of processing based on a plurality of base color transformation profiles that achieve the predetermined color processing to different degrees of processing. The color processing execution portion 16 executes color processing of the image signal d2 based on the new color transformation profile that has been created.

## Description

### Technical Field

The present invention relates to image processing devices, and in particular relates to image processing devices that perform color processing of an image signal.

### Background Art

Color processing is known as one type of image processing for image signals.

Color processing is known as processing such as display color transformation, color region transformation, and memory color correction. Display color transformation is processing for adjusting the overall tone of the image signal, and for example is processing for adjusting the brightness of the image signal or processing that gives a specific effect (such as film-like processing) to the image signal. Color region transformation is processing that is performed in order to reproduce an image signal in a fixed color space on a device that inputs/outputs the image signal, and for example includes processing known as gamut mapping. Memory color correction is processing for adjusting a specific color to fit memory, such as blue sky, skin tone, or green foliage in the image signal.

The above processing operations require the input image signal to be mapped to a separate space by a particular mapping function. The mapping function often is not a linear mapping function, however, and in some cases the mapping function may be impossible to normalize. For this reason, the above processing operations include a processing step of employing a lookup table.

One problem that comes to the fore when performing processing using a lookup table is how accurate the color processing can be executed while reducing the capacity of the storage devices for storing lookup tables. That is, storing the data of the color-processed image signals with respect to all the image signals that are input results in lookup tables having an enormous data amount. On the other hand, storing only the data for the color-processed image signals with respect to some of the image signals leads to a drop in the accuracy of the color processing.

To remedy this, a technology for storing data of the color-processed image signal with respect to a portion of the input image signal in a lookup table and using this lookup table for interpolation to increase the accuracy of the color processing (for example, see JP H4-367162A) and a technology for repeatedly revising the lookup table to obtain a lookup table that increases the accuracy at which memory colors are reproduced (see JP H11-205620A) are known.

### Disclosure of the Invention

On the other hand, in each of display color transformation, color region transformation, and memory color correction, there is a need for the degree of processing to be adjusted freely. For example, there is a need for color processing to be performed in a manner that is in correspondence with the environment of the output device that will output the color-processed image signal. More specifically, there is a need to display the color-processed image signal on a monitor taking into account the ambient light of the surroundings, as well as a need to print out the color-processed image signal on a printer taking into account the paper quality. Also, in display color transformation and memory color correction, etc., there is a need to perform color processing that is in correspondence with the preferences of each person who will view the image.

However, to realize these color processing operations, it is necessary to have an enormous number of lookup tables, each of which represents a different degree of color processing, and it can be appreciated that the storage capacity of the memory, etc., for storing the lookup tables also must be very large.

Accordingly, it is an aim of the present invention to provide an image processing device with which the storage capacity for storing the lookup tables can be reduced and at the same time the degree of processing of the various color processing operations can be adjusted freely.

The image processing device according to claim 1 is an image processing device that performs color processing of an image signal, and comprises a color transformation lookup table creation portion and a color processing execution portion. The color transformation lookup table creation portion creates a new color transformation lookup table that achieves a predetermined color processing to a predetermined degree of processing based on a plurality of base color transformation lookup tables, each of which achieves the predetermined color processing to a different degree of processing. The color processing execution portion executes color processing of the image signal based on the new color transformation lookup table that has been created.

Here, the predetermined color processing is a processing such as display color transformation, color region transformation, and memory color correction (the same applies in the following description). The degree of processing of the color processing in for example the case of memory color correction processing is the degree to which color correction is performed to strengthen the memory color (the same applies in the following).

With this image processing device of the invention, it is possible to achieve color processing to any degree simply by providing a small number of base color transformation lookup tables. It is not necessary to prepare other color transformation lookup tables having different degrees of processing other than this small number of base color transformation lookup tables, allowing the memory capacity of the memory, etc., for storing the color transformation lookup tables to be reduced.

The image processing device according to claim 2 is the image processing device according to claim 1 in which the color transformation lookup table creation portion has a creation execution portion and a lookup table storage portion. The creation execution portion creates a new color transformation lookup table based on a degree of synthesis of a plurality of base color transformation lookup tables, each of which achieves the predetermined color processing to a different degree. The lookup table storage portion stores the new color transformation lookup table that is created by the creation execution portion. Also, the color processing execution portion executes color processing of the image signal based on the new color transformation lookup table that has been stored in the lookup table storage portion.

The creation execution portion for example uses the degree of synthesis of a plurality of base color transformation lookup tables to interpolate or extrapolate the corresponding elements in those base color transformation lookup tables, deriving the values of the elements of a new color transformation lookup table. The lookup table storage portion stores the values of the elements of the new color transformation lookup table. The color processing execution portion executes color processing of the image signal using the new color transformation lookup table that has been stored in the lookup table storage portion.

In this image processing device of the invention, by freely changing the degree of synthesis of the base color transformation lookup tables it is possible to create a new color transformation lookup table that achieves a desired degree of processing.

The image processing device according to claim 3 is the image processing device according to claim 1 or 2 in which the plurality of base color transformation lookup tables include a base color transformation lookup table that achieves the predetermined color processing to a default degree of processing, and a base color transformation lookup table that achieves the predetermined color processing to a degree of processing that is higher than the default or a degree of processing that is lower than the default.

The creation execution portion for example interpolate or extrapolates corresponding elements of a base color transformation lookup table that achieves a default degree of processing and a base color transformation lookup table that achieves a degree of processing that is higher or a degree of processing that is lower than the default, based on the degree of synthesis of the plurality of base color transformation lookup tables, deriving the values of the elements of a new color transformation lookup table.

In this image processing device of the invention, it is possible to achieve color processing using the base color transformation lookup table that achieves the default degree of processing, and if necessary, to achieve color processing by customizing the base color transformation lookup table for achieving the default degree of processing.

The image processing device according to claim 4 is the image processing device according to any one of claims 1 to 3 in which each of the base color transformation lookup tables is a color transformation lookup table that achieves a combination of a plurality of different color processing.

Here, the base color transformation lookup tables store the results of performing a plurality of color processing operations in series with respect to the image signal. Further, each base color transformation lookup table is a color transformation lookup table that achieves a different degree of processing for at least some of the color processing of the plurality of color processing.

In this image processing device of the invention, a color transformation table that achieves a combination of a plurality of color processing is used, and thus it is possible to shorten the time that is required to execute a plurality of color processing operations. Also, it is possible to execute at least some of the color processing of the plurality of color processing operations at a desired degree of processing.

The image processing device according to claim 5 is the image processing device according to any one of claims 1 to 3 in which the color transformation lookup table creation portion creates a new color transformation lookup table by synthesizing the plurality of color transformation lookup tables that are created based on a plurality of color transformation lookup tables created for each color processing and that for each color processing achieve a different degree of processing.

Here, the color transformation lookup table creation portion creates a new color transformation lookup table by synthesizing a plurality of base color transformation lookup tables.

In this image processing device of the invention, it is possible to create a new color transformation lookup table that achieves each of the plurality of color processing operations at any degree of processing. Thus, it is possible to achieve more accurate image processing.

The image processing method according to claim 6 is an image processing method of performing color processing of an image signal that comprises a color transformation lookup table creation step and a color processing execution step. The color transformation lookup table creation step is a step of creating a new color transformation lookup table that achieves a predetermined color processing to a predetermined degree of processing based on a plurality of base color transformation lookup tables, each of which achieves the predetermined color processing to a different degree of processing. The color processing execution step is a step of executing color processing of the image signal based on the new color transformation lookup table that has been created.

In this image processing method of the invention, it is possible to achieve any degree of color processing simply by providing a small number of base color transformation lookup tables. Other than this small number of base color transformation lookup tables, it is not necessary to prepare other color transformation lookup tables having different degrees of processing, allowing the memory capacity of the memory etc. for storing the color transformation lookup tables to be reduced.

The image processing program according to claim 7 is an image processing program for performing color processing of an image signal through a computer, and causes the computer to perform an image processing method that comprises a color transformation lookup table creation step and a color processing execution step. The color transformation lookup table creation step is a step of creating a new color transformation lookup table that achieves a predetermined color processing to a predetermined degree of processing based on a plurality of base color transformation lookup tables, each of which achieves the predetermined color processing to a different degree of processing. The color processing execution step is a step of executing color processing of the image signal based on the new color transformation lookup table that has been created.

With this image processing program of the invention, it is possible to achieve color processing to any degree of processing simply by providing a small number of base color transformation lookup tables.

The integrated circuit according to claim 8 includes an image processing device according to any one of claims 1 to 5.

With this integrated circuit of the invention, it is possible to obtain the same effects as an image processing device according to any one of claims 1 to 5.

The display device according to claim 9 comprises an image processing device according to any one of claims 1 to 5 and display means that performs a display of the image signal that has been color processed that is output from the image processing device.

With this display device of the invention, it is possible to obtain the same effects as an image processing device according to any one of claims 1 to 5.

The image-capturing device according to claim 10 comprises image-capturing means that performs image capture of an image, and an image processing device according to any one of claims 1 to 5 that performs color processing of an image captured by the image-capturing means as the image signal.

With this image-capturing device of the invention, it is possible to obtain the same effects as an image processing device according to any one of claims 1 to 5.

The portable information terminal according to claim 11 comprises data reception means that receives image data that have been transmitted or broadcast, an image processing device according to any one of claims 1 to 5 that performs color processing of the image data that are received as the image signal, and display means that performs a display of the image signal that has been color processed by the image processing device.

With this portable information terminal of the invention, it is possible to obtain the same effects as an image processing device according to any one of claims 1 to 5.

The portable information terminal according to claim 12 comprises image-capturing means that captures an image, an image processing device according to any one of claims 1 to 5 that performs color processing of an image that has been captured by the image-capturing means as the image signal, and data transmission means that transmits the image signal that has been color processed.

With this portable information terminal of the invention, it is possible to obtain the same effects as an image processing device according to any one of claims 1 to 5.

The image processing device according to claim 13 is an image processing device that performs color processing of an image signal that has been received as input, and comprises profile creation means and image processing execution means. The profile creation means creates a profile to be used for color processing based on a plurality of profiles for performing different color processing operations. The image processing execution means performs color processing using the profile that is created by the profile creation means.

Here, color processing is for example display color transformation, color region transformation, or memory color correction.

Also, the profile is coefficient matrix data for performing a computation with respect to the image signal, or table data for storing values of the image signal after color processing of the values of the image signal (the same applies in the subsequent description).

This image processing device of the invention creates a new profile based on a plurality of profiles. Thus, it is still possible to perform a large number of different color processing operations even if only a small number of profiles have been prepared. That is, it is possible to reduce the storage capacity for storing the profiles.

The image processing device according to claim 14 is an image processing device that performs color processing of an image signal that has been received as input, and comprises profile information output means and image processing execution means. The profile information output means outputs profile information for specifying a profile to be used for color processing. The image processing execution means performs the color processing using the profile specified based on the information that has been output from the profile information output means.

Here, the profile information is for example data stored by the profile, tag information such as a number that specifies the profile, parameter information that indicates the features of the processing of the profile, or other information for specifying a profile.

With this image processing device of the invention, it is possible to control the profiles and perform color processing based on the profile information.

The image processing device according to claim 15 is the image processing device according to claim 14 in which the profile information output means outputs the profile information in accordance with a display environment in which the image signal that has been color processed will be displayed.

Here, the display environment for example is the brightness or the color temperature of the ambient light, the device that will perform display, the size of the image to be displayed, the positional relationship between the image to be displayed and the user who will view the displayed image, and information relating to the user.

With this image processing device of the invention, it is possible to perform color processing that is in correspondence with the display environment.

The image processing device according to claim 16 is the image processing device according to claim 14 in which the profile information output means outputs the profile information in accordance with the information included in the image signal that is related to the profile.

The information that is related to the profile is for example data stored by the profile, tag information such as a number that specifies the profile, parameter information that indicates the features of the processing of the profile, or other information for specifying a profile.

With this image processing device of the invention, it is possible to perform color processing after first obtaining information that is related to the profile from the image signal.

The image processing device according to claim 17 is the image processing device according to claim 14 in which the profile information output means outputs the profile information in accordance with information relating to a characteristic of the color processing that has been obtained.

The information relating to a characteristic of the color processing is information on the characteristic of a parameter of the color processing, and for example is the value of a parameter such as brightness, hue, vividness, or the property of the memory color correction.

With this image processing device of the invention, it is for example possible to perform color processing after the user has input preferred information on the characteristics of the color processing.

The image processing device according to claim 18 is the image processing device according to claim 14 in which the profile information output means outputs the profile information in accordance with information relating to the environment in which the image signal is created.

The information relating to an environment in which the image signal is created includes information on the image-capture environment if the image signal has been recorded by image capture or image capture permission information pertaining to the image-capture environment.

With this image processing device of the invention, it is possible to perform color processing in correspondence with information relating to the environment in which the image signal is created.

The image processing device according to claim 19 is the image processing device according to claim 14 in which the image signal includes image data and property information of the image signal. The profile information output means outputs the profile information in accordance with the property information.

With this image processing device of the invention, it is possible to perform color processing according to the property information of the image signal. Thus, it is possible to perform color processing that is suited for the image signal.

The image processing device according to claim 20 is the image processing device according to claim 19 in which the property information includes overall property information relating to the image data overall.

The overall property information includes for example information related to the production of the image data overall or information related to the content of the image data overall.

With the image processing device of this invention, it is possible to perform color processing in accordance with the overall property information. Thus, it is possible to perform color processing that is suited for the image data.

The image processing device according to claim 21 is the image processing device according to claim 19 or 20 in which the property information includes partial property information relating to some of the image data.

The partial property information includes for example information related to the scene content of some of the image data.

With the image processing device of this invention, it is possible to perform color processing that is in accordance with the partial property information. Thus, it is possible to perform color processing that is suited for the image data.

The image processing device according to claim 22 is the image processing device according to claim 19 in which the property information includes creation environment property information relating to an environment in which the image signal is created.

The creation environment property information is information related to the environment in which the image signal was captured, recorded, or created, and for example includes information related to the environment when the image signal was created, or information on the operation of the device used to create the image signal.

With the image processing device of this invention, it is possible to perform color processing in correspondence with the creation environment property information. Thus, it is possible to perform color processing that is appropriate for the image signal.

The image processing device according to claim 23 is the image processing device according to claim 19 in which the property information includes medium property information relating to a medium from which the image signal is obtained.

The medium property information is information related to the medium through which the image signal was obtained, such as broadcast medium, transmission medium, or recording medium.

With the image processing device of this invention, it is possible to perform color processing in correspondence with the medium property information. Thus, it is possible to perform color processing that is appropriate for the properties of the medium.

The image processing device according to claim 24 is the image processing device according to any one of the image processing devices according to claims 13 to 23, in which the profile is a two-dimensional LUT. The image processing execution means includes an image processing device according to any one of claims 1 to 5.

With this image processing device of the invention, it is possible to obtain the same effects as an image processing device according to any one of claims 13 to 23. It is also possible to obtain the same effects as an image processing device according to any one of claims 1 to 5.

The image processing device according to claim 25 comprises image processing execution means, profile information output means, and profile information adding means. The image processing execution means performs color processing of an image signal that has been received as input. The profile information output means outputs profile information for specifying a profile with which favorable color processing is performed on the image signal that is received as input. The profile information adding means adds the profile information to the image signal or to the image signal that has been color processed by the image processing execution means, and outputs the result.

With the image processing device of this invention, it is possible to execute processing associating the image signal or the image signal after color processing by the image processing execution means with the profile information. Thus, a device that obtains a signal to which profile information has been added can favorably process that signal with ease.

The integrated circuit according to claim 26 includes an image processing device according to any one of claims 13 to 25.

With the integrated circuit of this invention, it is possible to obtain the same effects as an image processing device according to any one of claims 13 to 25.

The display device according to claim 27 comprises an image processing device according to any one of claims 13 to 25, and display means that performs a display of the image signal that has been color processed by the image processing device.

With this display device of the invention, it is possible to obtain the same effects as an image processing device according to any one of claims 13 to 25.

The image-capturing device according to claim 28 comprises image-capturing means that performs image capture of an image, and an image processing device according to any one of claims 13 to 25 that performs color processing of an image captured by the image-capturing means as the image signal.

With this image-capturing device of the invention, it is possible to obtain the same effects as an image processing device according to any one of claims 13 to 25.

The portable information terminal according to claim 29 comprises data reception means that receives image data that have been transmitted or broadcast, an image processing device according to any one of claims 13 to 25 that performs color processing of the image data that are received as the image signal, and display means that performs a display of the image signal that has been color processed by the image processing device.

With this portable information terminal of the invention, it is possible to obtain the same effects as an image processing device according to any one of claims 13 to 25.

The portable information terminal according to claim 30 comprises image-capturing means that captures an image, an image processing device according to any one of claims 13 to 25 that performs color processing of an image that has been captured by the image-capturing means as the image signal, and data transmission means that transmits the image signal that has been color processed.

With this portable information terminal of the invention, it is possible to obtain the same effects as an image processing device according to any one of claims 13 to 25.

The semiconductor device according to claim 31 is a semiconductor device that performs color processing of an image signal, and comprises a color transformation lookup table creation portion and a color processing execution portion. The color transformation lookup table creation portion is for creating a new color transformation lookup table that achieves a predetermined color processing to a predetermined degree, based on a plurality of base color transformation lookup tables, each of which achieves the predetermined color processing to a different degree of processing. The color processing execution portion executes color processing of the image signal based on the new color transformation lookup table that has been created.

With this semiconductor device of the invention, it is possible to achieve color processing to any degree based on a small number of base color transformation lookup tables. Other than this small number of base color transformation lookup tables, it is not necessary to prepare other color transformation lookup tables having different degrees of processing, allowing the storage capacity of the memory etc. for storing the color transformation lookup tables to be reduced.

The semiconductor device according to claim 32 is a semiconductor device that performs color processing of an image signal that has been received as input, and comprises a profile creation portion and an image processing execution portion. The profile creation portion creates a profile to be used for color processing, based on a plurality of profiles for performing different color processing. The image processing execution portion performs color processing using the profile that is created by the profile creation portion.

Here, color processing is for example display color transformation, color region transformation, or memory color correction.

The profile is coefficient matrix data for performing a computation with respect to the image signal, or table data storing values of the image signal after color processing associated with the values of the image signal.

The semiconductor device of the invention creates a new profile based on a plurality of profiles. Thus, it is still possible to perform a large number of different color processing operations even if only a small number of profiles are readied in advance. That is, it is possible to reduce the storage capacity of the memory etc. for storing the profiles.

The semiconductor device according to claim 33 is a semiconductor device that performs color processing of an image signal that has been received as input, and comprises a profile information output portion and an image processing execution portion. The profile information output portion outputs profile information for specifying a profile to be used in color processing. The image processing execution portion performs color processing using the profile specified based on the information output from the profile information output portion.

Here, the profile information is for example data stored by the profile, tag information such as a number that specifies the profile, parameter information that indicates the features of the processing of the profile, or other information for specifying a profile.

With this semiconductor device of the invention, it is possible to control the profiles and perform color processing based on the profile information.

The semiconductor device according to claim 34 comprises an image processing execution portion, a profile information output portion, and a profile information adding portion. The image processing execution portion performs color processing of an image signal that has been received as input. The profile information output portion outputs profile information for specifying a profile with which the image signal that is received as input is favorably color processed. The profile information adding portion adds the profile information to the image signal or to the image signal that has been color processed by the image processing execution portion, and outputs the result.

With the semiconductor device of this invention, it is possible to execute processing associating the image signal or the image signal after color processing by the image processing execution portion with the profile information. Thus, a device that obtains a signal to which profile information has been added can favorably process that signal with ease.

With the present invention, it is possible to provide an image processing device with which the storage capacity for storing lookup tables can be reduced while allowing the degree to which various color processing operations are performed to be freely adjusted.

### Brief Description of Drawings

Fig. 1 is a block diagram describing the basic structure of the image processing device 10 (first embodiment).
Fig. 2 is a block diagram describing the specific structure of the image processing device 10 (first embodiment).
Fig. 3 is a flowchart describing the color transformation profile creation method (first embodiment).
Fig. 4 is a block diagram describing the specific structure of the image processing device 26 (second embodiment).
Fig. 5 is a block diagram describing the specific structure of the image processing device 45 (third embodiment).
Fig. 6 is a block diagram describing the specific structure of the image processing device 60 (fourth embodiment).
Fig. 7 is a block diagram describing the specific structure of the image processing device 75 (fifth embodiment).
Fig. 8 is a block diagram describing the structure of the display device 720 (sixth embodiment).
Fig. 9 is a block diagram describing the structure of the image processing device for display 723 (sixth embodiment).
Fig. 10 is an explanatory diagram describing the relationship between the environment information and the profiles (sixth embodiment).
Fig. 11 is a graph describing the dynamic range compression function F4 (sixth embodiment).
Fig. 12 is a block diagram describing the structure of the image processing device for display 755 (sixth embodiment).
Fig. 13 is a block diagram describing the structure of the image processing device for display 759 (sixth embodiment).
Fig. 14 is an example of the format of the input signal d110 including content information (sixth embodiment).
Fig. 15 is the format of an input signal d110 that includes scene property information (sixth embodiment).
Fig. 16 is the format of an input signal d110 that includes image capture property information (sixth embodiment).
Fig. 17 is the format of an input signal d110 that includes broadcast property information (sixth embodiment).
Fig. 18 is the format of an input signal d110 that includes recording medium property information (sixth embodiment).
Fig. 19 is the format of an input signal d110 that includes profile property information (sixth embodiment).
Fig. 20 is a block diagram describing the structure of the image processing device for display 765 (sixth embodiment).
Fig. 21 is a block diagram describing the structure of the image-capturing device 820 (seventh embodiment).
Fig. 22 is a block diagram describing the structure of the image processing device for image capture 832 (seventh embodiment).
Fig. 23 is an explanatory diagram describing the relationship between the environment information and the profiles (seventh embodiment).
Fig. 24 is a block diagram describing the structure of the image processing device for image capture 875 (seventh embodiment).
Fig. 25 is a block diagram describing the structure of the image processing device for image capture 870 (seventh embodiment).
Fig. 26 is a block diagram describing the operation of the image processing device for image capture 870 (seventh embodiment).
Fig. 27 is a block diagram describing the structure of the image processing device for image capture 884 (seventh embodiment).
Fig. 28 is a block diagram describing the structure of the image processing device for image capture 890 (seventh embodiment).
Fig. 29 is the format of an output image signal d361 that includes recommended profile information d140 (seventh embodiment).
Fig. 30 is a block diagram describing the structure of the image processing device for image capture 896 (seventh embodiment).
Fig. 31 is a block diagram describing the structure of the image processing device for image capture 905 (seventh embodiment).
Fig. 32 is a block diagram describing the overall configuration of the content supply system (ninth embodiment).
Fig. 33 is an example of a portable telephone furnished with the image processing device of the present invention (ninth embodiment).
Fig. 34 is a block diagram describing the configuration of the portable telephone (ninth embodiment).
Fig. 35 is an example of the system for digital broadcast (ninth embodiment).

### Best Mode for Carrying Out the Invention

### [First Embodiment]

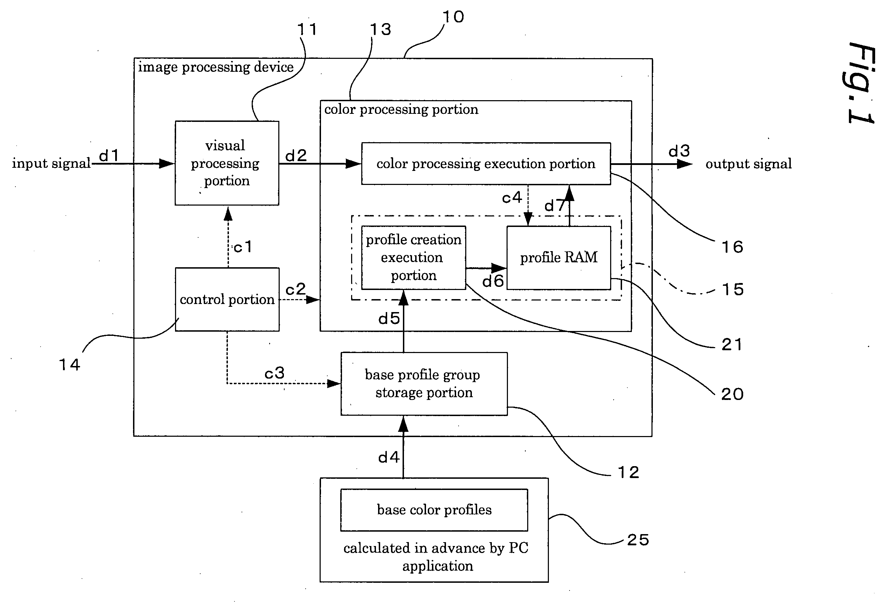

An image processing device 10 according to a first embodiment is described using FIGS. 1 to 3. The image processing device 10 is a device that performs visual processing of an image signal as well as color processing of an image signal. The image processing device 10 is provided in a device that handles images, such as a computer, a digital camera, a portable telephone, a PDA, a printer, a scanner, or a digital television.

### <Configuration>

The base configuration of the image processing device 10 is described using Fig. 1. The image processing device 10 is an image processing device that receives an input signal d1 as input and outputs an image-processed output signal d3. The image processing device 10 is provided with a visual processing portion 11 that receives the input signal d1 as input and outputs a visually-processed image signal d2, a base profile group storage portion 12 that stores base color transformation profiles, which serve as the base for color processing, and outputs selected profile data d5, which are the data of a base color transformation profile that has been selected, a color processing portion 13 that receives the image signal d2 and the selected profile data d5 as input and outputs a color-processed output signal d3, and a control portion 14 that gives control signals c1 to c3 to these portions.

The visual processing portion 11 receives a control signal c1 from the control portion 14, performs visual processing such as spatial processing or gradation processing of the input signal d1, and outputs the result as the image signal d2. The visual processing portion 11 performs spatial processing through a low-pass spatial filter that permits the passage of only the low frequency space of the input signal d1. As the low-pass spatial filter it is possible to use a FIR (Finite Impulse Response)-type low-pass spatial filter or an IIR (Infinite Impulse Response)-type low-pass spatial filter, which are commonly used. The visual processing portion 11 also performs gradation processing using a gamma curve, for example.

The base profile group storage portion 12 stores a plurality of base color transformation profiles for achieving any one of, or a combination of, color processing such as display color transformation, color region transformation, and memory color correction. Each base color transformation profile is stored as a lookup table that lists a mapping from one color space to another color space. More specifically, the lookup tables are stored as three-dimensional lookup tables that list image signal values after color processing (R1, G1, B1) with respect to three-dimensional image signal values (R0, G0, B0) of R (red), G (green), and B (blue). The base color transformation profiles stored in the base profile group storage portion 12 are calculated in advance by a personal computer (PC) 25 outside the image processing device. The base color transformation profiles that are calculated are stored in the base profile group storage portion 12 by transferring base profile data d4, which are the data of the base color transformation profile, from the PC 25.

It should be noted that the base profile group storage portion 12 is constituted by a ROM, a storage medium (e.g. RAM or hard disk) with which data can be overwritten and updated, or a storage medium (memory card, etc.) that can be removed from the image processing device 10. Base profile data d4 that have been created in advance are read from the PC 25 to the base profile group storage portion 12 of the image processing device 10. If data in the base profile group storage portion 12 can be overwritten/updated, then by connecting the base profile group storage portion 12 to an outside network it is possible to freely update the base color transformation profiles from an external member.

The color processing portion 13 includes a profile creation portion 15 that receives the selected profile data d5 as input and outputs profile data for processing d7, and a color processing execution portion 16 that receives the image signal d2 and the profile data for processing d7 as input and outputs an output signal d3. The profile creation portion 15 comprises a profile creation execution portion 20 that receives the selected profile data d5 as input and outputs created profile data d6 that are created based on the selected profile data, and a profile RAM 21 that stores the created profile data d6 as input and from the stored data outputs data to be used for color processing as profile data for processing d7.

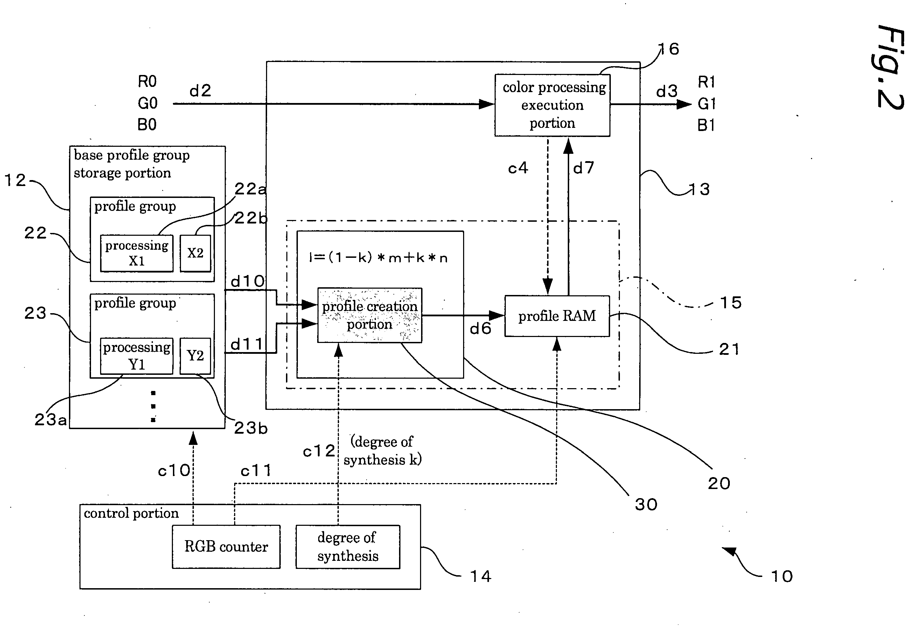

Next, the structures of the base profile group storage portion 12 and the color processing portion 13, which are characteristic portions of the present invention, are described in detail using Fig. 2.

### (Base Profile Group Storage Portion 12)

The base profile group storage portion 12 stores a plurality of profile groups each comprising a plurality of base color transformation profiles. With the image processing device 10 shown in Fig. 2, it stores two profile groups 22 and 23, each of which is composed of two base color transformation profiles. The profile group 22 is provided with two base color transformation profiles 22a and 22b for achieving a processing X1 and a processing X2, which differ in their degree of processing with regard to a processing X. The profile group 23 is provided with two base color transformation profiles 23a and 23b for achieving a processing Y1 and a processing Y2, which differ in their degree of processing with regard to a processing Y.

Here, the processing X and the processing Y are any one color processing of display color transformation, color region transformation, or memory color correction, or color processing that combines display color transformation, color region transformation, and memory color correction.

### <<Profile Groups>>

The profile groups are described. The profile groups are groups comprising base color transformation profiles, each of which achieves the same color processing but to different degrees of processing. Each profile group 22 and 23 has the function of achieving any one color processing of display color transformation, color region transformation, or memory color correction, or the function of achieving color processing that combines display color transformation, color region transformation, and memory color correction. For example, if the profile group 22 achieves memory color correction, then the base color transformation profiles 22a and 22b achieve different degrees of memory color correction. More specifically, each base color transformation profile has the same function but results in different degrees of processing, such as the base color transformation profile 22a transforming skin tone to a darker skin tone and the base color transformation profile 22b transforming skin tone to a lighter skin tone.

### <<Base Color Transformation Profiles>>

The base color transformation profiles are described here. The base color transformation profiles are three-dimensional lookup tables that list image signal values after color processing (R1, G1, B1) with respect to three-dimensional image signal values (R0, G0, B0), which are expressed with 8 bits. Here, if image signal values after image processing (R1, G1, B1), each of which is expressed with 8 bits, are listed for all of the image signal values prior to color processing (R0, G0, B0), then a large storage capacity of {(2^8)^3} * 3 = 48 Mbytes is required for the base profile group storage portion 12. Accordingly, image signal values after image processing (R1, G1, B1), each of which is expressed by 8 bits, are given for only the upper several bits of the image signal values prior to color processing (R0, G0, B0), each of which is expressed with 8 bits. More specifically, if image signal values after image processing (R1, G1, B1) are listed only for the upper five bits of the image signal values prior to color processing (R0, G0, B0), then the amount of memory required for a single base color transformation profile is reduced to {(2^5)^3} * 3 = 98,304 bytes.

Hereinafter, the base color transformation profiles shall list image signal values after image processing (R1, G1, B1) only for the upper five bits of the image signal values prior to color processing (R0, G0, B0)

### (Color Processing Portion 13)

The color processing portion 13 is further provided with a profile creation portion 30 in its profile creation execution portion 20. The profile creation portion 30 receives the selected profile data d5 (see Fig. 1) as input and outputs created profile data d6.

### <Action>

The action of these portions is described using Fig. 2.

### (Base Profile Group Storage Portion 12)

A count signal c10 from the control portion 14 is input to the base profile group storage portion 12. The count signal c10 specifies an address of the base profile group storage portion 12 at a fixed count period, allowing the image signal values stored in the specified address to be read out. Specifically, if creating a color transformation profile that achieves a processing X, the addresses of the base color transformation profiles 22a and 22b are specified, and if creating a color transformation profile that achieves a processing Y, the addresses of the base color transformation profiles 23a and 23b are specified. Specifying an address is performed by simultaneously reading out the data associated with the same image signal values (R0, G0, B0) in the two base color transformation profiles. The data read out in this manner are output from the base profile group storage portion 12 as first selected profile data d10 and second selected profile data d11. Since the base color transformation profiles 22a and 22b give image signal values after image processing (R1, G1, B1) only for the upper five bits of the image signal values prior to color processing (R0, G0, B0), (2^5)^3 addresses are specified for each and those data are read out.

The following is a description of a case in which color transformation profiles for achieving the processing X are created. It should be noted that the operations of the various portions are the same for a case where color transformation profiles for achieving the processing Y are created.

### (Color Processing Portion 13)

### <<Profile Creation Portion 30>>

The profile creation portion 30 obtains the first selected profile data d10 and the second selected profile data d11 from the base profile group storage portion 12. It is also given a control signal c12 that specifies the degree of synthesis of the base color transformation profiles 22a and 22b from the control portion 14.

The profile creation portion 30 uses the value [k] of the degree of synthesis specified by the control signal c12 to create created profile data d6 having a value [1] with respect to a value [m] of the first selected profile data d10 and a value [n] of the second selected profile data d11. Here, the value [1] is calculated by [1] = (1-k) * [m]+k * [n]. It should be noted that if the value [k] is 0≤k≤1, then the first selected profile data d10 and the second selected profile data d11 are interpolated, and if the value [k] is k<0 or k>1, then the first selected profile data d10 and the second selected profile data d11 are extrapolated.

### <<Profile RAM 21>>

The profile RAM 21 obtains the created profile data d6 that are created by the profile creation portion 30 and stores them to the addresses specified by the count signal c11 of the control portion 14. Here, the created profile data d6 are associated with the same image signal values (R0, G0, B0) as the first selected profile data d10 or the second selected profile data d11 used to create the created profile data d6.

As a consequence, a new color transformation profile for realizing a processing Xk is created based on the base color transformation profile for realizing the processing X1 and the base color transformation profile for realizing the processing X2.

### <<Color Processing Execution Portion 16>>

The color processing execution portion 16 obtains the profile data for processing d7, which are the data of the color transformation profile stored in the profile RAM 21, by specifying the corresponding addresses with the count signal c4 in correspondence with the image signal values (R0, G0, B0) of the image signal d2, and with these executes color processing of the image signal d2. Specifically, it reads out the profile data for processing d7 associated with the values of the upper 5 bits of the image signal values (R0, G0, B0), for the image signal values (R0, G0, B0) of the image signal d2, each of which is expressed with 8 bits. Further, the values of the lower 3 bits of the image signal values (R0, G0, B0) are used to three-dimensionally interpolate the profile data for processing d7 that are read out, obtaining an output signal d3.

### <Method>

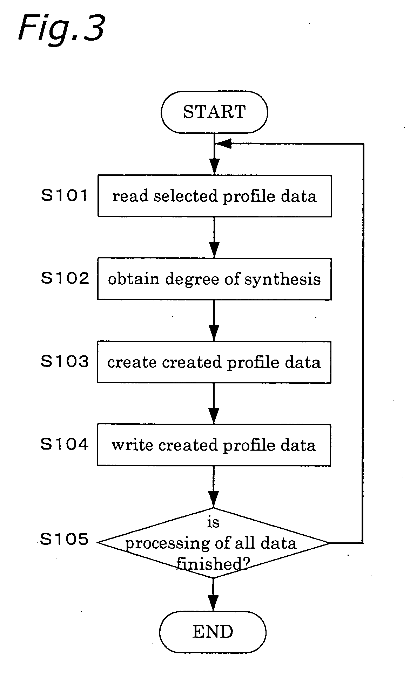

The color transformation profile creation method that is executed by the image processing device 10 is described below using Fig. 3.

Addresses of the base profile group storage portion 12 are specified at a fixed count period by the count signal c10 of the control portion 14, and the base profile group storage portion 12 outputs the image signal values stored in the specified addresses (step S101). Specifically, in the case of creating a color transformation profile for achieving the processing X, the addresses of the base color transformation profiles 22a and 22b are specified, and in the case of creating a color transformation profile for achieving the processing Y, the addresses of the base color transformation profiles 23a and 23b are specified. The two base color transformation profiles that are specified are read to the profile creation portion 30 as first selected profile data d10 and second selected profile data d11, respectively.

The profile creation portion 30 obtains the control signal c12, which specifies the degree of synthesis, from the control portion 14 (step S102).

The profile creation portion 30 uses the value [k] of the degree of synthesis specified by the control signal c12 to create created profile data d6 having a value [1] with respect to a value [m] of the first selected profile data d10 and a value [n] of the second selected profile data d11 (step S103). Here, the value [1] is calculated by [1] = (1-k) * [m]+k * [n].

The created profile data d6 are written to the profile RAM 21 (step S104). Here, the addresses to which the created profile data d6 are written are specified by the count signal c11 of the control portion 14 that is given to the profile RAM 21.

The control portion 14 determines whether all of the data of the base color transformation profiles 22a and 22b have been processed (step S105), and the processing of step S101 to step S105 is repeated until all data have been processed.

After the new color transformation profile is stored in the profile RAM 21, the color processing execution portion 16 executes color processing of the image signal d2 based on the created profile data d6.

### <Effects>

(1)
   In the image processing device 10, simply by providing the base profile group storage portion 12 with a small number of base color transformation profiles 22a, 22b, 23a, and 23b, it is possible to achieve color processing to any degree. Specifically, to achieve color processing to any degree with regard to the processing X, it is only necessary to provide the base color transformation profile 22a for achieving the processing X1 and the base color transformation profile 22b for achieving the processing X2. Thus, it is not necessary to prepare color transformation profiles having different degrees of processing other than this small number of base color transformation profiles, and this allows the storage capacity of the base profile group storage portion 12 to be reduced.
(2)
   The profile creation execution portion 20 uses the degree of synthesis of the base color transformation profiles 22a and 22b, or the base color transformation profiles 23a and 23b, to interpolate or extrapolate the corresponding elements in the base color transformation profiles, deriving the values of the elements of a new color transformation profile. Thus, by freely changing the degree of synthesis of the base color transformation profiles it is possible to create a new color transformation profile that achieves a desired degree of processing.
(3)
   If in the image processing device 10 the base color transformation profiles achieve a combination of a plurality of color processing operations, then it is possible to shorten the required time compared to sequentially executing the plurality of color processing operations. Also, at least some of the color processing operations of the plurality of color processing operations can be executed at a desired degree of processing.

### <Modified Examples>

(1)
   In the above embodiment it was described that the profile groups 22 and 23 each are provided with two types of base color transformation profiles. Here, the number of base color transformation profiles that the profile groups 22 and 23 are provided with is not limited to this. For example, for the color processing that is achieved by the profile groups, the profile groups can also be provided with three types of base color transformation profiles, these being a base color transformation profile that achieves a default degree of color processing, a base color transformation profile that achieves a degree of color processing that is higher than the default, and a base color transformation profile that achieves a degree of color processing that is lower than the default.
   In this case, a degree of synthesis of the base color transformation profile that achieves a degree of color processing that is higher than the default and the base color transformation profile that achieves a degree of color processing that is lower than the default is supplied from the control portion 14. Further, the count signal c10, based on the degree of synthesis, specifies the addresses of the default base color transformation profile along with those of the base color transformation profiles to be read out. That is, the base color transformation profile that achieves the default degree of color processing is always read out to the profile creation portion 30.
   It should be noted that if three types of base color transformation profiles are provided, then it is also possible for the count signal c10 to specify addresses such that all three types of the base color transformation profiles are read out. In this case, the control portion 14 can specify the degree of synthesis of the base color transformation profile that achieves a degree of color processing that is higher than the default, the base color transformation profile that achieves a default degree of color processing, and the base color transformation profile that achieves a degree of color processing that is lower than the default as [k1] vs. [k2] vs. [1-k1-k2].
   In this case, if [o] is the value obtained by reading out the base color transformation profile that achieves a degree of color processing that is higher than the default, [p] is the value obtained by reading out the base color transformation profile that achieves a default degree of color processing, and [q] is the value obtained by reading out the base color transformation profile that achieves a degree of color processing that is lower than the default, then the value [1] of the created profile data d6 is calculated as [1] = [k1]*[0] + [k2]*[p] + [1-k1-k2]*[q].
   In the above case, the image processing device 10 is capable of performing color processing using the base color transformation profile that achieves a default degree of color processing, and if necessary, is also capable of performing color processing achieved by customizing the base color transformation profile for realizing the default degree of color processing.
(2)
   The image processing device 10 was described as being provided with the visual processing portion 11. Here, it is also possible for the image processing device 10 to not be provided with the visual processing portion 11. In this case, the input signal d1 is input directly to the color processing portion 13.
(3)
   The processing by the color processing execution portion 16 is not limited to that described in this embodiment. For example, it is also possible to obtain the output signal d3 through a method of interpolating the volume of profile data for processing d7 with respect to the image signal values (R0, G0, B0) of the image signal d2.
(4)
   In the foregoing embodiment, it was described that the corresponding addresses are specified by the count signal c4 according to the image signal values (R0, G0, B0) of the image signal d2. Here, it is not necessary for the count signal c4 to be given from the color processing execution portion 16. For example, it is also possible for the control portion 14 to specify addresses of the profile RAM 21 in accordance with the image signal values (R0, G0, B0) of the image signal d2.

### [Second Embodiment]

An image processing device 26 according to the second embodiment is described. The image processing device 26 is a device that performs visual processing of an image signal as well as color processing of an image signal. The image processing device 26 is provided in a device that handles images, such as a computer, a digital camera, a portable telephone, a PDA, a printer, a scanner, or a digital television.

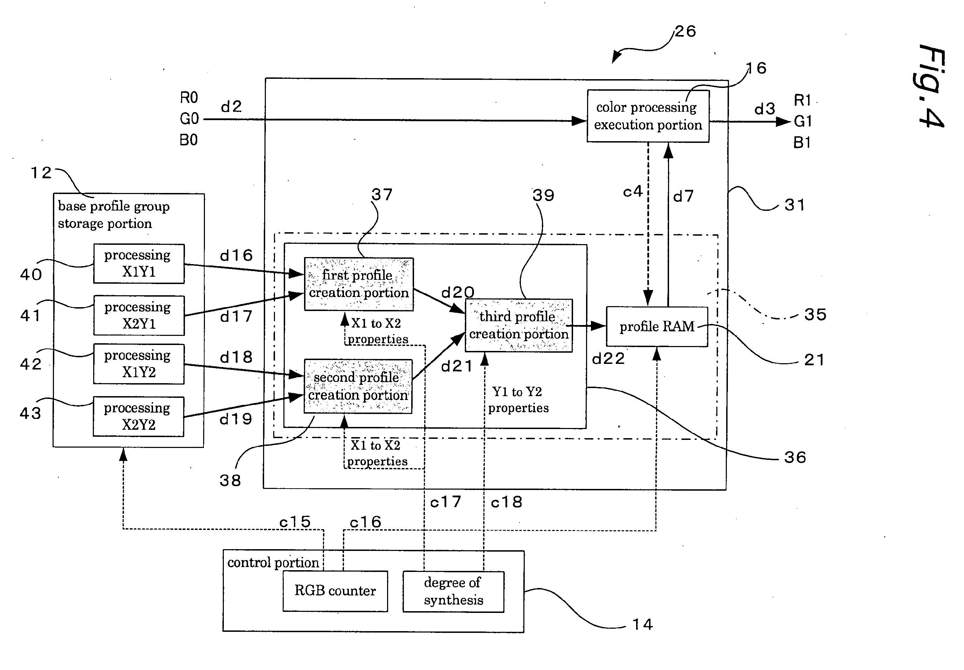

Fig. 4 is a block diagram describing the characteristic portions of the image processing device 26. The image processing device 26 has the characteristic that the color processing by the color processing portion 31 is achieved by executing a plurality of color processing operations in a superimposed manner, and in that it is possible to adjust the degree of processing for each of these color processing operations.

The following is a description of the color processing portion 31 and the base color transformation profiles provided in a base profile group storage portion 12, which are characteristic aspects of the image processing device 26. It should be noted that portions that achieve the same functions as those already described in the first embodiment have been assigned the same reference numerals as in the first embodiment and will be not be described here.

### <Configuration>

### <Base Profile Group Storage Portion 12>

The base profile group storage portion 12 stores a plurality of base color transformation profiles. The base profile group storage portion 12 shown in Fig. 4 stores the base color transformation profiles 40 to 43. The base color transformation profiles are color transformation profiles for simultaneously achieving a processing X and a processing Y. More specifically, the base color transformation profiles are four types of color transformation profiles each achieving a combination of a processing X1 and a processing X2, which differ in their degree of processing with regard to a processing X, and a processing Y1 and a processing Y2, which differ in their degree of processing with regard to a processing Y.

Here, the processing X and the processing Y each are for example any one color processing of display color transformation, color region transformation, and memory color correction.

### (Color Processing Portion 31)

The color processing portion 31 differs from the color processing portion 13 described using Fig. 2 in the structure of its profile creation portion 35. More specifically, the profile creation portion 35 differs from the profile creation portion 15 described using Fig. 2 in that the profile creation execution portion 36 that it is provided with has three profile creation portions 37 to 39.

The first profile creation portion 37 receives first selected profile data d16 and second selected profile data d17 as input and outputs first created profile data d20. The first selected profile data d16 are data of the base color transformation profile 40, which achieves the processing X1 and the processing Y1. The second selected profile data d17 are data of the base color transformation profile 41, which achieves the processing X2 and the processing Y1.

The second profile creation portion 38 receives third selected profile data d18 and fourth selected profile data d19 as input and outputs second created profile data d21. The third selected profile data d18 are data of the base color transformation profile 42, which achieves the processing X2 and the processing Y2. The fourth selected profile data d19 are data of the base color transformation profile 43, which achieves the processing X2 and the processing Y2.

The third profile creation portion 39 receives the first created profile data d20 and the second created profile data d21 as input and outputs third created profile data d22.

### <Action>

### (Base Profile Group Storage Portion 12)

A count signal c15 from the control portion 14 is input to the base profile group storage portion 12. The count signal c15 specifies addresses of the base profile group storage portion 12 at a fixed count period, allowing the image signal values stored in the specified addresses to be read out. Specifically, data associated with the same image signal values (R0, G0, B0) in the base color transformation profiles 40 to 43 are read out simultaneously.

### (Color Processing Portion 31)

### <<Profile Creation Execution Portion 36>>

The first profile creation portion 37 uses the degree of synthesis specified by the control signal c17 to create first created profile data d20 from the first selected profile data d16 and the second selected profile data d17. The pertinent details are identical to those of the profile creation portion 30 described in the first embodiment.

As a consequence, a color transformation profile that achieves a processing Xi and the processing Y1 is created. Here, [i] is the value of the degree of synthesis specified by the control signal c17.

The second profile creation portion 38 uses the degree of synthesis specified by the control signal c17 to create second created profile data d21 from the third selected profile data d18 and the fourth selected profile data d19.

As a consequence, a color transformation profile that achieves a processing Xi and the processing Y2 is created. Here, [i] is the value of the degree of synthesis specified by the control signal c17, and is the same value as that given to the first profile creation portion 37.

The third profile creation portion 39 uses the degree of synthesis specified by a control signal c18 to create third created profile data d22 from the first created profile data d20 and the second created profile data d21. The pertinent details are identical to those of the profile creation portion 30 described in the first embodiment.

As a consequence, a color transformation profile that achieves a processing Xi and a processing Yj is created. Here, [j] is the value of the degree of synthesis specified by the control signal c18.

### <<Profile RAM 21>>

The profile RAM 21 obtains the third created profile data d22 created by the third profile creation portion 39 and stores these in the addresses specified by the count signal c16 of the control portion 14. Here, the third created profile data d22 are associated with the same image signal values (R0, G0, B0 as the first selected profile data d16 through the fourth selected profile data d19 that were used to create the third created profile data d22.

As a result, a new color transformation profile that achieves a desired degree of processing for the processing X and the processing Y is created.

### <Effect>

The second embodiment obtains the following effects in addition to the effects described in the first embodiment.
(1)
   With the image processing device 26, it is possible to execute a color processing X and a color processing Y in a superimposing manner and to freely adjust the degree of processing of each of the color processing operations. Thus, high precision color processing can be achieved using a limited number of base color transformation profiles.

### <Modified Examples>

(1) It is not necessary for the base profile group storage portion 12 to be provided with only four types of base color transformation profiles. That is, the base profile group storage portion 12 can also be provided with additional base color transformation profiles.
(2) The above embodiment was described regarding a case in which a color processing X and a color processing Y are executed in a superimposed manner. Here, the effects of the invention are not limited to a case in which a color processing X and a color processing Y are executed in a superimposed manner. That is, by providing base color transformation profiles such that a greater number of color processing operations can be performed in a superimposed manner, giving the profile creation execution portion 36 a greater number of profile creation portions, and the control portion 14 specifying the degrees of synthesis of these color processing operations to the various profile creation portions, it is possible to create new color transformation profiles that achieve a desired degree of processing for an even greater number of color processing operations.

### [Third Embodiment]

An image processing device 45 according to a third embodiment is described. The image processing device 45 is a device that performs visual processing of an image signal as well as color processing of an image signal. The image processing device 45 is provided in a device that handles images, such as a computer, a digital camera, a portable telephone, a PDA, a printer, a scanner, or a digital television.

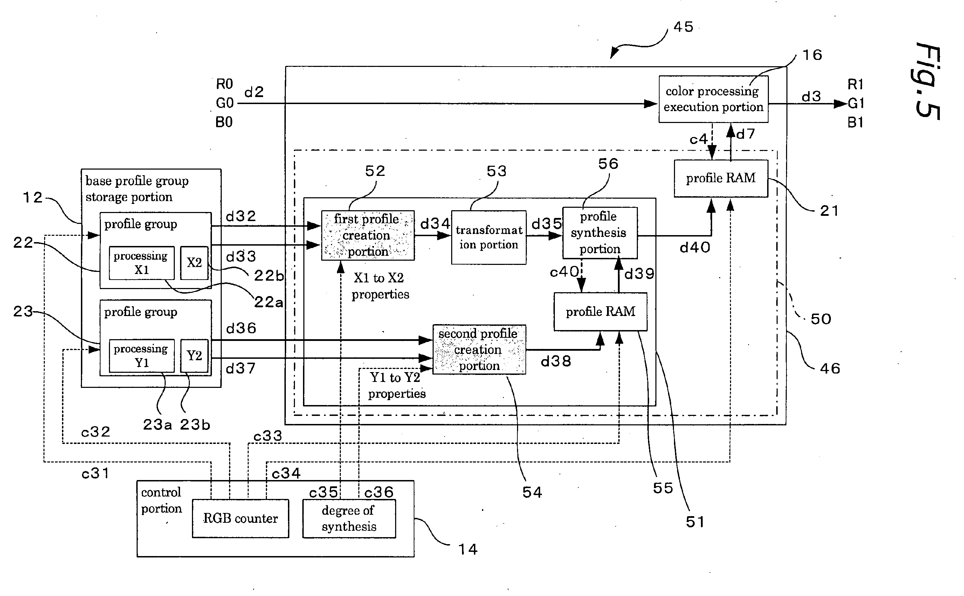

Fig. 5 is a block diagram describing the characteristic aspects of the image processing device 45. The image processing device 45, like the image processing device 26 according to the second embodiment, has the characteristic that the color processing of the color processing portion 46 is achieved by executing a plurality of color processing operations in a superimposed manner, and that it is possible to adjust the degree of processing for each of these color processing operations.

Additionally, the image processing device 45 is characterized in that it creates new color transformation profiles by synthesizing a plurality of color transformation profiles that have been created from base color transformation profiles.

The following is a description of the color processing portion 46 and the base color transformation profiles provided in the base profile group storage portion 12, which are characteristic portions of the image processing device 45. It should be noted that portions that achieve the same functions as those already described in the first embodiment have been assigned the same reference numerals as in the first embodiment and will be not be described here.

### <Configuration>

### <Base Profile Group Storage Portion 12>

The base profile group storage portion 12, like the base profile group storage portion 12 shown in Fig. 2, stores two profile groups 22 and 23, each composed of two base color transformation profiles. The profile group 22 is provided with two base color transformation profiles 22a and 22b for achieving a processing X1 and a processing X2, which differ in their degree of processing with regard to a processing X. The profile group 23 is provided with two base color transformation profiles 23a and 23b for achieving a processing Y1 and a processing Y2, which differ in their degree of processing with regard to a processing Y.

Here, the processing X and the processing Y are any one color processing of display color transformation, color region transformation, or memory color correction, or color processing that combines display color transformation, color region transformation, and memory color correction. The profile groups and the base color transformation profiles are the same as those described in the first embodiment.

### (Color Processing Portion 46)

The color processing portion 46 differs from the color processing portion 13 that was described using Fig. 2 in the structure of its profile creation portion 50. More specifically, it differs in the structure of the profile creation execution portion 51 provided in the profile creation portion 50.

The profile creation execution portion 51 has a first profile creation portion 52, a transformation portion 53, a second profile creation portion 54, a profile RAM 55, and a profile synthesis portion 56.

The first profile creation portion 52 receives first selected profile data d32 and second selected profile data d33 as input and outputs first created profile data d34. The first selected profile data d32 are data of the base color transformation profile 22a for achieving the processing X1. The second selected profile data d33 are data of the base color transformation profile 22b for achieving the processing X2.

The transformation portion 53 receives the first created profile data d34 as input, and outputs transformed profile data d35 that it obtains by performing a transformation such as gamma correction on the first created profile data d34.

The second profile creation portion 54 receives third selected profile data d36 and fourth selected profile data d37 as input and outputs second created profile data d38. The third selected profile data d36 are data of the base color transformation profile 23a for achieving the processing Y1. The fourth selected profile data d37 are data of the base color transformation profile 23b for achieving the processing Y2.

The profile RAM 55 inputs the second created profile data d38 and outputs profile data for synthesis d39.

The profile synthesis portion 56 receives the transformed profile data d35 and the profile data for synthesis d39 as input and outputs third created profile data d40.

### <Action>

### (Base Profile Group Storage Portion 12)

Count signals c31 and c32 are input from the control portion 14 to the base profile group storage portion 12. The count signals c31 and c32 specify addresses of the base profile group storage portion 12 at a fixed count period, allowing the image signal values stored in the specified addresses to be read out. Specifically, as a consequence of the count signal c31, the data associated with the same image signal values (R0, G0, B0) in the base color transformation profiles 22a and 22b are read out simultaneously. Also, as a consequence of the count signal c32, the data associated with the same image signal values (R0, G0, B0) in the base color transformation profiles 23a and 23b are read out simultaneously.

### (Color Processing Portion 46)

### <<Profile Creation Execution Portion 51>>

The first profile creation portion 52 uses the degree of synthesis specified by the control signal c35 to create the first created profile data d34 from the first selected profile data d32 and the second selected profile data d33. The pertinent details are identical to those of the profile creation portion 30 described in the first embodiment.

As a consequence, a color transformation profile that achieves a processing Xi is created. Here, [i] is the value of the degree of synthesis specified by the control signal c35.

The transformation portion 53 performs a transformation such as gamma correction on the first created profile data d34 and outputs the result as transformed profile data d35.

The second profile creation portion 54, in a similar fashion to the first profile creation portion 52, uses the degree of synthesis specified by a control signal c36 to create second created profile data d38 from the third selected profile data d36 and the fourth selected profile data d37.

Thus, a color transformation profile that achieves a processing Yj is created. Here, [j] is the value of the degree of synthesis specified by the control signal c36.

The profile RAM 55 obtains the second created profile data d38 that are created by the second profile creation portion 54, and stores them to the addresses specified by the count signal c33 of the control portion 14. Here, the second created profile data d38 are associated with the same image signal values (R0, G0, B0) as the third selected profile data d36 and the fourth selected profile data d37 used to create the second created profile data d38.

Thus, the color transformation profile for achieving the processing Yj is stored in the profile RAM 55.

The profile synthesis portion 56 calculates the third created profile data d40 based on the values of the transformed profile data d35. Specifically, the values of the color transformation profile stored in the profile RAM 55 associated with the values of the transformed profile data d35 are output as the third created profile data d40. That is, the profile synthesis portion 56 executes the same operation as the color processing execution portion 16 with respect to the values of the transformed profile data d35. More specifically, the profile synthesis portion 56 uses the count signal c40 to specify addresses in the profile RAM 55 in accordance with the values of the transformed profile data d35. The data stored at the specified addresses are then output as the profile data for synthesis d39. The profile data for synthesis d39 that are output are interpolated in correspondence with the values of the transformed profile data d35, and the result is output as the created profile data d40.

The outcome of the above is that a new color transformation profile for achieving any degree of synthesis for the processing X and the processing Y is created.

### <<Profile RAM 21>>

The profile RAM 21 obtains the third created profile data d40 and stores the data in the addresses specified by the count signal c34 of the control portion 14. Here, the third created profile data d40 are associated with the same image signal values (R0, G0, B0 as the first selected profile data d32 and the second selected profile data d33 used to create the third created profile data d40.

In this way, a new color transformation profile for achieving any degree of synthesis with regard to the processing X and the processing Y is stored in the profile RAM 21.

### <Effects>

The third embodiment obtains the following effects in addition to the effects described in the first embodiment and the second embodiment.
(1)
   In the image processing device 45, even if the profile group 22 or 23 is further provided with base color transformation profiles, the amount that-the storage capacity must be increased in the base profile group storage portion 12 is identical to the amount of data of the base color transformation profile that has been added. That is, in a case where the profile groups 22 and 23 each are provided with three base color transformation profiles that achieve different degrees of processing, then it is sufficient for there to be enough storage capacity for six base color transformation profiles in the image processing device 45.
   On the other hand, in the case of the image processing device 26 shown in the second embodiment, a storage capacity of 3*3=9 base color transformation profiles is necessary.
   In this regard, the image processing device 45 can be said to achieve the effect of reducing the storage capacity.
(2)
   In the image processing device 45, only for the color processing execution portion 16 it is necessary to process the image signal d2 in real-time. For this reason, it is possible to achieve color processing that has better real-time properties than if the image signal d2 were sequentially color processed a plurality of times.

### <Modified Examples>

(1)
   It is not necessary for the profile RAM 55 and the profile RAM 21 to be physically separate from one another. That is, the two can be different regions on the same RAM.
(2)
   It is not absolutely necessary to provide the transformation portion 53. It is also possible for the transformation portion 53 to be a processing operations that has been incorporated into the base color transformation profiles in advance.
(3)
   This embodiment describes a case in which the base profile group storage portion 12 is provided with two profile groups 22 and 23. Here, the invention can be expanded to include implementations having a greater number of profile groups. For example, it can be appreciated that the invention can be expanded to include a case of three profile groups by providing an additional third profile creation portion and the same structure as the profile creation execution portion 51.
   Thus, it is possible to achieve color processing that combines an even greater variety of color processing operations.

### [Fourth Embodiment]

An image processing device 60 according to a fourth embodiment is described. The image processing device 60 is a device that performs visual processing of an image signal as well as color processing of an image signal. The image processing device 60 is provided in a device that handles images, such as a computer, a digital camera, a portable telephone, a PDA, a printer, a scanner, or a digital television.

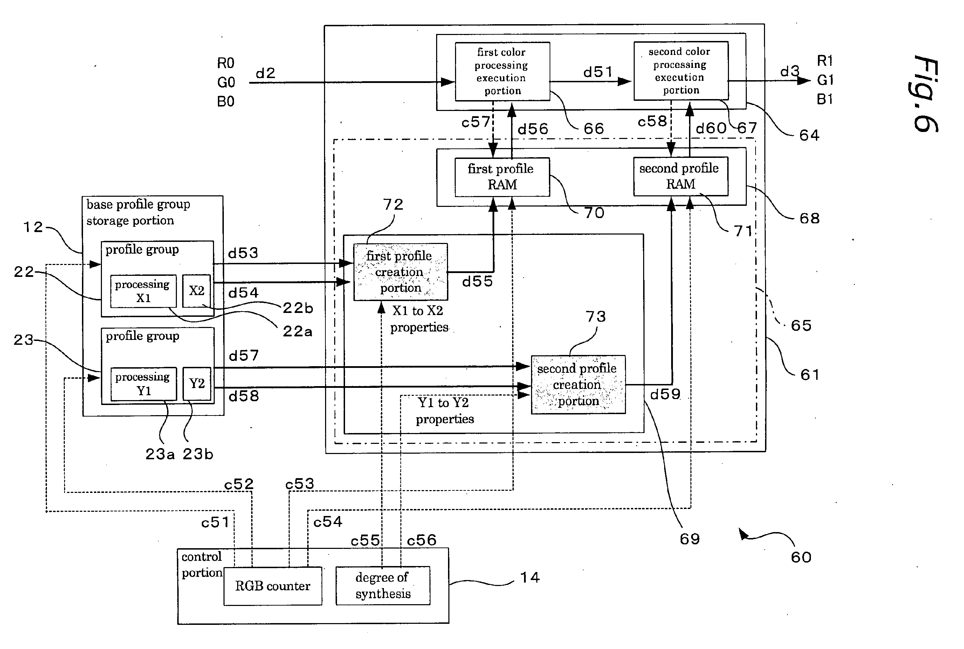

Fig. 6 is a block diagram describing the characteristic aspects of the image processing device 60. The image processing device 60, like the image processing device 26 according to the second embodiment, has the characteristic that the color processing of the color processing portion 61 is achieved by executing a plurality of color processing operations in a superimposed manner, and in that the degree of processing for each of these color processing operations can be adjusted.

Additionally, the image processing device 60 is characterized in that it is provided with two lines of the color processing portion 10 shown in Fig. 2, allowing a plurality of color processing operations to be executed in series.

The following is a description of the color processing portion 61 and the base color transformation profiles provided in a base profile group storage portion 12, which are the characteristic portions of the image processing device 60. It should be noted that portions that achieve the same functions as those already described in the first embodiment have been assigned the same reference numerals as in the first embodiment and will be not be described here.

### <Configuration>

### (Base Profile Group Storage Portion 12)

The base profile group storage portion 12, like the base profile group storage portion 12 shown in Fig. 2, stores two profile groups 22 and 23, each composed of two base color transformation profiles. The profile group 22 is provided with two base color transformation profiles 22a and 22b for achieving a processing X1 and a processing X2, which differ in their degree of processing with regard to a processing X. The profile group 23 is provided with two base color transformation profiles 23a and 23b for achieving a processing Y1 and a processing Y2, which differ in their degree of processing with regard to a processing Y.

Here, the processing X and the processing Y are any one color processing of display color transformation, color region transformation, or memory color correction, or color processing that combines display color transformation, color region transformation, and memory color correction. The profile groups and the base color transformation profiles are the same as those described in the first embodiment.

### (Color Processing Portion 61)

The color processing portion 61 is provided with two lines of the color processing portion 13 described using Fig. 2. More specifically, the color processing portion 61 has a color processing execution portion 64 and a profile creation portion 65. The color processing execution portion 64 has a first color processing execution portion 66 and a second color processing execution portion 67. The profile creation portion 65 has a profile RAM 68 and a profile creation execution portion 69. The profile RAM 68 has a first profile RAM 70 and the second profile RAM 71. The profile creation execution portion 69 has a first profile creation portion 72 and a second profile creation portion 73.

The first profile creation portion 72 receives first selected profile data d53 and second selected profile data d54 as input and outputs first created profile data d55. The first selected profile data d53 are the data of the base color transformation profile 22a that achieves a processing X1. The second selected profile data d54 are the data of the base color transformation profile 22b that achieves a processing X2.

The first profile RAM 70 receives the first created profile data d55 as input and outputs first profile data for processing d56.

The first color processing execution portion 66 receives the image signal d2 and the first profile data for processing d56 and outputs an image processed signal d51 that has been color processed.

The second profile creation portion 73 receives third selected profile data d57 and fourth selected profile data d58 as input and outputs second created profile data d59. The third selected profile data d57 are the data of the base color transformation profile 23a for achieving a processing Y1. The fourth selected profile data d58 are the data of the base color transformation profile 23b for achieving a processing Y2.

The second profile RAM 71 receives the second created profile data d59 as input and outputs second profile data for processing d60.

The second color processing execution portion 67 receives the image processed signal d51 and the second profile data for processing d60 as input and outputs an output signal d3 that has been color processed.

### <Action>

### (Base Profile Group Storage Portion 12)

Count signals c51 and c52 are input from the control portion 14 to the base profile group storage portion 12. The count signals c51 and c52 specify addresses in the base profile group storage portion 12 at a fixed count period, allowing the image signal values stored in the specified addresses to be read out. Specifically, due to the count signal c51, the data associated with the same image signal values (R0, G0, B0) in the base color transformation profiles 22a and 22b are read out simultaneously. Also, due to the count signal c52, the data associated with the same image signal values (R0, G0, B0) in the base color transformation profiles 23a and 23b are read out simultaneously.

### (Color Processing Portion 61)

### <<First Profile Creation Portion 72>>

The first profile creation portion 72 uses the degree of synthesis specified by the control signal c55 to create the first created profile data d55 from the first selected profile data d53 and the second selected profile data d54. The pertinent details are identical to those of the profile creation portion 30 described in the first embodiment.

As a result, a color transformation profile that achieves a processing Xi is created. Here, [i] is the value of the degree of synthesis specified by the control signal c55.

### <<First Profile RAM 70>>

The first profile RAM 70 obtains the first created profile data d55 and stores them in addresses specified by the count signal c53 of the control portion 14. Here, the first created profile data d55 are associated with the same image signal values (R0, G0, B0) as the first selected profile data d53 and the second selected profile data d54 used to create the first created profile data d55.

In this way, a new color transformation profile for achieving any degree of synthesis with regard to the processing X is stored.

### <<First Color Processing Execution Portion 66>>

The first color transformation execution portion 66 obtains the first profile data for processing d56, which are the data of the color transformation profile stored in the first profile RAM 70, by specifying the corresponding addresses with the count signal c57 based on the image signal values (R0, G0, B0) of the image signal d2, and with these executes color processing of the image signal d2. Specifically, it reads out the first profile data for processing d56 corresponding to the values of the upper 5 bits of the image signal values (R0, G0, B0), for the image signal values (R0, G0, B0) of the image signal d2, each of which is expressed with 8 bits. Further, the values of the lower 3 bits of the image signal values (R0, G0, B0) are used to three-dimensionally interpolate the first profile data for processing d56 that have been read out, obtaining an image processed signal d51.

### <<Second Profile Creation Portion 73, Second Profile RAM 71, Second Color Processing Execution Portion 67>>

In the same manner as described with regard to the first profile creation portion 72, the first profile RAM 70, and the first color processing execution portion 66, a color transformation profile for executing a processing operation Yj (where [j] is the value of the degree of synthesis specified by the control signal c56) is created. Further, the second color processing execution portion 67 specifies the corresponding addresses with a count signal c58 based on the image signal values (R0', G0', B0') of the image processed signal d51, and as a result obtains the second profile data for processing d60, which are the data of the color transformation profile stored in the second profile RAM 71, and with these executes color processing of the image processed signal d51.

### <Effects>

The fourth embodiment obtains the following effects in addition to the effects described in the first embodiment and the second embodiment.
(1)
   In the image processing device 60, even if the profile group 22 or 23 is provided with further base color transformation profiles, the amount that the storage capacity must be increased in the base profile group storage portion 12 is equal to the amount of data of the base color transformation profile that has been added. That is, in a case where the profile groups 22 and 23 each are provided with three base color transformation profiles that achieve different degrees of processing, it is sufficient for there to be enough storage capacity for six base color transformation profiles in the image processing device 60.
   On the other hand, the case of the image processing device 26 described in the second embodiment requires a storage capacity for storing 3*3 = 9 base color transformation profiles.
   In this regard, the image processing device 60 can be said to accomplish the effect of reducing the storage capacity.

### <<Modified Examples>>

(1)
   The image processing device 60 was described as having a structure in which two lines of the color processing portions 13 described using Fig. 2 are arranged in series. This does not necessarily mean that twice the hardware is required, however. That is, it is possible to achieve the profile creation execution portion 69, the profile RAM 68, and the color processing execution portion 64 using the same hardware. In this case, the data in each of these portions are processed in a sequential fashion.
   Thus, although there is a drop in the real-time properties of thecolor processing, hardware costs are curtailed.
(2) This embodiment describes a case where the base profile group storage portion 12 is provided with two profile groups 22 and 23. Here, the invention can be expanded to include implementations having a greater number of profile groups. For example, it can be appreciated that if there are three profile groups, then the invention will have a structure of three lines of the color processing portion 13 described using Fig. 2 arranged in series.
   Thus, it is possible to achieve color processing that combines an even greater number of color processing operations.

### [Fifth Embodiment]

An image processing device 75 according to a fifth embodiment is described below. The image processing device 75 is a device that performs visual processing of an image signal as well as color processing of an image signal. The image processing device 75 is provided in a device that handles images, such as a computer, a digital camera, a portable telephone, a PDA, a printer, a scanner, or a digital television.

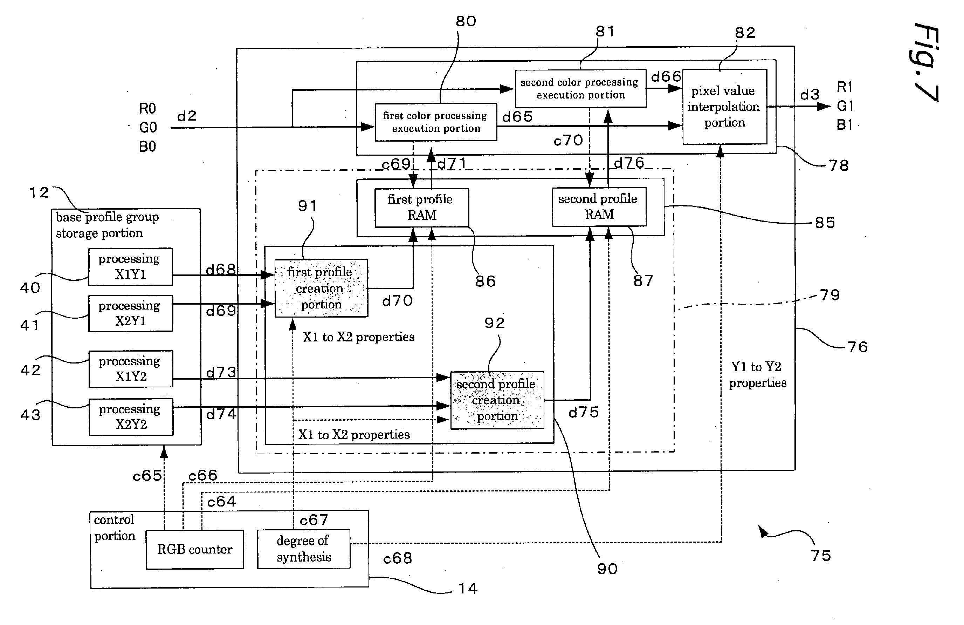

Fig. 7 is a block diagram describing the characteristic portions of the image processing device 75. The image processing device 75, like the image processing device 26 according to the second embodiment, has the characteristic that the color processing by the color processing portion 76 is achieved by executing a plurality of color processing operations in a superimposed manner, and that it is possible to adjust the degree of processing for each of these color processing operations.

In addition, the image processing device 75 has the characteristic that the color processing is performed in parallel in a color processing execution portion 78, which is in contrast to the color processing execution portion 64 shown in Fig. 6, and interpolates the image signal values obtained as the result of this processing.

The following is a description of the color processing portion 76 and the base color transformation profiles provided in a base profile group storage portion 12, which are characteristic portions of the image processing device 75. It should be noted that portions that achieve the same functions as those already described in the first embodiment have been assigned the same reference numerals as in the first embodiment and will be not be described here.

### <Configuration>

### (Base Profile Group Storage Portion 12)

The base profile group storage portion 12 shown in Fig. 7 stores the base color transformation profiles 40 to 43. The pertinent details are identical to those of the base profile group storage portion 12 shown in Fig. 4, and thus will not be described here.

### (Color Processing Portion 76)

The color processing portion 76 differs from the color processing portion 61 described using Fig. 6 in the structure of its color processing execution portion 78. The profile RAM 85 and the profile creation execution portion 90 have the same structures as the profile RAM 68 and the profile creation execution portion 69 described using Fig. 6, and thus will not be described in detail.

The profile RAM 85 and the profile creation execution portion 90 differ from the profile RAM 68 and the profile creation execution portion 69 described using Fig. 6 in the data that they handle.

Specifically, this difference lies in the following. The first difference is that the first through fourth selected profile data d68, d69, d73, and d74 are the data of the base color transformation profiles 40 to 43.

The second difference is that the first profile creation portion 91 and the second profile creation portion 92 create the first created profile data d70 for achieving a processing Xi and a processing Y1 and the second created profile data d75 for achieving the processing Xi and the processing Y2. That is, the control signal c67 specifies the same degree of synthesis to the first profile creation portion 91 and the second profile creation portion 92.

The third difference is that the first profile RAM 86 and the second profile RAM 87 store the first created profile data d70 and the second created profile data d75 and respectively output first profile data for processing d71 and second profile data for processing d76.

### <<Color Processing Execution Portion 78>>

The color processing execution portion 78 is provided with a first color processing execution portion 80, a second color processing execution portion 81, and a pixel value interpolation portion 82.

The first color processing execution portion 80 receives the image signal d2 and the first profile data for processing d71 as input and outputs a first image processed signal d65 that has been color processed. The second color processing execution portion 81 receives the image signal d2 and the second profile data for processing d76 as input and outputs a second image processed signal d66 that has been color processed. The pixel value interpolation portion 82 receives the first image processed signal d65 and the second image processed signal d66 as input and outputs an output signal d3.

### <Action>

The operation of the color processing execution portion 78, which is a characteristic portion of the image processing device 75, is described.

### (Color Processing Execution Portion 78)

The first color processing execution portion 80 obtains the first profile data for processing d71, which are the data of the color transformation profile stored in the first profile RAM 86, by specifying the corresponding addresses with the count signal c69 based on the image signal values (R0, G0, B0) of the image signal d2, and with these executes color processing of the image signal d2. The first color processing execution portion 80 performs the same operation as the color processing execution portion 16 shown in Fig. 2, and thus will not be described in detail.

As a consequence, a first image processed signal d65 that has been obtained by subjecting the image signal d2 to the processing operations Xi and Y1 is output.

The second color processing execution portion 81 obtains the second profile data for processing d76, which are the data of the color transformation profile stored in the second profile RAM 87, by specifying the corresponding addresses with the count signal c70 based on the image signal values (R0, G0, B0) of the image signal d2, and with these executes color processing of the image signal d2. The second color processing execution portion 81 performs the same operation as the color processing execution portion 16 shown in Fig. 2, and thus will not be described in detail.

Thus, a second image processed signal d66 that has been obtained by subjecting the image signal d2 to the processing operations Xi and Y2 is output.

The pixel value interpolation portion 82 interpolates the first image processed signal d65 and the second image processed signal d66 at the degree of synthesis that is specified by the control signal c68.

Thus, an output signal d3 that is obtained by subjecting the input signal d2 to the processing Xi and the processing Yj is output. Here, [j] is the value of the degree of synthesis specified by the control signal c68.

### <Effect>

The fifth embodiment obtains the following effects in addition to the effects described in the first embodiment and the second embodiment.
(1)
   The pixel value interpolation portion 82 interpolates the pixel values of the first image processed signal d65 and the pixel values of the second image processed signal d66 at the degree of synthesis that is specified by the control signal c68. Thus, calculating the output signal d3 becomes easier than in a case where the image signal is color processed through three-dimensional interpolation. That is, it is possible to use the control signal c68 to change in real time the degree of processing of the processing Y.
(2)
   The effects of the invention are not limited to this number of base color transformation profiles provided in the base profile group storage portion 12. That is, it is also possible to provide a greater number of base color transformation profiles than in the base profile group storage portion 12 shown in Fig. 7, allowing the invention to be expanded to accomplish color processing that combines a greater number of color processing operations in a superimposing manner.

### [Sixth Embodiment]

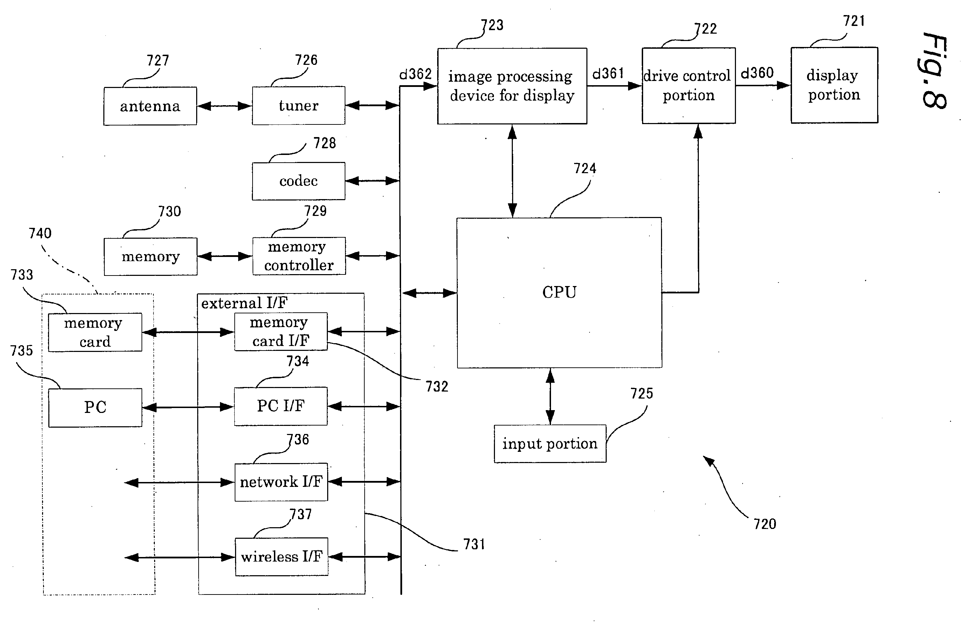

A display device 720 serving as a sixth embodiment of the present invention is described using Figs. 8 to 20.

The display device 720 shown in Fig. 8 is a display device for displaying images, such as a PDP, LCD, CRT, or projector. The display device 720 is characterized in that it includes an image processing device for display 723 that includes an image processing device described in an above embodiment, and in that the profiles used for image processing can be switched automatically or manually. It should be noted that the display device 720 can be an independent device as well as a device that is provided in a portable telephone or a portable information terminal such as a PDA or PC.

### <Display Device 720>

The display device 720 is provided with a display portion 721, a drive control portion 722, an image processing device for display 723, a CPU 724, an input portion 725, a tuner 726, an antenna 727, a codec 728, a memory controller 729, a memory 730, an external interface (I/F) 731, and an external device 740.

The display portion 721 is a display device that displays image information d360 that has been read out from the drive control portion 722. The drive control portion 722, due to control by the CPU 724, reads to the display device 721 an output image signal d361 that has been output from the image processing device for display 723, and also drives the display portion 721. More specifically, due to control by the CPU 724, the drive control portion 722 gives a voltage value that corresponds to the value of the output image signal d361 to the display device 721 and causes the display portion 721 to display the image.

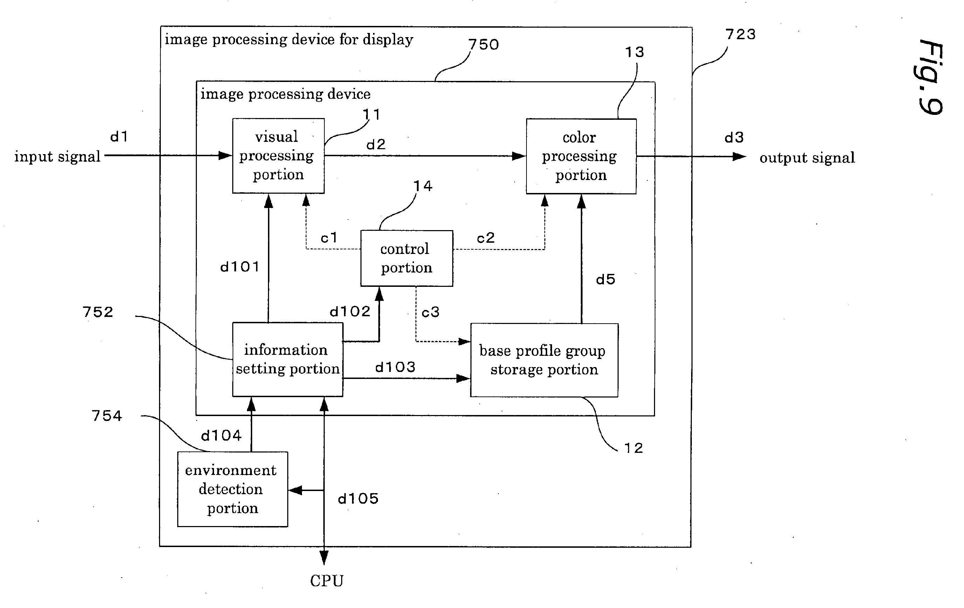

The image processing device for display 723 is a device that receives a control from the CPU 724 and based on this, image processes the input signal d1 included in the input image signal d362 (see Fig. 9), and outputs an output image signal d361 that includes the output signal d3 (see Fig. 9). The image processing device for display 723 also is characterized in that it includes an image processing device described in the above embodiment and performs image processing using a profile. This will be described in greater detail later.

The CPU 724 is a device for performing computations related to the data processing of the various portions of the display device 720, and controls the various portions. The input portion 725 is a user interface through which the user can operate the display device 720, and is made of keys, knobs, and a remote control, for example, for controlling the portions.

The tuner 726 demodulates a signal that is received wirelessly or through a wired connection, and outputs digital data. More specifically, the tuner 726 receives a ground wave (digital/analog) broadcast, and BS (digital/analog) and CS broadcasts, for example, through the antenna 727 or a cable (not shown). The codec 728 decodes the digital data that have been obtained by demodulation by the tuner 726, and outputs the input image signal d362 to be input to the image processing device for display 723.

The memory controller 729 performs control of the addresses and access timing of the task memory 730 of the CPU, which is made of a DRAM, for example.

The external I/F 731 is an interface for obtaining image data or profile information, for example, from an external device 740 such as a memory card 733 or a PC 735 and outputting this as the input image signal d362. The profile information is information related to the profile for performing image processing, and is described in greater detail later. The external I/F 731 is for example constituted by a memory card I/F 732, PC I/F 734, network I/F 736, and wireless I/F 737. It should be noted that it is not absolutely necessary for the external I/F 731 to be provided with all of these components.

The memory card I/F 732 is an interface for connecting the memory card 733, which stores image data or profile information, for example, and the display device 720. The PC I/F 734 is an interface for connecting the PC 735, which is an external device such as a personal computer that stores image data or profile information, for example, and the display device 720. The network I/F 736 is an interface for connecting the display device 720 to a network and obtaining image data or profile information, for example. The wireless I/F 737 is an interface for connecting the display device 720 to an external device via wireless LAN or the like and obtaining image data or profile information, for example. It should be noted that the external I/F 731 is not limited to the configuration shown here, and it can also be an interface for connecting the display device 720 to a USB or an optical fiber.

The image data or profile information obtained via the external I/F 731 are decoded by the codec 728 as necessary and then are input to the image processing device for display 723 as an input image signal d362.

### <Image Processing Device for Display723>

(1) Configuration of the Image Processing Device for Display 723
   The configuration of the image processing device for display 723 is described using Fig. 9. The image processing device for display 723 is provided with an image processing device 750, which has substantially the same configuration as the image processing device 10 that was described using Fig. 1, and an environment detection portion 754.
   The environment detection portion 754 manually, or automatically using a sensor, for example, detects environment information, which are discussed later, and outputs environment information d104. The image processing device 750 obtains the environment information d104 detected by the environment detection portion 754, or environment information d105 obtained from the CPU 724. It then performs image processing using the profile that is specified based on the environment information that is obtained. Image processing is visual processing and color processing performed on the input signal d1 included in the input image signal d362 (see Fig. 8). The result of image processing is output as an output image signal d361 that includes the image-processed output signal d3 (see Fig. 8).
   The configurations of the environment detection portion 754 and the image processing device 750 will be described in greater detail in that order.
(2)
   The environment detection portion 754 is a device that detects environment information manually or automatically using a sensor, for example, and then outputs environment information d104.
   The environment information is information relating to the display environment of the display portion 721 (see Fig. 8) or the viewing environment in which the image displayed on the display portion 721 is viewed. More specifically, the environment information is information such as the brightness or the color temperature of the ambient light where the display device 720 is located, product information of the display portion 721 (such as the product number), information on the image size displayed by the display portion 721, positional information related to the distance between the image that is displayed and the user who will be viewing that image, and user information related to the user, such as his or her age and gender.
   The environment detection portion 754 is realized by a device such as an optical sensor that detects the brightness or color temperature of the ambient light, a device that reads product information attached to the display portion 721 either wirelessly or over a wired connection (for example, a wireless tag reading device, a barcode reading device, or a device that reads information from a database managing the information of the various portions provided in the display device 720), a wireless or infrared sensor that measures the distance to the user, or a camera that obtains information relating to the user, and detects the environment information automatically. Alternatively, the environment detection portion 754 detects environment information obtained through an input by the user. The environment detection portion 754 outputs the detected environment information to the image processing device 750 as environment information d104.
   The environment detection portion 754 also receives as input the environment information d105 that is obtained from the CPU 724. Based on the environment information d105 that it receives, the environment detection portion 754 controls the items of the environment information that the user is allowed to input. For example, it performs control to keep environment information in fields already included in the environment information d105 from being input again.
(3) Image Processing Device 750
   <<3-1>> Overview of the Image Processing Device 750
      The image processing device 750 specifies the profile to be used when performing image processing, based on the environment information d104 that has been detected by the environment detection portion 754 or the environment information d105 obtained from the CPU. It then uses the specified profile to perform image processing that includes visual processing and color processing on the input signal d1 included in the input image signal d362 (see Fig. 8), and outputs an output image signal d361 that includes the output signal d3 (see Fig. 8).
      The image processing device 750 has substantially the same configuration as the image processing device 10 (see Fig. 1), however it is different in that it is provided with an information setting portion 752. Other portions of the image processing device 750 that have the same functions as those of the image processing device 10 are assigned the same reference numerals and will not be described in detail.
   <<3-2>> Information Setting Portion 752 and Profile Information
      The information setting portion 752 obtains the environment information d104 that has been detected by the environment detection portion 754 or the environment information d105 obtained from the CPU, and based on this obtained information, outputs the profile information d101, d102, and d103 to the visual processing portion 11, the control portion 14, and the base profile group storage portion 12, respectively.
      The content of the profile information d101, d102, and d103 will be described before moving on to a detailed description of the operation of the information setting portion 752.
      The profile information is information for specifying the profile to be used for image processing by the visual processing portion 11 and the color processing portion 13. Specifically, the profile information includes at least one of data stored by the profile, tag information such as a number that specifies a profile, parameter information that indicates the features of the processing of the profile, and environment information related to the display environment of the display portion 721 (see Fig. 8) or the viewing environment in which the image displayed on the display portion 721 is to be viewed.
      Here, the profile is the data used for image processing in the visual processing portion 11 and the color processing portion 13, and more specifically is a color transformation profile stored in a profile RAM described in an above embodiment. It should be noted that in the present embodiment the profile is not limited to a color transformation profile in the form of tabulated data, as was described above, but also can be coefficient matrix data storing transformation coefficients for the input signal d1 to be processed.
      The tag information is identifying information for identifying a given profile from other profiles, and for example is a number allocated to each of the plurality of profiles registered to the visual processing portion 11 or the base profile group storage portion 12.
      The parameter information is information that indicates the features of the processing of the profile, and for example is information that is obtained by digitizing the degree of processing of for example the contrast enhancement, dynamic range compression, or color conversion, achieved by the profile.
      The environment information is information included in the environment information d104 or d105 obtained from the environment detection portion 754 or the CPU 724.
      It should be noted that the following description is made with regard to a case in which the profile information d101 includes tag information of the profile used by the visual processing portion 11, the profile information d103 includes tag information of the profile used by the color processing portion 13, and the profile information d102 includes parameter information of the profiles used by the visual processing portion 11 and the color processing portion 13.
      The information setting portion 752 obtains the environment information d104 or the environment information d105 and outputs the profile information d101, d102, and d103. Specifically, the information setting portion 752 selects a suitable profile based on the environment information obtained from the environment information d104 or the environment information d105 and outputs that profile information. More specifically, the information setting portion 752 references a database associating profile candidates with the values of the environment information and selects a suitable profile for the environment information that has been obtained. Selection of the profile is performed for the visual processing portion 11 and the base profile group storage portion 12.
   <<3-3>> Operations of the Other Portions
      The control portion 14 outputs a control signal c1 that specifies the degree of synthesis of the profiles in the visual processing portion 11 based on the parameter information included in the profile information d102. Also, the control portion 14 outputs a control signal c2 that specifies the degree of synthesis of the profiles in the color processing portion 13 based on the parameter information included in the profile information d102. Further, the control portion 14 supplies a count signal for reading the profiles, to the visual processing portion 11 and the base profile group storage portion 12 storing the profiles. The count signal is given to the visual processing portion 11 and the base profile group storage portion 12 as a control signal c1 and a control signal c3.
      The visual processing portion 11 synthesizes the profiles specified by the tag information of the profile information d101 using the degree of synthesis specified by the control signal c1, creating a new profile to use for visual processing. The visual processing portion 11 then uses this created profile to visually process the input signal d1 and outputs the result as the image signal d2.
      The base profile group storage portion 12 reads the profiles specified by the tag information of the profile information d103 at the timing specified by the control signal c3.
      The color processing portion 13 obtains the selected profile data d5 that have been read from the base profile group storage portion 12, and based on the selected profile data d5 that are obtained and the degree of synthesis specified by the control signal c2 creates a new profile to use for color processing. The color processing portion 13 then uses this created profile to perform color processing of the image signal d2 and outputs the result as the output signal d3.
      It should be noted that the profile information d101 and the profile information d103 do not always include tag information specifying a plurality of profiles. If the profile information d101 and the profile information d103 each include tag information that specifies a single profile, then it is also possible for the visual processing portion 11 and the color processing portion 13 to not create the profiles. In this case, the profile specified by the tag information is used without being altered.

### <Effect of the Display Device 720>

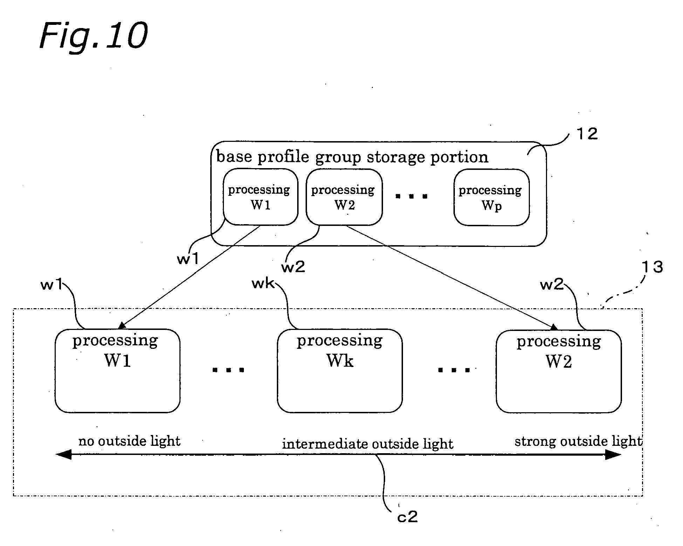

(1)
   The display device 720 is provided with an image processing device 750 that has substantially the same configuration as that of the image processing device 10. For this reason, it achieves the same effects as those of the image processing device 10 described earlier.
   In particular, the display device 720 can create new profiles. Thus, it is not necessary to store a large number of profiles in advance, and this allows the storage capacity for the profiles to be reduced. Further, by changing the degree of synthesis when creating profiles, it is possible to fine tune the image processing that is achieved by the profile.
   With the display device 720, a new profile is created using a plurality of profiles. Thus, a greater degree of freedom in creating the profile can be achieved than in a case where a single profile is used. That is, it is possible to create profiles that accomplish more complex image processing.
   Also, with the display device 720, image processing is performed using profiles that have been created. The creation of profiles can be performed in advance of the image processing. For this reason, even if the image processing that is achieved by the profile is complex, the speed at which image processing is carried out is not affected. That is, complex processing can be performed faster. This becomes even more apparent when the image processing that is achieved by the created profile adjusts a greater number of image parameters.
(2)
   With the display device 720, profile selection and changing the degree of synthesis are performed based on the environment information detected by the environment detection portion 754. Thus, image processing that is suitable for the environment information is realized, further increasing the visual effect.
   The relationship between the environment information and the profiles used by the color processing portion 13 is described, and the effects of the display device 720 are described in more specific detail using Fig. 10. Fig. 10 shows a profile wk that is created based on the profile w1 and the profile w2, which are selected based on the environment information, and the degree of synthesis specified by the control signal c2. The profile wk is created according to the value of the degree of synthesis that is specified by the control signal c2.
   For example, if the ambient light of the display environment of the display device 720 is obtained as environment information, then it is preferable to change the vividness of the image to be displayed in correspondence with the intensity of the ambient light (brightness of the ambient light). More specifically, raising the vividness of the image to be displayed as the ambient light intensity increases allows colors to be displayed appropriately.
   Accordingly, if information on the ambient light is obtained as environment information, then the information setting portion 752 selects a profile w1 and a profile w2 that are profiles having a different degree of processing with respect to the vividness. Here, the profile w1 is a profile that achieves color processing in which the vividness is not raised, and the profile w2 is a profile that achieves color processing in which the vividness is raised considerably. Further, the information setting portion 752 outputs the parameter information of a profile that achieves appropriate color processing for the intensity of the ambient light to the control portion 14 as profile information d102. The control portion 14 outputs a control signal c2 that specifies the degree of synthesis of the profile w1 and the profile w2 based on the parameter information that it has obtained. In the color processing portion 13, the degree of synthesis specified by the control signal c2 is used to interpolate the profile w1 and the profile w2 to create a profile wk. The color processing portion 13 then uses the profile wk that it has created to perform color processing.
   With the display device 720, it is possible to achieve color processing that is suited for the intensity of the ambient light, and this allows the device to perform a display that has a more enhanced visual effect.
   Alternatively, if positional information on the distance between the displayed image and the user who will be viewing the image is obtained as environment information, then it is preferable to perform color processing of the image to be displayed in correspondence with this positional information. More specifically, a difference in the distance between the displayed image and the user will result in a difference in the size of the user's viewing angle, and this will lead to the displayed colors being viewed differently. Thus, performing color processing in correspondence with the viewing angle allows an image that gives the same impression regardless of the distance to the user to be displayed.
   In a case where product information of the display portion 721 (e.g. product number) or information on the image size displayed by the display portion 721 is obtained as environment information, it is preferable that color processing of the image to be displayed is performed in accordance with the product information or the image size information. When there is a difference in the size of the display portion 721 determined from the product information or in the image size that will be displayed, the size of the user's viewing angle changes, and this causes the displayed colors to be viewed differently. Thus, by performing color processing in accordance with the viewing angle, it is possible to display an image that gives a same impression.
(3)
   The information setting portion 752 specifies the profiles to be used by the visual processing portion 11 and the color processing portion 13. Thus, it is possible to prevent the image processing operations performed by the visual processing portion 11 and the color processing portion 13 from overlapping or canceling out one another.
(4)
   With the display device 720, the profiles are selected and the degree of synthesis thereof is changed in correspondence with the environment information d105 obtained from the CPU 724 (see Fig. 9). Thus, image processing that is appropriate for the environment information is achieved, and this further increases the viewing effect.
   A case in which dynamic range compression based on the brightness of the outside light in the environment around the display device 720 is performed is described as the selected profile. More specifically, a case in which the visual processing portion 11 (see Fig. 9) performs dynamic range compression of the input signal d1, and the color processing portion 13 (see Fig. 9) performs color processing of the input signal d1 after dynamic range compression, that is, of the image signal d2, is described.

### <<Action of the Visual Processing Portion 11>>

First, the visual processing portion 11 transforms the color space of the input signal d1 from RGB into a luminance component Y and color difference components CB and CR. It then compresses the dynamic range of the luminance component Y.

Compression of the dynamic range of the luminance component Y is performed based on the dynamic range compression function F4.

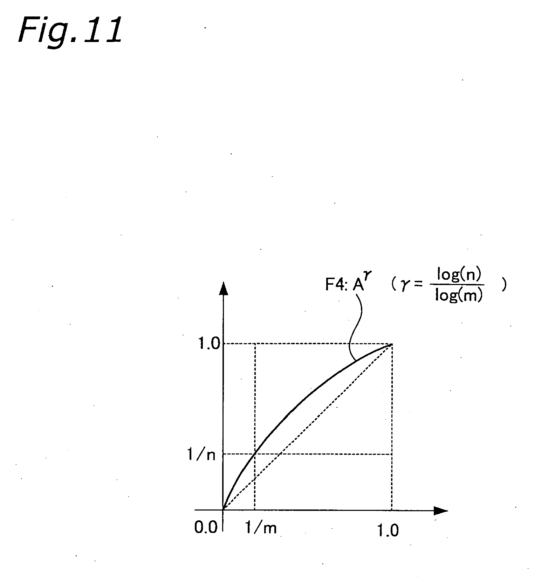

Fig. 11 is a graph showing the relationship between the value of the luminance component Y of the input signal d1 (horizontal axis) and the value obtained by applying the dynamic range compression function F4 to the luminance component Y (vertical axis). Here, the dynamic range compression function F4 is a "power function" expressed as F4 = A^γ, where [A] is the value of the luminance component Y. It should be noted that γ is expressed as γ = log(n)/log(m), where [m] is the contrast of the luminance component Y and [n] is the contrast after compression. Here, "contrast" means the ratio between the minimum value and the maximum value of the signal, and indicates a value obtained by dividing the maximum value by the minimum value.

As shown in Fig. 11, the dynamic range of the luminance component Y is compressed by the dynamic range compression function F4. More specifically, the dynamic range compression function F4 transforms the luminance component Y from a value range of [1/m to 1.0] to a value range of [1/n to 1.0]. As a result, the viewed dynamic range of the image signal d2 is compressed to I/n (minimum value : maximum value = I:n). Here, "dynamic range" is used to mean the ratio between the minimum value and the maximum value of the signal.

The value [n] of the contrast after compression is set as the viewed contrast value of the displayed image under the ambient light conditions of the display environment. That is, the value [n] of the contrast after compression can be derived as the value obtained by lowering the value [m] of the contrast of the luminance component of the input signal d1 by the amount that the luminance value is affected by the ambient light of the display environment.

### «Action of the Color Processing Portion 13»

The visual processing portion 11 transforms the color space of the input signal d1 from RGB into a luminance component Y and color difference components CB and CR, and performs dynamic range compression of the luminance component Y. As a result, the image signal d2 comes to have a different hue than the hue of the input signal d1 due to the effect of the luminance component after dynamic range transformation.

This shift in hue can be easily corrected by multiplying the color difference components CBin and CRin of the input signal d1 by the ratio of the luminance component Yin before transformation and the luminance signal Yout after transformation by the visual processing portion 11. However, to faithfully reproduce the coloring it is necessary to obtain color difference signals CBout and CRout that take into account the color reproduction region of the signal that will ultimately be output.

Accordingly, the color processing portion 13 performs color processing using a LUT in order to faithfully transform the boundary of the color reproduction region with the nonlinear relationship between CBout=F1 (Yout/Yin, CBin, CRin) and CRout=F2 (Yout/Yin, CBin, CRin).

Specifically, as shown in Fig. 10, the required dynamic range compression ratio for the intensity of the outside light is set, and based on this compression ratio, the profile w1 and the profile w2 are selected. The profile wk to be used for the color processing is then created based on these profiles and the degree of synthesis that is specified by the control signal c2. Here, the profile wk is created in correspondence with the value of the degree of synthesis that is specified by the control signal c2.

The profile w1 and the profile w2 are profiles that achieve the color difference correction that is necessary to return the hue that has been shifted by dynamic range compression to its original state. For example, the profile w1 is a profile that achieves color processing for correcting the color difference shift that is caused by a ratio R1 of dynamic range compression, and the profile w2 is a profile that achieves color processing for correcting the color difference shift that is caused by a ratio R2 of dynamic range compression. In this way, each profile is associated with a dynamic range compression ratio.

If the display device 720 is used in an environment having a different outside light intensity, then the information setting portion 752 selects a profile w1 and a profile w2 that have different degrees of processing with regard to color difference correction. The information setting portion 752 then outputs the parameter information of a profile for achieving color difference correction that is appropriate for the intensity of the ambient light to the control portion 14 as profile information d102.

The control portion 14 outputs a control signal c2 that specifies the degree of synthesis of the profile w1 and the profile w2 based on the parameter information that it has obtained.

The color processing portion 13 then uses the degree of synthesis that is specified by the control signal c2 to interpolate the profile w1 and the profile w2 to create a profile wk. The color processing portion 13 then performs color processing using the profile wk that it has created.

As for the order of the visual processing 11 and the color processing 13, the color reproduction region is determined based on the processing of the brightness by the visual processing 11, and thus it is preferable that the visual processing 11 is performed first and then the color processing 13 is executed on the output of the visual processing 11.

With the display device 720, it is possible to achieve color processing that is in accordance with the intensity of the ambient light, inhibiting shifts in hue and allowing a display having a higher visual effect to be performed.

### <Modified Examples>

With the image processing device for display 723 in the display device 720, it is possible to perform modifications that suitably adopt the foregoing embodiment. Characteristic modified examples of the display device 720 are discussed below.
(1)
   In the foregoing embodiment it was mentioned that "the profile information d101 includes tag information of the profile used by the visual processing portion 11, the profile information d103 includes tag information of the profile used by the color processing portion 13, and the profile information d102 includes parameter information of the profiles used by the visual processing portion 11 and the color processing portion 13."
   Here, it is also possible for the profile information d101 to d103 to include other information.
   It is possible for the profile information d101 to include at least one of the data stored by the profile that is to be used by the visual processing portion 11, parameter information indicating the features of the processing of the profile, and environment information, and to specify the profiles to be used by the visual processing portion 11. In particular, if the profile information d101 includes environment information, then the visual processing portion 11, like the information setting portion 752, specifies profiles by referencing a database that relates the environment information with the profiles.
   It is possible for the profile information d103 to include at least one of the data stored by the profile that is to be used by the color processing portion 13, parameter information indicating the features of the processing of the profile, and environment information, and to specify the profiles to be used by the color processing portion 13. In particular, if the profile information d103 includes environment information, then the base profile group storage portion 12, like the information setting portion 752, specifies profiles by referencing a database that relates the environment information with the profiles.
   It is possible for the profile information d102 to include at least one of data stored by the profile, tag information such as a number specifying the profile, and environment information, and to be information that determines the degree of synthesis of the profiles that are specified by the profile information d101 and the profile information d103.
   It should be noted that it is only necessary for the profile information d101 to d103 to include at least one of profile data, tag information, parameter information, and environment information, and it may also simultaneously include a plurality of these.
(2)
   Portions of the display device 720 described in the foregoing embodiment that achieve similar functions can be achieved by shared hardware.
   For example, the input portion 725 can be a device that also serves as the environment detection portion 754 and allows the input of environment information. In this case, the environment information that is input from the input portion 725 is input to the image processing device for display 723 via the CPU 724 as environment information d105.
   The storage portion storing profiles in the visual processing portion 11 and the base profile group storage portion 12 can be provided outside of the image processing device for display 723, and for example can be achieved by the memory 730 or the external device 740. Also, the storage portion storing profiles in the visual processing portion 11 and the base profile group storage portion 12 can be achieved by the same device.
   The profiles stored in the storage portion storing profiles in the visual processing portion 11 and the base profile group storage portion 12 can be stored in these portions in advance, or can be obtained from an outside device 740 or the tuner 726.
   It is also possible for the functions of the control portion 14 of the image processing device 750 and the image setting portion 752 to be achieved by the CPU 724.
(3)
   The effects of the present invention are independent of the color space of the input signal d1, the image signal d2, and the output signal d3. For example, each of these signals can be a signal in any color space of RGB color space, YCbCr color space, YUV color space, Lab color space, Luv color space, YIQ color space, XYZ color space, or YPbPr color space.
(4)
   In the image processing device for display 723, it is also possible to provide a user input portion that allows the user to perform an input in place of the environment detection portion 754.

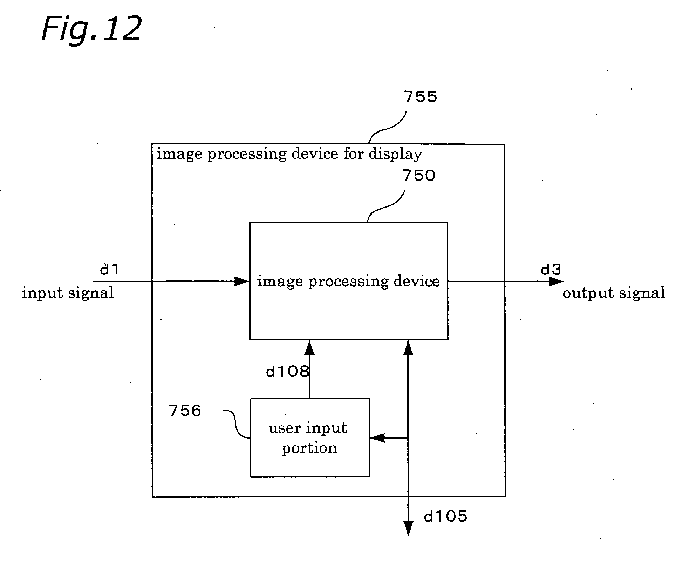

   Fig. 12 shows the configuration of an image processing device for display 755 serving as a modified example of the image processing device for display 723. The image processing device for display 755 is characterized in that it is provided with a user input portion 756 that allows the user to perform an input. Sections of the image processing device for display 755 that achieve substantially the same functions as those of the image processing device for display 723 (see Fig. 9) are assigned the same reference numerals and description thereof is omitted.
   The user input portion 756 allows the user to input a preferred image processing operation and outputs the information that has been input to the information setting portion 752 of the image processing device 750 (see Fig. 9) as input information d108.
   The user input portion 756 is for example constituted by a brightness input portion that allows the user to input a desired brightness and a picture quality input portion that allows the user to input a desired picture quality.
   The brightness input portion is for example a switch for inputting the state of the light in the image to be displayed or a switch for inputting the state of the light in the environment in which the image will be displayed. The switch for inputting the state of the light in the image to be displayed is for example a switch for inputting whether there is backlight or frontlight in the image, whether a strobe was used when the image was captured, or the state of the macro program used when the image was captured. Here, the macro program is a program for controlling the image-capturing device in accordance with the state of the object to be captured. The switch for inputting the state of the light in the environment in which the image is to be displayed is a switch for inputting the brightness or the color temperature, for example, of the ambient light.
   The picture quality input portion is a switch for the user to input his or her preferred picture quality, and for example is a switch for inputting different visual effects such as default, dynamic, or classic.
   The user input portion 756 outputs the information that is input through the brightness input portion and the picture quality input portion as input information d108.
   With the image processing device 750, substantially the same operations as when environment information d104 (see Fig. 9) is input are performed. The difference between this image processing device 750 and a case in which environment information d104 is input is that the information setting portion 752 references a database that relates the input information d108 and the profiles and from this outputs the profile information d101 to d103.
   With the image processing device for display 755 of this modified example, the profiles to be used for image processing can be selected based on the input of the user and used to perform image processing. Thus, it is possible to perform image processing that matches the preferences of the user.
   It should be noted that it is also possible for the input portion 725 (see Fig. 8) to operate in the same manner the user input portion 756 and to allow the user to input a preferred image processing operation through the CPU 724. In this case, the environment information d105 includes information similar to that of the input information d108.
(5)
   It is also possible for the image processing device for display 723 to be a device that segregates the property information included in the input signal and selects profiles based on the segregated property information and uses these to perform image processing.

### «5-1» Configuration of the Image Processing Device for Display 759

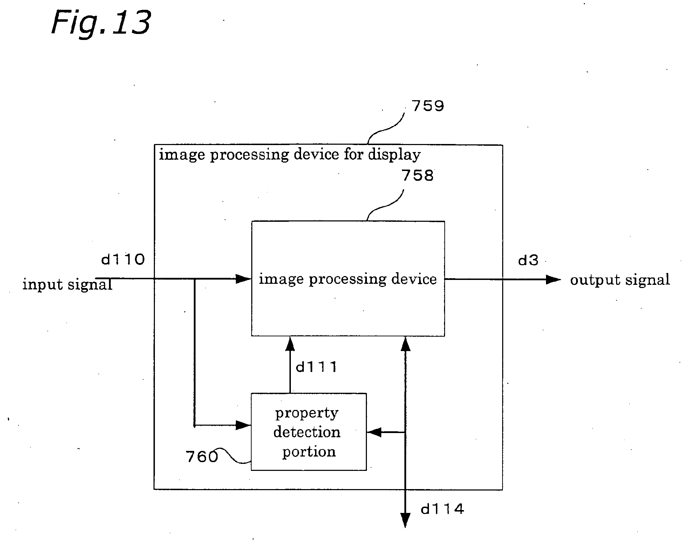

Fig. 13 shows an image processing device for display 759 that serves as a modified example of the image processing device for display 723. The image processing device for display 759 is characterized in that it is provided with a property detection portion 760 that detects property information d111 included in an input signal d110, and in that the profiles that are used for image processing are switched based on the property information d111 that has been detected. The portions of the image processing device for display 759 shown in Fig. 13 that have substantially the same function as those portions of the image processing device for display 723 are assigned identical reference numerals and description thereof is omitted.

The property detection portion 760 detects the property information d111 included in the input signal d110. The property information d111 is information arranged at the header portion, for example, of the input signal d110, and is information that is related to the properties of the input signal d110. The property detection portion 760 segregates the property information d111 by reading a predetermined number of bits from the start of the input signal d110. It should be noted that the property information d111 can also be information that is disposed at the rear end of the input signal d110. Alternatively, it can also be disposed in a separable state along with flag information at an intermediate position in the input signal d110.

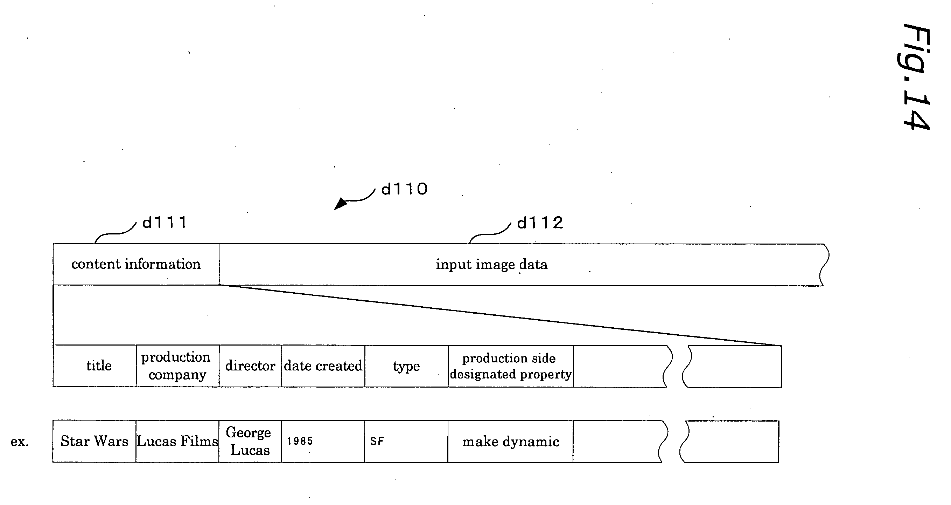

Fig. 14 shows an example of the format of the input signal d110 including the property information d111. In the input signal d110 shown in Fig. 14, content information serving as the property information d111 is disposed at the front end portion of the data and subsequent to this the input image data d112 are disposed.

The content information includes a property that is related to the entire content of the input image data d112, and includes such information as the title, production company, director, date created, type, and production side designated properties, for example, of the input image data d112. Here, "type" is information related to the type of the content, and for example includes information such as SF, action, drama, or horror. The "production side designated properties" are information related to display characteristics specified by the content production side, and for example include information such as dynamic or frightening.

The input image data d112 are data similar to those of the input signal d1 described earlier, and for example are image data expressed in a RGB or other color space.

The property detection portion 760 outputs the property information d111 that has been detected to the image processing device 758 (see Fig. 13).

The image processing device 758 has substantially the same configuration as the image processing device 750 shown in Fig. 9. The details of its structure are the same as those of the image processing device 750 and thus will not be described here.

The image processing device 758 also operates in substantially the same manner as the image processing device 750. Hereinafter, the aspects in which it differs from the image processing device 750 will be discussed.

With the image processing device 758, first the property information d111 is received as input from the property detection portion 760. The information setting portion of the image processing device 758 then references a database that associates the property information d111 with the profiles, and outputs profile information to the control portion, the visual processing portion, and the base profile group storage portion. Next, the image processing device 758 receives the input signal d110, which includes the property information d111. The image processing device 758 then performs the same visual processing and color processing as the image processing device 750 with respect to the input image data d112 included in the input signal d110.

### <<5-2>> Effects

(1)
   With the image processing device for display 759, it is possible to perform image processing that uses appropriate profiles for the content information at the time of content creation. Thus, image processing can be performed taking into account the original intent of the producers of the content.
   More specifically, it is possible to determine the overall brightness and color temperature tendencies of the images based on the title or production company, for example, and then to perform image processing that transforms the brightness or color temperature of the overall image. Also, the production side designated properties, for example, allow the image to be displayed in the way that the producers originally intended.
(2)
   With the image processing device for display 759, different profile information can be output to the visual processing portion and the color processing portion. Thus, even in a case where a plurality of values have been specified as the content information type, such as a case in which "action and horror" have been specified, the visual processing portion can suitably process areas where there is to be a great deal of movement, as in action scenes, while the color processing portion can suitably perform color processing of portions in which the coloring is to have a psychological effect, as in horror scenes.
   Further, because different profile information can be output to the visual processing portion and the base profile group storage portion, the information amount of the profile information that must be taken into account by each of these portions can be reduced. As a result, the visual processing portion and the base profile group storage portion can select profiles more easily.

### <<5-3>> Modified Examples

(1)
   The image processing device for display 759 can also be a device that receives the input of property information d114 from the input portion 725 (see Fig. 8). The property information d114 that is input from the input portion 725 is then input to the image processing device 758 via the CPU 724. The information setting portion of the image processing device 758 then outputs profile information based on the property information d114 that has been input from the input portion 725 and the property information d111.
   Thus, should a problem arise in the detection of the content information by the property detection portion 760, it is possible to suitably input content information through the input portion 725 and thereby perform suitable image processing. Moreover, the input portion 725 also allows user preferences to be reflected in the image processing. For example, it is possible to reflect the user's preferences by obtaining an image with enhanced sharpness in the case of animation or a vivid image in the case of a feature film. It is additionally possible to correct the content information of the corrected image, such as the digital master.
   It should be noted that it is also possible for the input portion 725 to restrict the content information that the user can input based on the property information that has been detected by the property detection portion 760. For example, if the property detection portion 760 has detected that the type of the input image data d112 is "animation," then it is possible for the input portion 725 to allow the input only of fields related to animation (e.g. animation director, animation title).
(2)
   The image processing device for display 759 can also be provided with a segregation portion for separating the input signal d110 into the property information d111 and the input image data d112. The segregation portion outputs the property information d111 that it has separated from the input signal d110 to the property detection portion 760, and outputs the input image data d112 to the image processing device 758. Thus, it is possible to reduce the processing burden of the property detection portion 760 and the image processing device 758.
(3)
   It is also possible to repeatedly use content information that has already been obtained. In this case, it is possible to specify profiles for performing image processing using the stored content information without obtaining all of the information again.
(4)
   It is also possible for the property information d111 to include information other than content information. Specifically, it can also include scene property information on properties relating to some of the input image data, image-capture property information relating to the environment in which the input signal d110 is created, broadcast property information relating to the media up to when the input signal d110 is obtained by the display device 720, recording property information relating to the medium/device on which the input signal d110 is recorded, and profile property information relating to the profiles to be used for image processing. Each of these will be described in specific detail below.
   It should be noted that the following description separately addresses cases in which the property information d111 includes only one of the scene property information, image-capture property information, broadcast property information, recording property information, and profile property information, but the property information d111 can include all or a combination of any number of these information types in addition to the content information. In this case, each information has an even greater effect.

### (4-1) Scene Property Information

(4-1-1)

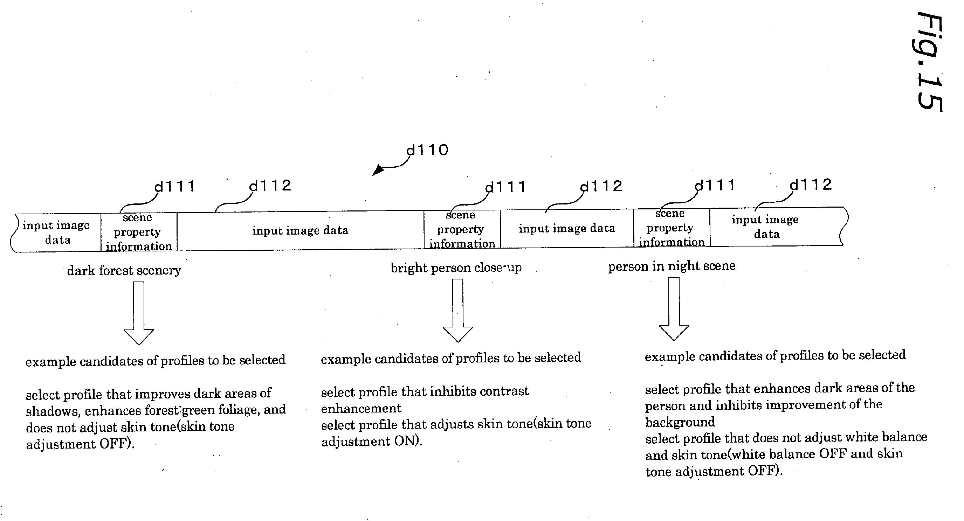

   Fig. 15 shows the format of an input signal d110 that includes scene property information as property information d111. In the input signal d110 shown in Fig. 15, the scene property information is arranged in units of the scenes of the input image data d112. The scene property information is for example disposed along with flag information, for example, in a state where it can be segregated from the input image data d112.
   The scene property information is information describing the scene content of the subsequent input image data d112. For example, the scene property information is described as a combination of fields such as "brightness," "target," "action," and "scene overview," and includes content such as "dark, forest, scenery," "bright, person, close-up," and "dark, person, scenery." It should be noted that these are only examples of scene property information and there is no limitation to these. For example, "scene overview" can specify information such as news, sports, soap opera, and action.
   The image processing device for display for performing image processing of an input signal d110 that includes scene property information is the same as the device obtained by configuring the image processing device for display 759 (see Fig. 13) for scene property information.
   The property detection portion 760 detects the scene property information included in the input signal d110 and outputs the result to the image processing device 758 as property information d111.
   The information setting portion of the image processing device 758 obtains the property information d111 and outputs profile information to the control portion, the visual processing portion, and the base profile group storage portion. For example, the information setting portion then references a database that stores the relationship between the various fields of the scene property information obtained from the property information d111 and the profiles and based on this outputs profile information.
   The profile information is the same as the profile information d101 to d103 and thus will not be described here. It should be noted that the profile information can also include scene property information. In this case, the visual processing portion and the base profile group storage portion select the profiles to be used for the image processing from the scene property information that is obtained.
   The operations of the various portions of the image processing device for display are the same as those when the property information d111 includes content information, and thus will not be described here.
(4-1-2)
   With the present invention, it is possible to obtain the same effects as those discussed in the foregoing embodiment. The following is a discussion of the effects that are features of the present modified example.
   It becomes possible to perform visual processing that utilizes profile data that are suited for the scene property information. Thus, image processing can be performed taking into consideration the original intent of the content production side.
   The scene property information are arranged as necessary for each scene of the input image data d112. Thus, it becomes possible to switch the image processing with more detail, and this allows more suitable image processing to be performed.
   For example, if the scene property information "dark, forest, scenery" is obtained from the property information d111, then the information setting portion outputs profile information that specifies a "profile that improves dark shadow areas" to the visual processing portion and outputs profile information that specifies a "profile with which the memory color correction of foliage green is performed but the memory color correction of skin tone is not performed" to the base profile group storage portion.
   Alternatively, if the scene property information "bright, person, close-up" is obtained from the property information d111, then the information setting portion outputs profile information that specifies a "profile that inhibits contrast enhancement" to the visual processing portion and outputs profile information that specifies a "profile with which memory color correction of skin tone is performed" to the base profile group storage portion.
   Yet further, if the scene property information "dark, person, scenery" is obtained from the property information d111, then the information setting portion outputs profile information that specifies a "profile that enhances dark areas of the person and inhibits dark area improvement of the background" to the visual processing portion and outputs profile information that specifies a "profile for not performing adjustment of the white balance and the memory color correction of skin tone" to the base profile group storage portion.
   Also, for example if the scene property information "person, drama" is obtained from the property information d111, then the main object to be processed in the image is a person. Thus, to the visual processing portion the information setting portion outputs profile information that specifies a profile with which the contrast of beige, low luminance regions is improved but the contrast of other low luminance regions is not improved. In contrast to this, to the base profile group storage portion the information setting portion outputs profile information that specifies a profile with which the memory correction of skin tone is performed and the correction of the other memory colors, such as foliage green, is lessened.
   It should be noted that the scene property information can also be input from the input portion 725 through the CPU 724 as in the above embodiment. In this case, the subjective picture quality from the standpoint of the user can be increased.
   In the case of a series of scenes, such as a character movement scene in which the orientation of the sunlight in the background gradually changes, it is possible to add scene property information for each individual scene as well as to add scene property information to the initial scene only. Here, it is possible to first add scene property information to the initial scene and then to the subsequent continuous scenes add information on the change in brightness or the change in the target object from the initial scene as scene property information. By doing this, it is possible to suppress flickering or sudden changes in the picture quality when processing a moving image.

### (4-2) Image-Capture Property Information

(4-2-1)

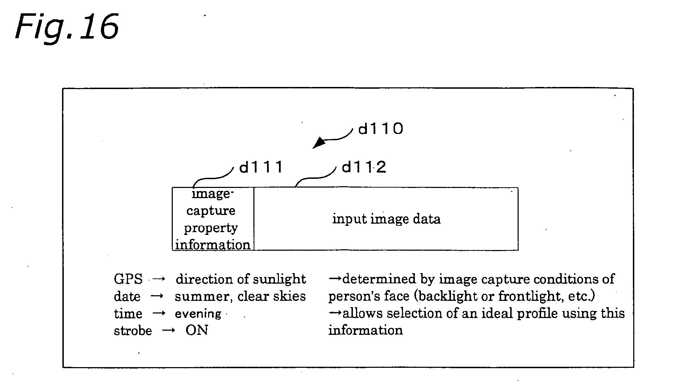

   Fig. 16 shows the format of an input signal d110 that includes image-capture property information as property information d111. In the input signal d110 shown in Fig. 16, the image-capture property information is arranged at the header portion of the input signal d110. It should be noted that the image-capture property information is not limited to this, and for example can be disposed along with flag information, for example, in a state where it can be segregated from the input image data d112
   The image-capture property information is information that gives a description of the image-capture conditions of the subsequent input image data d112. As an example, the image-capture property information is described by a combination of fields such as "position/direction," "date," "time," and "image-capturing device information." "Position/direction" is information that is obtained from a GPS, for example, at the time of image capture. "Image-capturing device information" is information on the device at the time of image capture, and includes information such as whether there is a strobe light, information on the stop and the shutter speed, and whether it is a macro shot (close-up shot). It should be noted that these are only examples of the image-capture property information, and there is no limitation to these. For example, the image-capture property information can also be information for specifying a macro program (a program for executing a combination of controls of for example the stop, the shutter speed, and whether or not there is a strobe, for example).
   The image processing device for display for performing image processing of an input signal d110 that includes image-capture property information is the same as the device obtained by configuring the image processing device for display 759 (see Fig. 13) for image-capture property information.
   The property detection portion 760 detects the image-capture property information included in the input signal d110 and outputs the result as property information d111 to the image processing device 758.
   The information setting portion of the image processing device 758 obtains the property information d111 and outputs profile information to the control portion, the visual processing portion, and the base profile group storage portion. For example, the information setting portion then references a database that stores the relationship between the various fields of the image-capture property information obtained from the property information d111 and the profiles and based on this outputs profile information.
   The profile information is the same as the profile information d101 to d103 and thus will not be described here. It should be noted that the profile information can also include image-capture property information. In this case, the visual processing portion and the base profile group storage portion select the profiles to be used for image processing from the image-capture property information that is obtained.
   The operations of the various portions of the image processing device for display are the same as those when the property information d111 includes content information, and thus will not be described here.
(4-2-2)
   With the present invention, it is possible to obtain the same effects as those discussed in the foregoing embodiment. The following is a discussion of the effects that are features of the present modified example.
   It becomes possible to perform image processing that utilizes profiles that are suited for the image-capture property information. Thus, image processing can be performed taking into consideration the original intentions of the content production side.
   For example, information such as "direction of sun," "season," "weather," "color of sunlight," and "strobe presence" of the environment in which the input image data d112 are created is obtained from fields such as "position/direction," "date," "time," and "image capturing device information," and from this information it is possible to analyze the conditions under which the image of the object was captured (for example, in forward light or backlight). Then, image processing can be performed using profiles that are suited for the analyzed image-capture conditions.
   It should be noted that the image-capture property information can also be input from the input portion 725 through the CPU 724 like in the above embodiment. In this case, the subjective picture quality from the standpoint of the user can be increased.

### (4-3) Broadcast Property Information

(4-3-1)

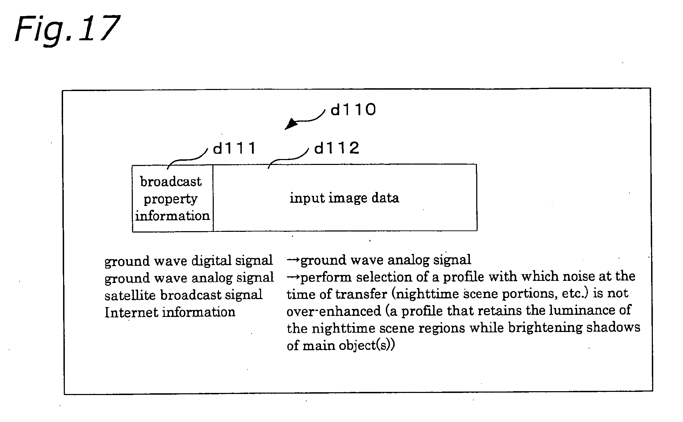

   Fig. 17 shows the format of an input signal d110 that includes broadcast property information as property information d111. With the input signal d110 shown in Fig. 17, the broadcast property information is arranged at the header portion of the input signal d110. It should be noted that the broadcast property information is not limited to this, and for example can also be disposed along with flag information, for example, in a state where it can be segregated from the input image data d112.
   The broadcast property information is information that is related to the media up to reception of the input signal d110 by the display device 720. In particular, it is information related to the broadcasting format in which the input signal d110 is obtained. For example, the broadcast property information includes a value that indicates one of "ground wave digital broadcast," "ground wave analog broadcast," "satellite digital broadcast," "satellite analog broadcast," and "Internet broadcast."
   The image processing device for display for performing image processing of an input signal d110 that includes broadcast property information is the same as the device obtained by configuring the image processing device for display 759 (see Fig. 13) for broadcast property information.
   The property detection portion 760 detects the broadcast property information included in the input signal d110 and outputs the result as property information d111 to the image processing device 758.
   The information setting portion of the image processing device 758 obtains the property information d111 and outputs profile information to the control portion, the visual processing portion, and the base profile group storage portion. For example, the information setting portion for example references a database that stores the relationship between the profile and the various fields of the broadcast property information obtained from the property information d111 and outputs the profile information.
   The profile information is the same as the profile information d101 to d103 and thus will not be described here. It should be noted that the profile information can also include broadcast property information. In this case, the visual processing portion and the base profile group storage portion select the profiles to be used for image processing from the broadcast property information that is obtained.
   The operations of the various portions of the image processing device for display are the same as those when the property information d111 includes content information, and thus will not be described here.
(4-3-2)
   With the present aspect of the invention, it is possible to obtain the same effects as those discussed in the foregoing embodiment. The following is a discussion of the effects that are features of the present modified example.
   It becomes possible to perform visual processing that utilizes profile data that are suited for the broadcast property information. For example, it is possible to correct for the impact that the broadcast route has on the image and thus perform image processing that takes into account the original intentions of the broadcast station.
   As one specific example, profiles with which transmission noise is not over-enhanced are selected for images obtained through a ground wave analog broadcast or a satellite analog broadcast. Thus, it becomes possible to image process the images in which the captured object is present in a nighttime scene using profiles that maintain the luminance of the nighttime scene region while adding brightness to the captured object.
   Also, it is possible to perform image processing changing the color region in which memory color correction is performed taking into consideration the differences in the characteristics of noise generation between an analog broadcast and a digital broadcast (analog broadcast: noise between fields, digital broadcast: compression noise).
   It should be noted that the broadcast property information can also be input from the input portion 725 through the CPU 724 as in the above embodiment. In this case, the subjective picture quality from the standpoint of the user can be increased.

### (4-4) Recording Property Information

(4-4-1)

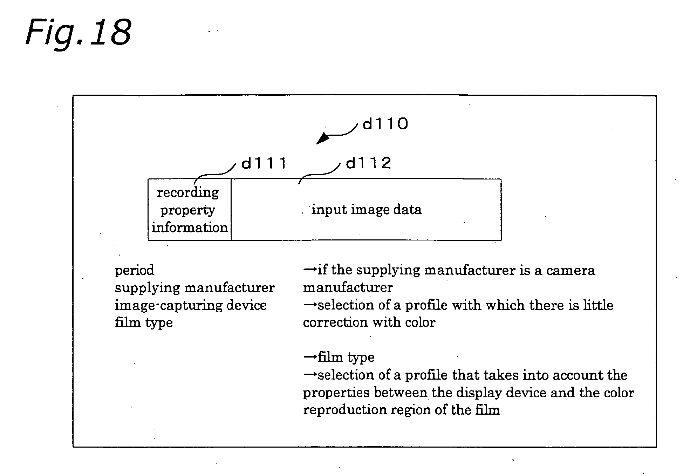

   Fig. 18 shows the format of an input signal d110 that includes recording property information as property information d111. With the input signal d110 shown in Fig. 18, the recording property information is arranged at the header portion of the input signal d110. It should be noted that the recording property information is not limited to this, and for example can also be disposed along with flag information, for example, in a state where it can be segregated from the input image data d112.
   The recording property information is information that is related to the medium or device on which the input signal d110 has been recorded. For example, the recording property information includes "period" in which the input signal d110 was recorded, "supplying manufacturer" of the recording medium or device, and "product information" for specifying the recording medium or device.
   The image processing device for display for performing image processing of an input signal d110 that includes recording property information is the same as the device obtained by configuring the image processing device for display 759 (see Fig. 13) for recording property information.
   The property detection portion 760 detects the recording property information included in the input signal d110 and outputs the result to the image processing device 758 as property information d111.
   The information setting portion of the image processing device 758 obtains the property information d111 and outputs profile information to the control portion, the visual processing portion, and the base profile group storage portion. For example, the information setting portion for example references a database that stores the relationship between the profile data and the various fields of the recording property information obtained from the property information d111 and based on this outputs the profile information.
   The profile information is the same as the profile information d101 to d103 and thus will not be described here. It should be noted that the profile information can also include recording property information. In this case, the visual processing portion and the base profile group storage portion select the profiles to be used for image processing from the recording property information that is obtained.
   The operations of the various portions of the image processing device for display are the same as those when the property information d111 includes content information, and thus will not be described here.
(4-4-2)
   With the present invention, it is possible to obtain the same effects as those discussed in the foregoing embodiment. The following is a discussion of the effects that are features of the present modified example.
   It becomes possible to perform image processing using profiles that are suited for the recording property information. For example, if the "supplying manufacturer" is a camera manufacturer that handles color processing exclusively, then profile information with which very little color processing is performed by the color processing portion is output. As another example, for input image data d112 recorded on film or the like, the profile information that is output is for performing color processing taking into consideration the characteristics of the color expression region of the film. In this way, it is possible to correct for the effect that the recording medium or recording device has on the image such that image processing that reflects the original aim of the producers is performed.
   It should be noted that the recording property information can also be input from the input portion 725 through the CPU 724 as in the above embodiment. In this case, the subjective picture quality from the standpoint of the user can be increased.

### (4-5) Profile Property Information

(4-5-1)

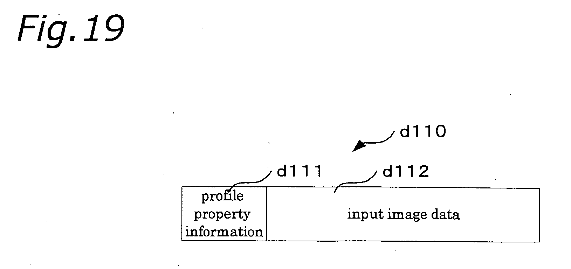

   Fig. 19 shows the format of an input signal d110 that includes profile property information as property information d111. With the input signal d110 shown in Fig. 19, the profile property information is arranged at the header portion of the input signal d110. It should be noted that the profile property information is not limited to this, and for example it can also be disposed along with flag information, for example, in a state where it can be segregated from the input image data d112.
   The profile property information is information that is for specifying profiles, and for example is information for specifying profiles recommended by the image-capturing device that creates the input image data d112. The profile property information includes at least one of data stored by the profile, tag information such as a number that specifies a profile, and parameter information that shows the features of the processing of the profile. The profile data, tag information, and parameter information are identical to those that were discussed when describing the profile information d101 to d103 in the foregoing embodiment.
   The profiles specified by the profile property information are profiles for performing any one image processing of the following image processing [a] to image processing [c]. Image processing [a] is the image processing determined to be favorable for the input image data d112 by the image-capturing device that creates the input image data d112, for example. The image processing [b] is image processing that, in addition to the image processing [a], is for correcting discrepancies between the properties of the display portion of the image-capturing device and the display device of a reference model. The image processing [c] is image processing that, in addition to the image processing [a], is for correcting discrepancies between the properties of the display portion of the image-capturing device and the display device 720 (see Fig. 8).
   Additionally, the profile property information include process flag information on whether or not the input image data d112 included in the input signal d110 are data that have already been processed by the image-capturing device, for example.
   The image processing device for display performs image processing of an input signal d110 that includes profile property information and is the same as the device obtained by configuring the image processing device for display 759 (see Fig. 13) to handle profile property information.
   The property detection portion 760 detects the profile property information included in the input signal d110 and outputs the result to the image processing device 758 as profile information d111.
   The information setting portion of the image processing device 758 obtains the property information d111 and outputs profile information to the control portion, the visual processing portion, and the base profile group storage portion. The profile information can be output in the format of any one of profile data, tag information, and parameter information, regardless of the format of the profile property information (any one of profile data, tag information, or parameter information).
   The operation of the information setting portion is described in detail below.
   The information setting portion determines whether or not to output the information specifying the profile, of the profile property information that has been obtained, unchanged as profile information.
   For example, if the profile property information includes information that specifies a profile for performing image processing [a] or image processing [c] and the process flag information indicates "not processed," then the determination is to "output."
   In all other cases the determination is to "not output."
   In a case where the profile property information includes information specifying a profile for performing image processing [a] and the process flag information indicates "processed," then the information setting portion outputs information that specifies a profile for not performing image processing to the visual processing portion and the color processing portion as the profile information.
   In a case where the profile property information includes information specifying a profile for performing image processing [b] and the process flag information indicates "not processed," then the information setting portion outputs information for specifying a profile that, in addition to the image processing [a], performs image processing for correcting discrepancies in properties between the display device of the reference model and the display device 720 as profile information.
   In a case where the profile property information includes information specifying a profile for performing image processing [b] and the process flag information indicates "processed," then the information setting portion outputs information for specifying a profile that performs image processing for correcting discrepancies in properties between the display device of the reference model and the display device 720 as profile information.
   In a case where the profile property information includes information specifying a profile for performing image processing [c] and the process flag information indicates "processed," then the information setting portion outputs information for specifying a profile that performs image processing for correcting discrepancies in device properties between the display portion of the image-capturing device and the display device 720, to the visual processing portion and the color processing portion as profile information.
   It should be noted that these are only examples of the processing, and there is no limitation to these. For example, it is also possible for the image processing device 758 to always use the profile specified by the profile property information obtained from the property information d111.
   Also, in a case where the visual processing portion or the base profile group storage portion does not have the profile specified by the profile property information obtained from the property information d111, then profiles for creating the specified profile are selected from the profile information d111 and this profile information is output to the visual processing portion and the base profile group storage portion. The degree of synthesis for creating the specified profile from the profile information d111 using the profiles specified by the profile information output to the visual processing portion and the base profile group storage portion is output to the control portion.
   Aside from this, the operations of the various portions of the image processing device for display are the same as the case in which the property information d111 includes content information, and thus will not be described here.
(4-5-2)
   With the present aspect of the invention, it is possible to obtain the same effects as those discussed in the foregoing embodiment. The following is a discussion of the effects that are features of the present modified example.
   It becomes possible to perform image processing using a profile that is suited for the profile property information. For example, it is possible to perform image processing using the profile recommended by the image-capturing side. Further, it is also possible to perform a display that is near the image that is confirmed in the display portion on the image-capturing side. Thus, it is possible to perform image processing that reflects the intentions of the production side.
   It should be noted that the profile property information can also be input from the input portion 725 through the CPU 724 as in the above embodiment. In this case, the subjective picture quality from the standpoint of the user can be increased.
   Since it is possible to determine the content of the image processing, or whether or not there is image processing, on the side capturing the image, it is possible to prevent the image-capturing side and the display side from performing image processing operations that overlap or cancel each other out. It is also possible to include not only whether or not there is image processing but also to include the degree of that image processing as profile property information. In this case, the image-capture side and the display side can divide up the work of identical processes. For example, it is possible to achieve processing with which 50% of the image processing is performed on the image-capture side and the other 50% of the image processing is performed on the display side.
   It is possible to reproduce the image before image processing on the image-capture side from the information relating to the profile used on the image-capture side.
   If tag information or parameter information is included as profile property information, then it is possible to add information relating to the profile using little information.
(4-5-3)
   A modified example of a case in which the input signal d110 includes profile property information as property information d111 is described.

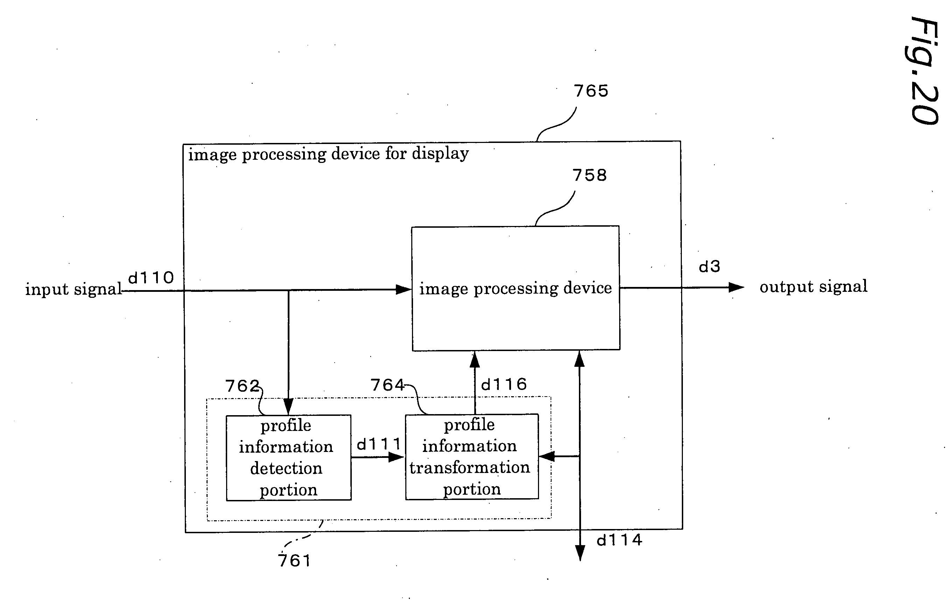

   Fig. 20 is a block diagram showing the structure of an image processing device for display 765 as a modified example of the image processing device for display 759 shown in Fig. 13.
   The image processing device for display 765 shown in Fig. 20 has the characteristic that it is provided with a property detection portion 761 as a modified example of the property detection portion 760 (see Fig. 13). The property detection portion 761 is capable of detecting the profile property information included in the input signal d110 (hereinafter, input profile property information) and transforming the input profile property information that has been detected into profile property information that is suited for the image processing device 758 (hereinafter, favorable profile property information), and includes a profile information detection portion 762 and a profile information transformation portion 764. It should be noted that the portions in the image processing device for display 765 that perform the same operations as those of the image processing device for display 759 are assigned identical reference numerals and will not, be described further.
   The profile information detection portion 762 detects the input profile property information from the input signal d110 and outputs this as property information d111. The details of this operation are the same as those for the property detection portion 760 (see Fig. 13) and thus will not be described here.
   The profile information transformation portion 764 obtains the property information d111 from the profile information detection portion 762. It then transforms the input profile property information included in the property information d111 into favorable profile property information, and outputs this information as profile property information d116. Here, this transformation is performed using a transformation cable that has been prepared in advance.
   The image processing device 758 obtains the profile property information d116, and through the same operation as when property information d111 that include profile property information are obtained in the foregoing embodiment, performs image processing of the input image data d112 included in the input signal d110 (see Fig. 19).
   With this image processing device for display 765 serving as a modified example, it is possible to perform image processing based on the input profile property information even if the input profile property information and the favorable profile property information have different formats.
   It should be noted that the profile information transformation portion 764 is not limited to performing only transformation of the format of the input profile property information.
   For example, even if it is not possible for the image processing device 758 to achieve the image processing specified by the input profile property information, it is possible to transform the input profile property information into favorable profile property information that achieves image processing as close as possible to the specified processing and then to perform image processing.
   If the input profile property information includes the degree of processing of the image processing already performed on the input image data d112 of the input signal d110, then it is also possible to transform the input profile property information according to that degree of processing in order to change the degree of processing of the image processing in the image processing device 758. By doing this, it is possible to divide the image processing task between the image capture side, which creates the input signal d110, and the display side. Further, image processing that overlaps with the image processing that has already been performed or image processing that cancels out the image processing that has already been performed are prevented.

### [Seventh Embodiment]

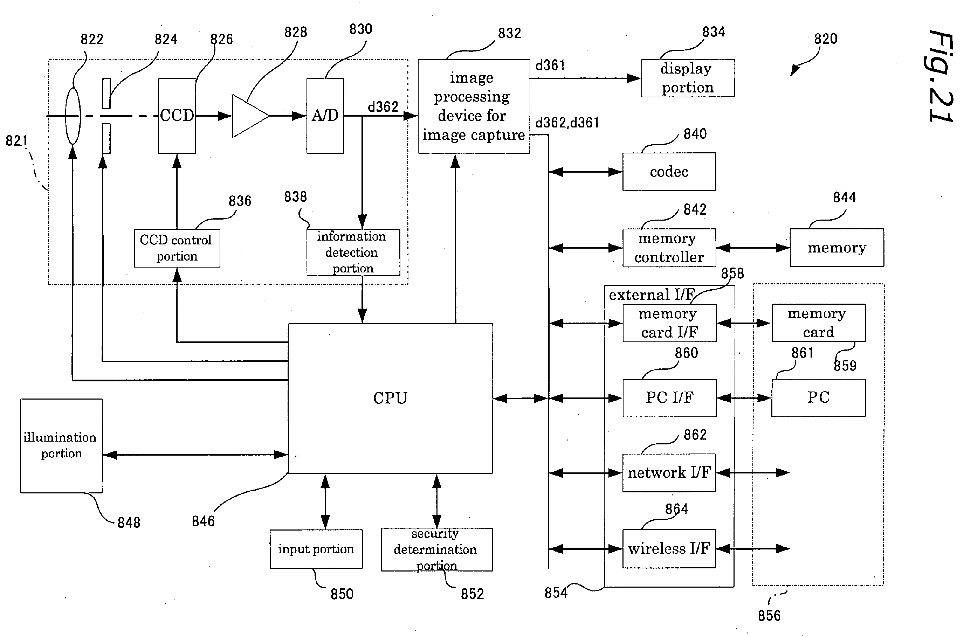

An image-capturing device 820 serving as a seventh embodiment of the present invention is described using FIGS. 21 to 31.

The image-capturing device 820 shown in Fig. 21 is an image-capturing device that captures images, and for example is a still camera or a video camera that performs capture of an image. The image-capturing device 820 is characterized in that it has an image processing device for image capture 832, which is inclusive of an image processing device described in the foregoing embodiments, and in that it can automatically or manually switch the profile used for image processing. It should be noted that the image-capturing device 820 can be an independent device or a device provided in a portable information terminal such as a portable telephone, PDA, or PC.

### <Image-Capturing Device 820>

The image-capturing device 820 is provided with an image-capturing portion 821, an image processing device for image capture 832, a display portion 834, a CPU 846, an illumination portion 848, an input portion 850, a security determination portion 852, a codec 840, a memory controller 842, a memory 844, an external interface (I/F) 854, and an external device 856.

The image-capturing portion 821 is a portion that captures an image and outputs an input image signal d362, and conprises a lens 822, a shop/shutter portion 824, a CCD 826, an amplifier 828, an A/D conversion portion 830, a CCD control portion 836, and an information detection portion 838.

The lens 822 is a lens for forming an image of a target object on the CCD 826. The stop/shutter portion 824 is a mechanism that controls the exposure by changing the range of transmission or the period of transmission of light beams that pass through the lens 822. The CCD 826 is an image sensor for photoelectrically converting the image of the object from light into an electric signal that it outputs as the image signal. The amplifier 828 is a device for amplifying the image signal that has been output from the CCD 826. The A/D conversion portion 830 is a device for converting the analog image signal that has been amplified by the amplifier 828 into a digital image signal. The CCD control portion 836 is a device for controlling the timing at which the CCD 826 is driven. The information detection portion 838 is a device that detects information such as the autofocus, stop, and exposure from the digital image signal and outputs this information to the CPU 846.

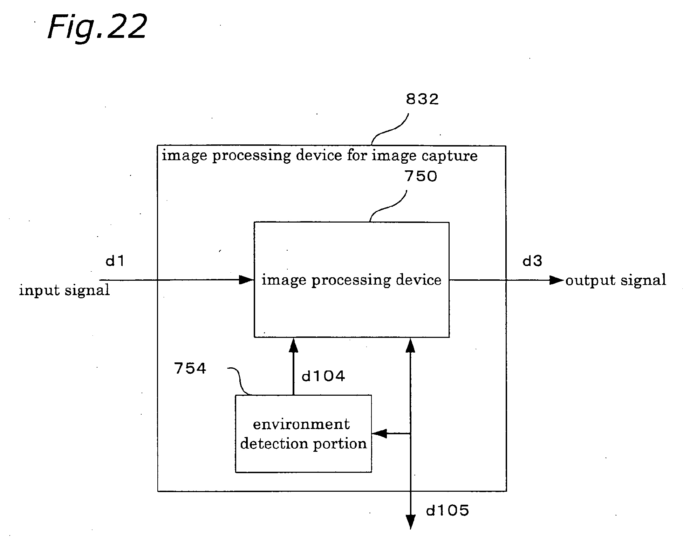

The image processing device for image capture 832 is the same device as the image processing device for display 723 described using Fig. 9 in [Sixth Embodiment]. The image processing device for image capture 832 is a device that receives a control from the CPU 846 and performs image processing of the input signal d1 included in the input image signal d362 (see Fig. 22) and outputs the result as an output image signal d361 that includes the output signal d3 (Fig. 22). The image processing device for image capture 832 has the characteristic of including an image processing device described in a foregoing embodiment and performing image processing using a profile. This will be described in detail later.

The display portion 834 is a device that displays thumbnails, for example, of the output image signals d361 output by the image processing device for image capture 832. The display portion 834 is commonly constituted by an LCD, but there are no particular limitations to the display portion 834 as long as it is a device that displays an image, and it could also be a PDP, CRT, or projector, for example. It should be noted that it is possible for the display portion 834 to be provided inside the image-capturing device 820 as well as being connected to the image-capturing device 820 through a wired connection or over a wireless network, for example. The display portion 834 can also be connected to the image processing device for image capture 832 through the CPU 846.

The CPU 846 is connected to the image processing device for image capture 832, the codec 840, the memory controller 842, and the external I/F 854 via a bus line, and receives the result of the detection by the information detection portion 838, the result of the input through the input portion 850, information on the light emitted by the illumination portion 848, and the result of the determination by the security determination portion 852, as well as executes control of the lens 822, the stop/shutter portion 824, the CCD control portion 836, the image processing device for image capture 832, the illumination portion 848, the input portion 850, the security determination portion 852 and the various portions connected to the bus line, for example.

The illumination portion 848 is a strobe that emits illumination light to be irradiated on the target object.

The input portion 850 is a user interface that allows the user to operate the image-capturing device 820, and comprises keys, knobs, and a remote control, for example, for controlling the various portions.

The security determination portion 852 is a portion that analyzes the security information that is obtained from the outside and performs control of the image processing device for image capture 832 via the CPU 846.

The codec 840 is a compression circuit that compresses the output image signal d361 from the image processing device for image capture 832 with JPEG or MPEG, for example.

The memory controller 842 performs control of the addresses and access timing of the memory 844 of the CPU, which is constituted by a DRAM, for example.

The memory 844 is constituted by a DRAM or the like, and is used as a task memory at the time of image processing, for example.

The external I/F 854 is an interface that outputs the output image signal d361, or the output image signal d361 that has been compressed by the codec 840, to an external device 856 such as a memory card 859 or a PC 861, and obtains profile information, which is information on the profile data for performing image processing, and outputs input image signals d362 including the obtained profile information to the image processing device for image capture 832. The profile information here is the same as that described in the [Sixth Embodiment]. The external I/F 854 includes a memory card I/F 858, a PC I/F 860, a network I/F 862, a wireless I/F 864 and the like. It should be noted that it is not necessary for the external I/F 854 to be provided with all of the elements illustrated here.

The memory card I/F 858 is an interface for connecting the memory card 859, which stores image data or profile information, for example, and the image-capturing device 820. The PC I/F 860 is an interface for connecting the PC 861, which is an external device such as a personal computer that stores image data and profile information, for example, and the image-capturing device 820. The network I/F 862 is an interface for connecting the image-capturing device 820 to a network and sending and receiving image data or profile information, for example. The wireless I/F 864 is an interface for connecting the image-capturing device 820 to an external device via wireless LAN etc. and sending and receiving image data and profile information, for example. It should be noted that the external I/F 854 is not limited to the example shown here, and for example can also be an interface for connecting a USB or an optic fiber etc. to the image-capturing device 820.

### <Image Processing Device for Image Capture 832>

Fig. 22 shows the configuration of the image processing device for image capture 832. The image processing device for image capture 832 has the same configuration as the image processing device for display 723. In Fig. 22, portions of the image processing device for image capture 832 that have the same function as those of the image processing device for display 723 have been assigned identical reference numerals.

The image processing device for image capture 832 is provided with an image processing device 750 that has substantially the same configuration as the image processing device 10 described using Fig. 1 and an environment detection portion 754.

The operations of the various portions were described in [Sixth Embodiment] and thus are not described in detail.

It should be noted that in [Sixth Embodiment], the environment information included in the environment information d104 or the environment information d105 was described as "information that is related to the environment in which the processed image data are displayed and viewed," but it is also possible for the environment information to be related to the environment in which the image is captured. The environment in which the image is captured is information such as the color temperature of the ambient light, the illumination, the type of the light source, and the distance to the captured object in the image capture environment.

### <Effects of the Image-Capturing Device 820>

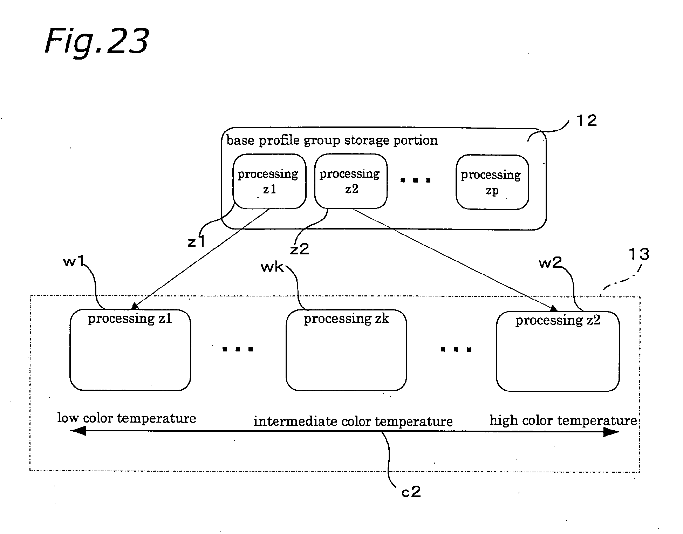

The image-capturing device 820 is provided with the image processing device for image capture 832, which is the same as the image processing device for display 723 described in [Sixth Embodiment]. Thus, it can attain the same effects as those of the display device 720 provided with the image processing device for display 723 (see Fig. 8).
(1)
   The image-capturing device 820 is provided with an image processing device 750 that has substantially the same configuration as the image processing device 10 (see Fig. 1). Thus, the same effects as those of the image processing device 10 described in the foregoing embodiments are obtained.
   In particular, with the image-capturing device 820, it is possible to create new profiles. Thus, it is not necessary to store a large number of profiles in advance, allowing the capacity for storing the profiles to be reduced in size. Further, it is possible to change the degree of synthesis during creation of the profile to fine tune the image processing that is achieved by the profile.
   With the image-capturing device 820, new profiles are created using a plurality of profiles. Thus, there is a greater degree of freedom with regard to the creation of profiles than in a case where a single profile is used. That is, it is possible to create profiles that achieve more complex image processing.
   Also, the image-capturing device 820 performs image processing that uses the created profiles. The profiles can be created in advance of the image processing. Thus, profiles that accomplish complex image processing do not affect the speed of image processing. That is, it is possible to perform complex processing more quickly. This becomes even more apparent when the image processing that is achieved by the created profile adjusts a greater number of image parameters.
(2)
   With the image-capturing device 820, the selection of profiles and the changing of the degree of systhesis are performed in correspondence with the environment information that is detected by the environment detection portion 754. Thus, image processing that is appropriate based on the environment information is performed, leading to an improved visual effect.
   Using Fig. 23, the relationship between the environment information and the profiles used by the color processing portion 13 (see Fig. 1) and the specific effects of the image-capturing device 820 are described. Fig. 23 shows a profile zk that is created based on the profile z1 and the profile z2, which are selected based on the environment information, and the degree of synthesis that is specified by the control signal c2. The profile zk is created in accordance with the value of the degree of synthesis specified by the control signal c2.
   For example, if it is possible to obtain the color temperature of the ambient light in the image capture environment of the image-capturing device 820, then in the base profile group storage portion 12 a profile z1 for low color temperatures (3000 K) and a profile z2 for high color temperatures (5500 K) are selected. More specifically, if memory color correction of skin tone is to be performed as the color processing, then the profile that is selected as the profile z1 for low color temperatures (3000 K) is set to have a wider color adjustment range in the red direction than the profile z2 for high color temperatures (5500 K), and its gain in the achromatic color direction is set large.
   Further, the control signal c2 is output from the control portion 14 in accordance with the color temperature that is obtained from the environment information. The color processing portion 13 creates a new profile zk based on the profile z1, the profile z2, and the degree of synthesis included in the control signal c2, and then uses this profile zk that it has created to perform color processing.
   In this case, the degree of synthesis is specified based on the color temperature and from this a favorable profile is created. Memory color correction is thus performed more suitably.
   It should be noted that two profiles are selected in the description of Fig. 23, but it is also possible for a plurality of profiles to be selected. Such a case would result in a further increase in picture quality.
(3)
   The image-capturing device 820 is provided with a display portion 834, and this allows the processed image to be confirmed as image capture is performed. Thus, the impression that the image gives when captured can be kept close to the impression that is given when that captured image is displayed.
(4)
   The information setting portion 752 specifies the profiles to be used by the visual processing portion 11 and the color processing portion 13. The visual processing portion 11 and the color processing portion 13 thus can be kept from performing processing operations that overlap or cancel the other out.

### <Modified Examples>

With the image-capturing device 820, the same modifications as those described with regard to the image processing device for display 723 in the above embodiment are possible. Modified examples that are characteristic of the image-capturing device 820 are discussed below.
(1)
   Portions of the image-capturing device 820 described in the foregoing embodiment that achieve similar functions can be achieved by common hardware.
   For example, the input portion 850 (see Fig. 21) can be a device that also serves as the environment detection portion 754 (see Fig. 22) and allows the input of environment information. In this case, the environment information that is input from the input portion 850 is input to the image processing device for image capture 832 via the CPU 846 (see Fig. 21) as environment information d105.
   The storage portion storing profiles in the visual processing portion 11 (see Fig. 9) and the base profile group storage portion 12 (see Fig. 9) can be provided outside of the image processing device for image capture 832, and for example can be achieved by the memory 844 or the external device 856. It is also possible for the storage portion storing profiles in the visual processing portion 11 and the base profile group storage portion 12 to be achieved by the same device.
   The profiles stored in the storage portion storing profiles in the visual processing portion 11 and the base profile group storage portion 12 can be stored in advance, or can be obtained from an outside device 856.
   It is also possible for the functions of the control portion 14 of the image processing device 750 and the information setting portion 752 to be achieved by the CPU 846.
(2)
   With the image processing device for image capture 832, it is also possible to provide a user input portion that allows the user to perform an input in place of the environment detection portion 754.

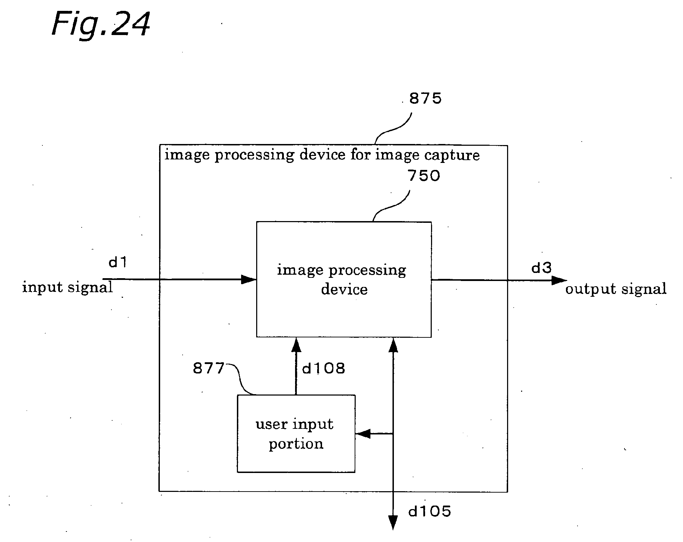

   Fig. 24 shows the structure of an image processing device for image capture 875 as a modified example of the image processing device for image capture 832. The image processing device for image capture 875 is characterized in that it is provided with a user input portion 877 that allows the user to perform an input. Sections of the image processing device for image capture 875 that achieve substantially the same functions as those of the image processing device for image capture 832 are assigned identical reference numerals and description thereof is omitted.
   The user input portion 877 allows the user to input a preferred image processing operation and outputs the information that has been input to the information setting portion 752 of the image processing device 750 (see Fig. 9) as input information d108.
   The user input portion 877 is for example constituted by a brightness input portion that allows the user to input a desired brightness and a picture quality input portion that allows the user to input a desired picture quality.
   The brightness input portion is for example a switch for inputting the state of the light in the image that is captured or a switch for inputting the state of the light in the environment in which the image is captured. The switch for inputting the state of the light in the image that is captured is for example a switch for inputting whether there is backlight or frontlight in the image, whether a strobe was used when the image was captured, or the state of the macro program used when the image was captured. Here, the macro program is a program for controlling the image-capturing device in accordance with the state of the object to be captured. The switch for inputting the state of the light in the environment in which the image is captured is a switch for inputting the brightness or the color temperature, for example, of the ambient light.
   The picture quality input portion is a switch for the user to input his or her preferred picture quality, and for example is a switch for inputting different visual effects such as default, dynamic, or classic.
   The user input portion 877 outputs the information that is input through the brightness input portion and the picture quality input portion as input information d108.
   With the image processing device 750, substantially the same operations are performed as when environment information d104 (see Fig. 22) is received as input. The difference between this image processing device 750 and a case in which environment information d104 is input is that the information setting portion 752 references a database that relates the input information d108 and the profiles and from this outputs the profile information d101 to d103.
   With the image processing device for image capture 875 of this modified example, the profiles to be used for image processing can be selected based on the input of the user and used to perform image processing. Thus, it is possible to perform image processing that matches the preferences of the user.
   It should be noted that it is also possible for the input portion 850 (see Fig. 21) to operate in the same manner as the user input portion 877 and to allow the user to input a preferred image processing operation through the CPU 846. In this case, the environment information d105 includes information similar to that of the input information d108.
(3)

### <<3-1>>

In the image-capturing device 820, it is also possible for the image processing device for image capture 832 to be a device that can obtain security information and switch the profile data to be used for image processing according to that security information. Here, the security information is information that expresses whether or not image capturing in the image-capture environment of the image-capturing device 820 is allowed or the extent to which it is allowed.

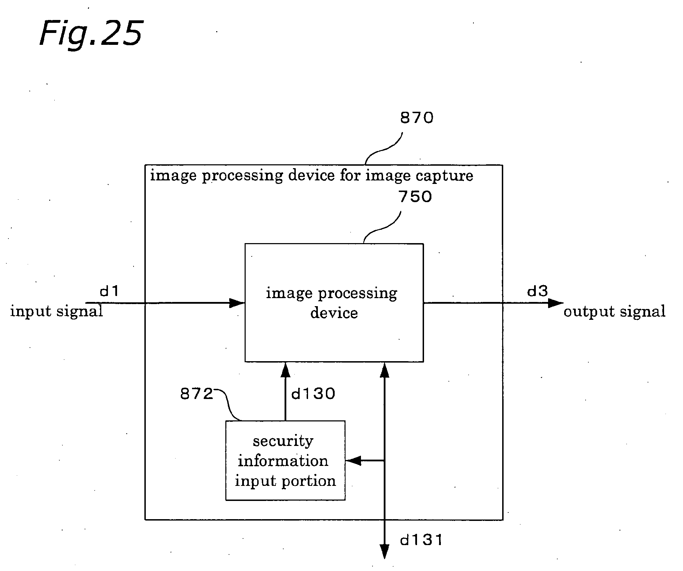

Fig. 25 shows an image processing device for image capture 870 serving as a modified example of the image processing device for image capture 832. The image processing device for image capture 870 is similar to the image processing device for image capture 832 in that it performs image processing of the input signal d1 and outputs an output signal d3. The image processing device for image capture 870 differs from the image processing device for image capture 832 in that the image processing device for image capture 870 is provided with a security information input portion 872 that obtains security information pertaining to the image-capture environment. Other than this, portions that the image processing device for image capture 870 shares with the image processing device for image capture 832 are assigned the same reference numerals and description thereof is omitted.

The security information input portion 872 comprises primarily an input device that allows a user to directly input security information and a reception device for obtaining security information wirelessly, via infrared radiation, or via a wired connection. Further, the security information input portion 872 outputs the security information that has been obtained as security information d130.

The information setting portion 752 of the image processing device 750 (see Fig. 9) specifies profiles that allow higher quality images to be taken the higher the degree of allowed image capture that is indicated by the security information d130, and specifies profiles that allow only low-quality images to be captured the lower the degree of allowed image capture.

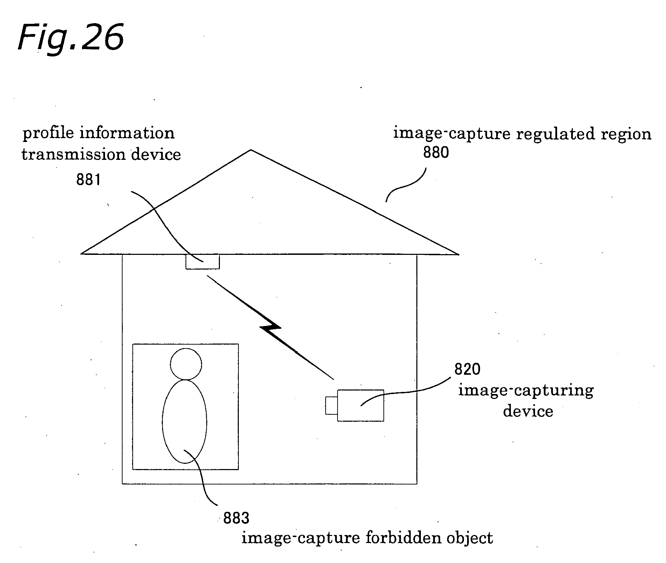

The operation of the image processing device for image capture 870 will be described in further detail using Fig. 26.

Fig. 26 is an explanatory diagram for describing the operation of the image-capturing device 820 provided with the image processing device for image capture 870 in an image-capture regulated region 880 in which the capturing of images is regulated.

An image-capture forbidden object 883 for which image capture is forbidden is disposed within the image-capture regulated region 880. The image-capture forbidden object 883 is for example a person or a book protected under the right of portrait or copyright. A security information transmission device 881 is arranged in the image-capture regulated region 880. The security information transmission device 881 transmits security information through radio transmission or infrared radiation.

The image-capturing device 820 within the image-capture regulated region 880 receives security information from the security information input portion 872 (see Fig. 25). The security information input portion 872 outputs the security information that it has obtained as security information d130. The information setting portion 752 of the image processing device 750 (see Fig. 9) references a database or the like storing the relationship between the values of the security information d130 and the profiles, and outputs profile information d101 to d103 for specifying a profile associated with the value of the degree of allowed image capture. For example, in the database, a profile with which higher quality images can be captured is associated with higher values of the degree of allowed image capture.

More specifically, if the image-capturing device 820 has received security information with a low degree of allowed image capture from the security information transmission device 881, then the image processing device 750 performs image processing using a profile that smoothes (or lowers the gray scale of) the area around the image or the main regions of the image. The image processing device 750 also performs image processing using a profile that makes the image colorless, for example. Thus, it is no longer possible to capture an image at a suitable picture quality, and this allows rights such as the right of portrait or copyright to be protected.

### <<3-2>> Others

(1)
   When the security information input portion 872 has received security information, it is also possible to stop some of the functions of the image processing device for image capture 870 or the image-capturing device 820 rather than switching between profile data according to the security information d130.
(2)
   In the image processing device 750, if security information is received from the security information input portion 872 and user authentication information d131 has been obtained from the input portion 850 of the image-capturing device 820, for example, then if image capture by that user is allowed, it is possible to perform image processing using a profile that increases the degree of allowed image capture.
   The user authentication information is for example authentication information obtained by a fingerprint or iris scan, for example, of the user. The image processing device 750 that has obtained this authentication information references a database of users who have image capture permission and determines whether or not the authenticated user is a user who has image capture permission. Further, at this time it is also possible to determine the degree of allowed image capture through user accounting information, for example, and if that degree is high, to allow the capture of high quality images.
   It should be noted that the security information can also supply information for specifying image-capturing devices 820 that have image capture permission.
(3)
   The security information input portion 872 can also serve as the security determination portion 852 (see Fig. 21).
(4)
   In the foregoing embodiment, it was described that "the image processing device for image capture 832 outputs an output image signal d361 that includes the image-processed output signal d3."
   Here, it is also possible for the image processing device for image capture 832 to be a device that is capable of outputting the output image signal d361 and the input signal d1. For example, the image processing device for image capture 832 outputs the output image signal d361 to the display portion 834 and outputs the input signal d1 to the codec 840 or the external device 856 (see Fig. 21).
   In this case, the display portion 834 of the image-capturing device 820 can perform a display that is in correspondence with the image capture conditions. For example, it could display an image having an increased contrast or vividness under the conditions of the ambient light. It would also be possible to record or transmit the captured image itself to the codec 840 or the external device 856.
(5)
   It is also possible for the image processing device for image capture 832 to be provided with a plurality of image processing devices.

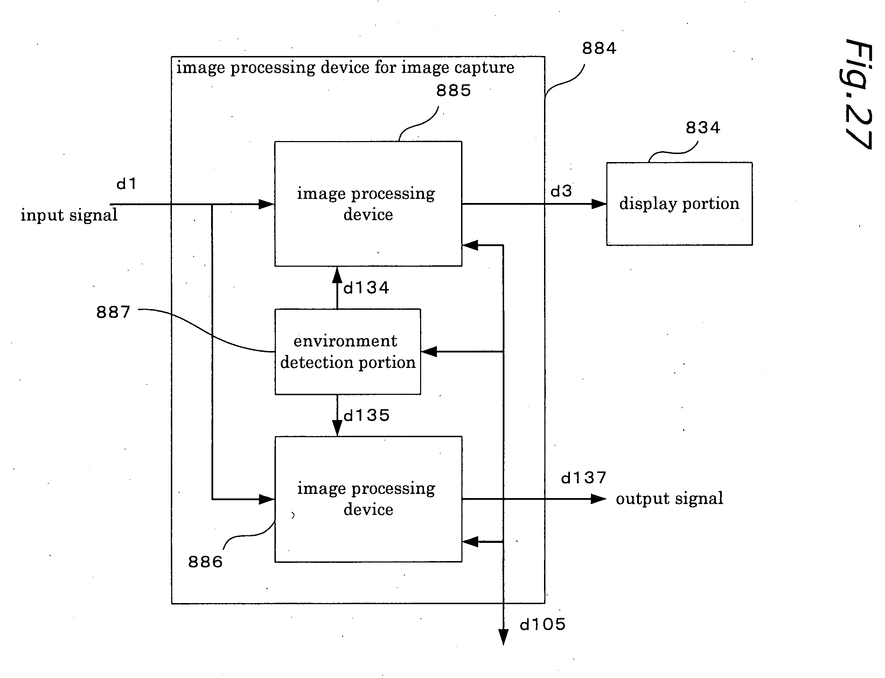

   Fig. 27 shows the configuration of an image processing device for image capture 884 that is provided with two image processing devices.
   The image processing device for image capture 884 is provided with an image processing device 885 and an image processing device 886, each of which performs image processing of the input signal d1. It is also provided with an environment detection portion 887 that outputs environment information to these image processing devices.
   The image processing device 885 and the image processing device 886 perform the same operations as the image processing device 750 described in the foregoing embodiment (see Fig. 22). The environment detection portion 887 performs the same operations as the environment detection portion 754 described in the foregoing embodiment (see Fig. 22). The environment detection portion 887 outputs environment information d134 and d135 to the image processing devices, respectively.
   The image processing device 885 obtains the environment information d134, processes the input signal d1, and then outputs an output signal d3 to the display portion 834. The image processing device 886 obtains the environment information d135, processes the input signal d1, and then outputs an output signal d137.
   Thus, the image processing device for image capture 884 can output signals that are obtained by performing different image processing operations to the display portion 834 and the external device 856. As a result, it is possible to cause a display portion 834 that has a small display size to display an image whose contrast or vividness has been increased, or to output to the external device 856, etc., an image that takes into account that it will be viewed on a large display size screen.
   It should be noted that it is also possible for the image processing devices 885 and 886 and the environment detection portion 887 to receive the input of environment information d105 from the input portion 850 (see Fig. 21) and for them to select the profiles to be used for image processing.
(6)
   The image processing device for image capture 832 can also be a device that adds profile information to the image-processed output signal d3 and then outputs the result.

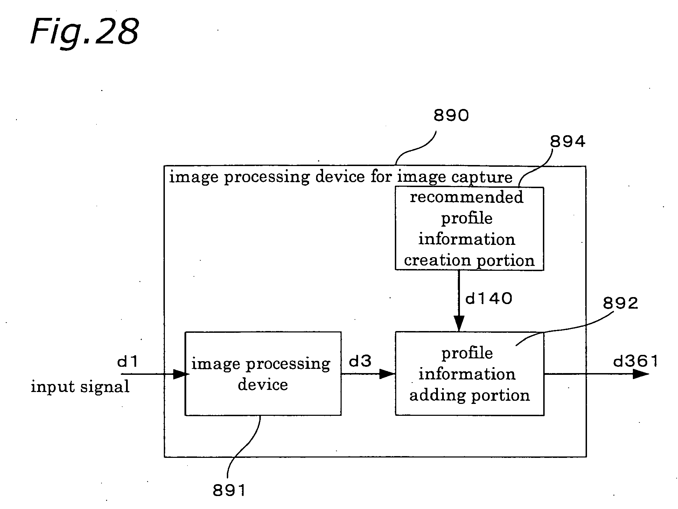

   Fig. 28 shows an image processing device for image capture 890 that serves as a modified example of the image processing device for image capture 832.
   The image processing device for image capture 890 is provided with an image processing device 891 that image processes an input signal d1 and outputs an output signal d3, a recommended profile information creation portion 894 that outputs recommended profile information d140, which is information on the recommended profile when performing image processing of the output signal d3, and a profile information adding portion 892 that adds the recommended profile information d140 to the output signal d3 and outputs the result as an output image signal d361.
   The image processing device 891 has the same configuration as the image processing device 10 or the image processing device 750, for example, described above, and is a device that performs image processing of the input signal d1 and outputs an output signal d3.
   The recommended profile information creation portion 894 automatically or manually creates recommended profile information d140 to add to the output signal d3. Specifically, the recommended profile information creation portion 894 obtains the environment information described in the foregoing embodiment through a sensor, etc. and references a database relating the environment information to profiles and from this outputs the profile information of a profile that is appropriate for the environment information as recommended profile information d140. Here, the profile information is the same as that described above. The recommended profile information creation portion 894 can also allow the user to input a favorable profile and then output the profile information of that profile that is input as recommended profile information d140.
   The profile information adding portion 892 adds recommended profile information d140 to the output signal d3 and outputs this as an output image signal d361.

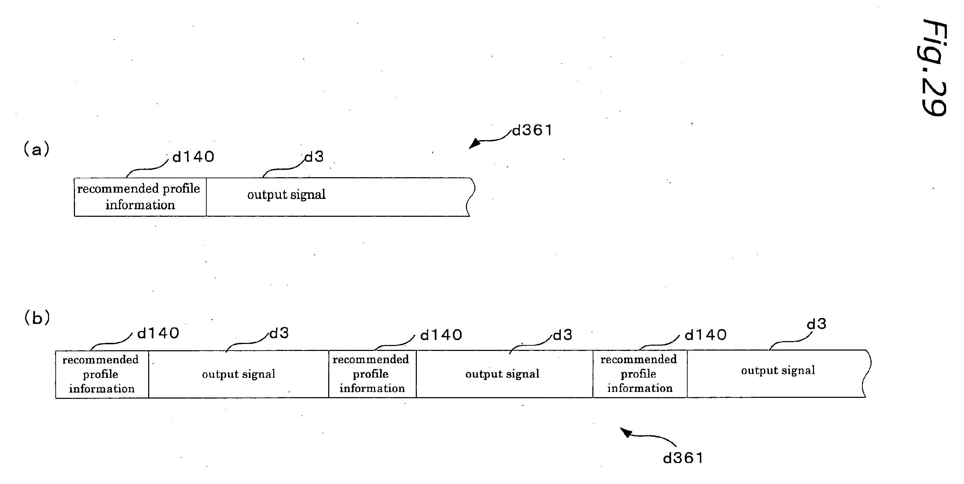

   Fig. 29 shows an example of the format of the output image signal d361 to which the profile information adding portion 892 has added recommended profile information d140.
   In Fig. 29(a), the recommended profile information d140 is disposed at the front portion of the output image signal d361, and the output signal d3 follows this. With this format, all of the output signals d3 can be processed using the recommended profile information d140 at the head of the signal. It is only necessary for the recommended profile information d140 to be arranged at a single location in the output image signal d361, and therefore the proportion of the output image signal d361 including recommended profile information d140 can be reduced.
   In Fig. 29(b), recommended profile information d140 is disposed for each of the plurality of output signals d3 obtained by partitioning. With this format, different profiles can be used to process each of the output signals d3 obtained by partitioning. It is thus possible to perform image processing using different profile data for each scene of the output signals d3, allowing image processing to be carried out more appropriately. Also, in the case of a series of continuously changing scenes, by first adding scene property information to the initial scene and then to the subsequent scenes adding only information on the fluctuation in brightness or information on the change in target object from the initial scene as scene property information, it is possible to inhibit flickering or sudden changes in picture quality, which can occur when processing moving images.
   It should be noted that as long as the recommended profile information d140 is information that specifies a profile to be used for image processing of the output signal d3, then the form that the information takes is inconsequential, and for example it can be information that associates profile information stored in a database with the output signals d3.
(7)
   The image processing device for image capture 832 can also be a device that adds profile information to the input signal d1 and outputs the result.

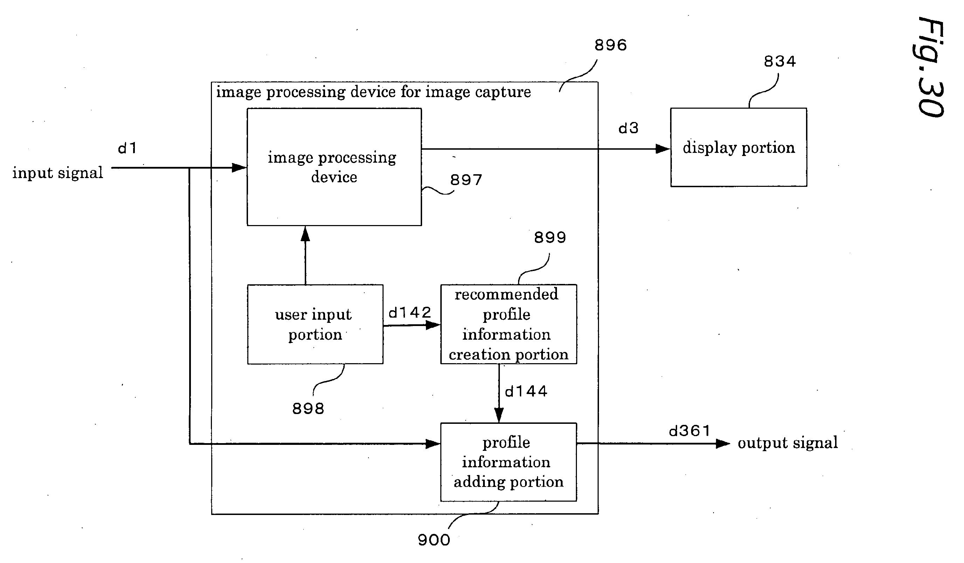

   Fig. 30 shows an image processing device for image capture 896 that serves as a modified example of the image processing device for image capture 832.
   The image processing device for image capture 896 is provided with an image processing device 897, a user input portion 898, a recommended profile information creation portion 899, and a profile information adding portion 900.
   The image processing device 897 and the user input portion 898 operate in the same manner as the image processing device 750 and the user input portion 877 described using Fig. 24. In addition, the user input portion 898 outputs information that has been set by the user to the recommended profile information creation portion 899 as input information d142.
   The recommended profile information creation portion 899 references a database that associates the input information d142 with the profiles and outputs recommended profile information d144.
   The profile information adding portion 900 adds recommended profile information d144 to the input signal d1 and outputs the result as an output image signal d361. Here, the recommended profile information d144 are added in the same format as that discussed using Fig. 29. That is, in Fig. 29 the recommended profile information d144 is disposed at the position at which the recommended profile information d140 is disposed, and the input signal d1 is disposed at the position at which the output signal d3 is disposed.
   Thus, with a display portion 834 that has a small display size, it is possible to display an image at increased contrast or vividness and confirm the image being captured while outputting that image to the external device 856, for example, after adding profile information that takes into account the fact that the image will be viewed on a large display size screen.
   It should be noted that the image processing device 897, the recommended profile information creation portion 899, and the profile information adding portion 900 can receive input from the input portion 850 (see Fig. 21) via the CPU 846 in lieu of or in addition to the user input portion 898.
(8)
   The recommended profile information that is added to the output signal d3 can also be created according to information regarding execution of image processing in the image processing device.

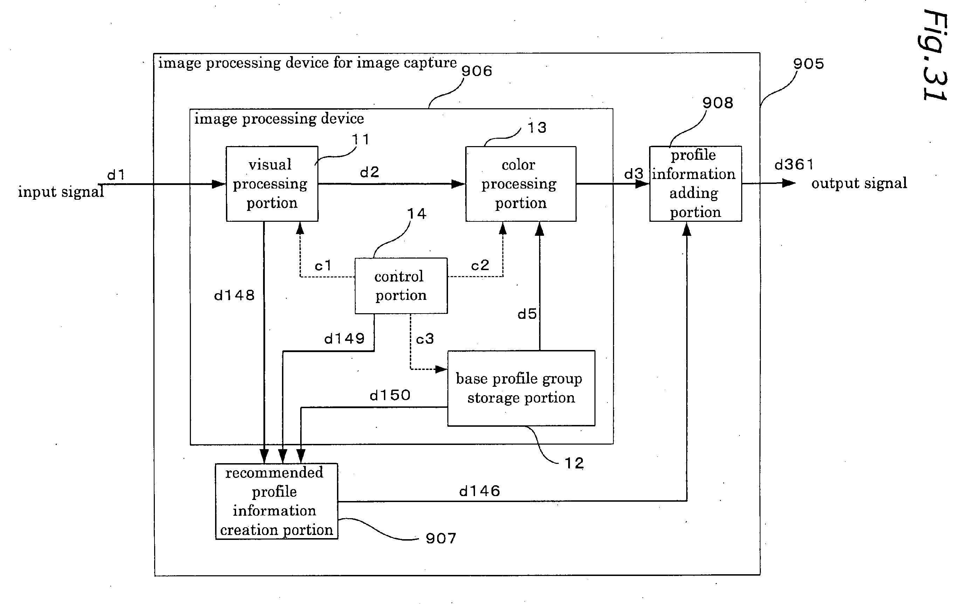

   Fig. 31 shows an image processing device for image capture 905 that serves as a modified example of the image processing device for image capture 832.
   The image processing device for image capture 905 is provided with an image processing device 906, a recommended profile information creation portion 907, and a profile information adding portion 908.
   The image processing device 906 is a device that performs image processing of an input signal d1 and outputs an output signal d3, and has substantially the same configuration as the image processing device 10 shown in Fig. 1. It differs from the image processing device 10 in that the visual processing portion 11, the control portion 14, and the base profile group storage portion 12 output profile information to the recommended profile information creation portion 907 based on their operation. For example, the visual processing portion 11 outputs information regarding the profile used for visual processing or the degree of visual processing, etc. as profile information d148. The control portion 14 outputs for example the degree of synthesis of the profiles used by the visual processing portion 11 and the color processing portion 13 as profile information d149. The base profile group storage portion 12 outputs information regarding the profile used for color processing by the color processing portion 13 or the degree of color processing by the color processing portion 13 as profile information d150.
   The recommended profile information creation portion 907 obtains profile information d148 to d150 and outputs these as recommended profile information d146.
   The profile information adding portion 908 adds the recommended profile information d146 to the output signal d3 and outputs this as the output image signal d361. Here, the recommended profile information d146 is added in the same format as that described using Fig. 29. That is, the recommended profile information d146 is disposed at the position where the recommended profile information d140 is disposed in Fig. 29.
   With the image processing device for image capture 905, it is possible from the display side to determine the nature of image processing and whether or not image processing has occurred on the image capture side. Thus, it is possible to prevent the image capture side and the display side from performing overlapping image processing or image processing that cancels the other out.
   Further, in addition to whether or not there is image processing, it is possible to also include the degree of that image processing as recommended profile information d146. Thus, it is possible to divide the same processing operation between the image capture side and the display side. For example, processing with which 50% of the image processing is performed on the image capture side and the other 50% is performed on the display side is possible.
   From the information on the profile that is used on the image capture side, it is possible to reproduce the image before image processing on the image capture side. Thus, in a case where high quality image processing can be performed on the display side, it is possible to undo the image processing performed on the image capture side and then subject that image to image processing again on the display side. As a result, the user can receive a higher quality image.
   If tag information or parameter information is included as recommended profile information d146, then with little information it is possible to add information relating to the profile.

### [Eighth Embodiment]

(1)
   In the foregoing embodiments, the visual processing portion, the profile creation execution portion, the control portion, and the color processing execution portion, etc., can be achieved by software or hardware. If achieved by software, then that program is a program that executes color processing of an image and that is stored on a storage device such as a hard disk, RAM, ROM, or memory card in a device that is provided in or connected to a machine that handles images, such as a computer, a digital camera, a portable telephone, a PDA, or a digital television. The program for example can be provided on a recording medium such as a CD-ROM or over a network.
   It is also possible for the visual processing portion, the profile creation execution portion, the control portion, and the color processing execution portion, etc. to be contained in an LSI. By containing them in an LSI it is possible to provide different processing using base profiles, and thus it is not necessary to provide an LSI for each instance where different processing is to be achieved.
   More specifically, each functional block of the foregoing embodiments can be separately achieved as single chips, or can be achieved by a single chip that incorporates some or all of those functions. It should be noted that here reference is made to an LSI, but depending on the degree of integration, it may be referred to as IC, system LSI, super LSI, or ultra LSI.
   Further, the manner in which the integrated chip is achieved is not limited to a LSI, and it is also possible to use a dedicated circuit or a general purpose processor. After LSI manufacturing, it is also possible to employ a programmable FPGA (Field Programmable Gate Array) or a reconfigurable processor in which the connections and settings of the circuit cells within the LSI can be reconfigured.
   Further, if other technologies that improve upon or are derived from semiconductor technology enable the integration technology to replace LSIs, then naturally it is also possible to integrate the functional blocks using that technology. Biotechnology applications are one such foreseeable example.
(2)
   In the foregoing embodiment, the input signal d1 and the image signal d2 can be still images or moving images.
(3)
   In the foregoing embodiment, the image signal values are expressed as coordinates of a color space using the three base colors R, G, and B, but the effects of the present invention are not limited to instances where data of this color space are used. For example, the data can also be of a CMY-type color space or a Lab-type color space.
   The effects of the present invention may also find use outside of color processing that involves a three-dimensional color space. That is, the effects of the present invention are not dependant on the dimension of the color space that is handled.
(4)
   An overall effect of the foregoing embodiment is that the degree of processing such as display color transformation, color region transformation, and memory color correction can be adjusted freely. For example, it is possible to perform color processing that is in correspondence with the environment of the output device that will output the image signal after color processing. More specifically, it is possible to display the color-processed image signal on a monitor taking into account the ambient light of the surroundings, as well as to print out the color-processed image signal on a printer taking into account the paper quality. Also, in display color transformation and memory color correction, etc., it is possible to perform color processing that is in correspondence with the preferences of each person who will view the image.
   In addition to these effects, through the foregoing embodiments it is not necessary to have a considerable number of lookup tables, each of which has a different degree of color processing, and this allows the storage capacity of the memory etc. for storing the lookup tables to be reduced.

### [Ninth Embodiment]

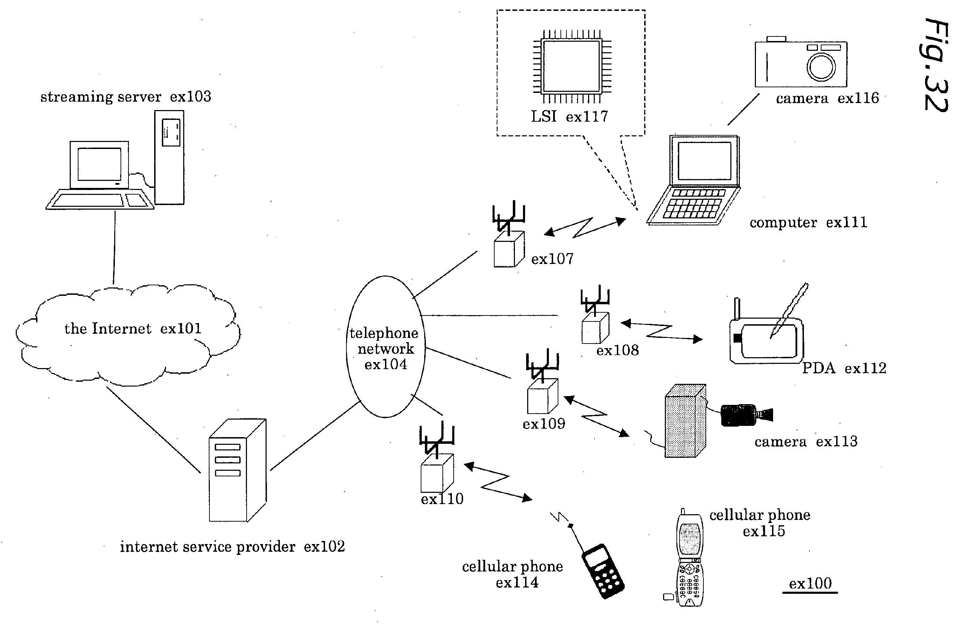

An example of the application of the image processing devices, the image processing methods and the image processing programs, as well as a system using the same according to a ninth example of the present invention are described with reference to Figs. 32 to 35.

Fig. 32 is a block diagram showing an overall structure of a content providing system ex100 that realizes a content delivering service. An area where a communication service is provided is divided into cells of a desired size, and base stations ex107-ex110 that are fixed radio stations are provided in the cells.

This content providing system ex100 includes a computer ex111, a personal digital assistant (PDA) ex112, a camera ex113, a cellular phone ex114, a cellular phone with camera ex115 and other equipment that are connected to the Internet ex101 for example via an internet service provider ex102, a telephone network ex104 and base stations ex107-ex110.

However, the content providing system ex100 can adopt any combination for connection without being limited to the combination shown in Fig. 32. In addition, each of the devices can be connected directly to the telephone network ex104 without the base stations ex107-ex110 that are fixed radio stations.

The camera ex113 is a device such as a digital video camera that can obtain a moving image. In addition, the cellular phone may be any type of PDC (Personal Digital Communications) method, CDMA (Code Division Multiple Access) method, W-CDMA (Wideband-Code Division Multiple Access) method, or GSM (Global System for Mobile Communications) method, or a cellular phone of PHS (Personal Handyphone System).

In addition, the streaming server ex103 is connected to the camera ex113 via the base station ex109 and the telephone network ex104, so that live delivery can be performed on the basis of coded data transmitted by a user of the camera ex113. The coding process of the obtained data may be performed by the camera ex113 or by a server for transmitting data. In addition, the moving image data obtained by the camera ex116 may be transmitted to the streaming server ex103 via the computer ex111. The camera ex116 is a device that can take a still image like a digital camera and a moving image. In this case, coding of the moving image data may be performed by the camera ex116 or by the computer ex111. In addition, the coding process may be performed by an LSI ex117 in the computer ex111 or the camera ex116. Note that it is possible to incorporate software for coding and decoding images into a storage medium (a CD-ROM, a flexible disk, a hard disk or the like) that is a recording medium readable by the computer ex111. Furthermore, the cellular phone with camera ex115 may transmit the moving image data. In this case, the moving image data is coded by the LSI in the cellular phone ex115.

In this content providing system ex100, content (for example, a moving image of a music concert) that the user is recording with the camera ex113 or the camera ex116 are coded and transmitted to the streaming server ex103, while the streaming server ex103 delivers a stream of the content data to a client who made a request. The client may be the computer ex111, the PDA ex112, the camera ex113, the cellular phone ex114 or the like that can decode the coded data. Thus, in the content providing system ex100, the client can receive and reproduce the coded data. The system can realize personal broadcasting when the client receives, decodes and reproduces the stream in real time.

To display the content, the image processing devices, the image processing methods and the image processing programs may be used. For example, the computer ex111, the PDA ex112, the camera ex113, the cellular phone ex114 or the like may be provided with the image processing devices and execute the the image processing methods and the image processing programs.

The streaming server ex103 may be a device which provides the image processing device with the profile data through the Internet ex101. Moreover, a plurality of the streaming servers ex103 may be exist and each of the streaming servers ex103 may provide different profile datas. Furthermore, the streaming server ex103 may produce the profile data. If the image processing device can obtain the profile data through the Internet ex101, it is not necessary for the image processing device to store a large number of profiles for the image processing in advance, and this allows the storage capacity for the profiles to be reduced. Further, by obtaining the profiles from different servers which locate on the Internet ex101, it is possible for the image processing device to execute different image processings.

An example regarding a cellular phone will now be described.

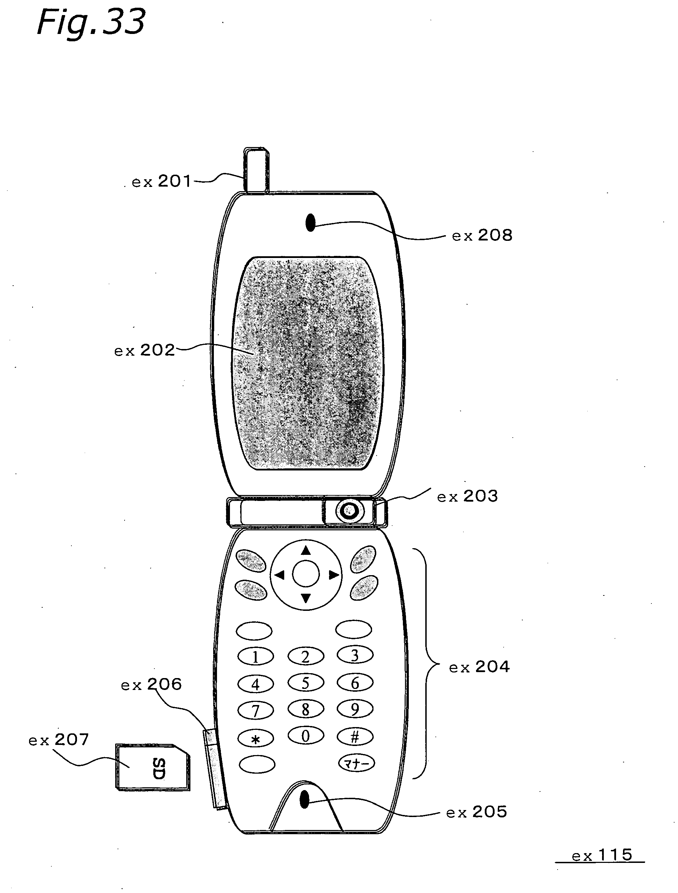

Fig. 33 shows the cellular phone ex115 that utilizes the image processing devices of the present invention. The cellular phone ex115 includes an antenna ex201 for transmitting and receiving radio waves with the base station ex110, a camera portion ex203 such as a CCD camera that can take a still image, a display portion ex202 such as a liquid crystal display for displaying images obtained by the camera portion ex203 or images received by the antenna ex201 after the image data are decoded, a main body portion including a group of operating keys ex204, a sound output portion ex208 such as a speaker for producing sounds, a sound input portion ex205 such as a microphone for receiving sounds, a recording medium ex207 for storing coded data or decoded data such as data of taken moving images or still images, data of received e-mails, moving images or still images, and a slot portion ex206 that enables the recording medium ex207 to be attached to the cellular phone ex115. The recording medium ex207 such as an SD card includes a plastic case housing a flash memory element that is one type of EEPROM (Electrically Erasable and Programmable Read Only Memory) nonvolatile memory that is electronically rewritable and erasable.

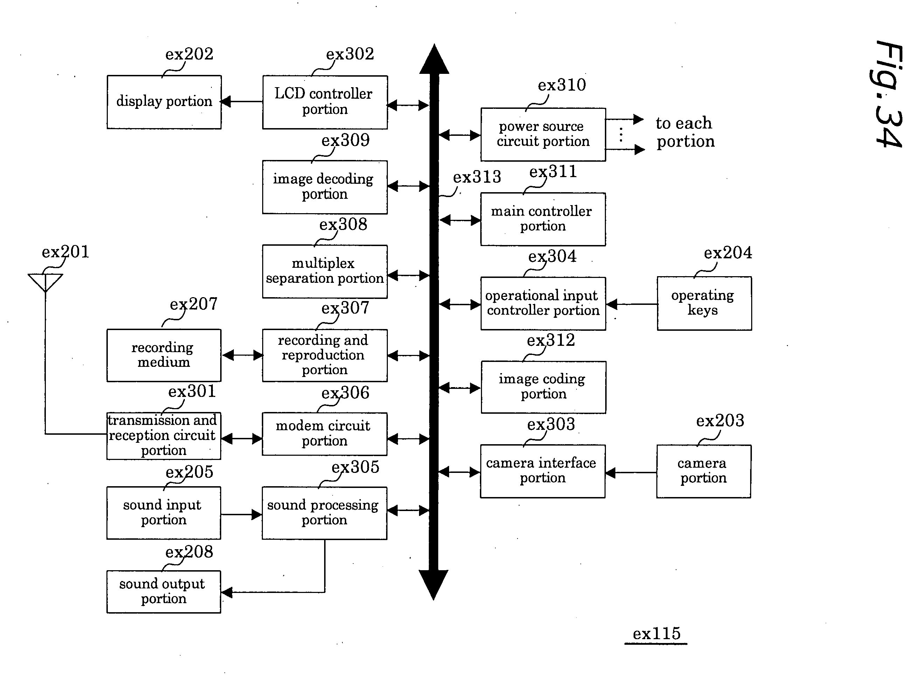

Furthermore, the cellular phone ex115 will be described with reference to Fig. 34. The cellular phone ex115 includes a main controller portion ex311 for controlling each portion of the main body portion having the display portion ex202 and the operating keys ex204, a power source circuit portion ex310, an operational input controller portion ex304, an image coding portion ex312, a camera interface portion ex303, an LCD (Liquid Crystal Display) controller portion ex302, an image decoding portion ex309, a multiplex separation portion ex308, a recording and reproduction portion ex307, a modem circuit portion ex306 and a sound processing portion ex305, which are connected to each other via a synchronizing bus ex313.

When the user turns on a clear and power key, the power source circuit portion ex310 supplies power from a battery pack to each portion so that the digital cellular phone with camera ex115 is activated.

The cellular phone ex115 converts a sound signal collected by the sound input portion ex205 during a sound communication mode into digital sound data by the sound processing portion ex305 under control of the main controller portion ex311 that includes a CPU, a ROM and a RAM. The digital sound data are processed by the modem circuit portion ex306 as a spectrum spreading process and are processed by the transmission and reception circuit portion ex301 as a digital to analog conversion process and a frequency conversion process. After that, the data are transmitted via the antenna ex201. In addition, the cellular phone ex115 amplifies a signal that is received by the antenna ex201 during the sound communication mode and performs the frequency conversion process and an analog to digital conversion process on the data, which is processed by the modem circuit portion ex306 as a spectrum inverse spreading process and is converted into a analog sound signal by the sound processing portion ex305. After that, the analog sound signal is delivered by the sound output portion ex208.

Furthermore, when transmitting electronic mail during a data communication mode, text data of the electronic mail are entered by using the operating keys ex204 of the main body portion and are given to the main controller portion ex311 via the operational input controller portion ex304. The main controller portion ex311 performs the spectrum spreading process on the text data by the modem circuit portion ex306 and performs the digital to analog conversion process and the frequency conversion process by the transmission and reception circuit portion ex301. After that, the data are transmitted to the base station ex110 via the antenna ex201.

When transmitting image data during the data communication mode, the image data obtained by the camera portion ex203 are supplied to the image coding portion ex312 via the camera interface portion ex303. In addition, if the image data are not transmitted, it is possible to display the image data obtained by the camera portion ex203 directly by the display portion ex202 via the camera interface portion ex303 and an LCD controller portion ex302.

The image coding portion ex312 converts the image data supplied from the camera portion ex203 into the coded image data by compressing and coding the data, and the coded image data are supplied to the multiplex separation portion ex308. In addition, the cellular phone ex115 collects sounds by the sound input portion ex205 while the camera portion ex203 is taking the image, and the digital sound data is supplied from the sound processing portion ex305 to the multiplex separation portion ex308.

The multiplex separation portion ex308 performs multiplexing of the coded image data supplied from the image coding portion ex312 and the sound data supplied from the sound processing portion ex305 by a predetermined method. Multiplexed data obtained as a result are processed by the modem circuit portion ex306 as a spectrum spreading process and are processed by the transmission and reception circuit portion ex301 as a digital to analog conversion process and a frequency conversion process. After that, the data are transmitted via the antenna ex201.

When receiving moving image file data that are linked to a web page during the data communication mode, a signal received from the base station ex110 via the antenna ex201 is processed by the modem circuit portion ex306 as a spectrum inverse spreading process. Multiplexed data obtained as a result are supplied to the multiplex separation portion ex308.

In addition, in order to decode multiplexed data received via the antenna ex201, the multiplex separation portion ex308 separates a coded bit stream of image data in the multiplexed data from a coded bit stream of sound data. Then, the multiplex separation portion ex308 supplies the coded image data to the image decoding portion ex309 via the synchronizing bus ex313 and supplies the sound data to the sound processing portion ex305.

Next, the image decoding portion ex309 generates reproduction moving image data by decoding the coded bit stream of the image data and supplies the data to the display portion ex202 via the LCD controller portion ex302. Thus, the moving image data included in a moving image file that is linked to a home page can be displayed. In this case, the sound processing portion ex305 converts the sound data into an analog sound signal, which is supplied to the sound output portion ex208. Thus, sound data included in the moving image file that is linked to a home page can be reproduced.

Note that the image decoding portion ex309 may be provided with the image processing device shown in the above-described embodiments.

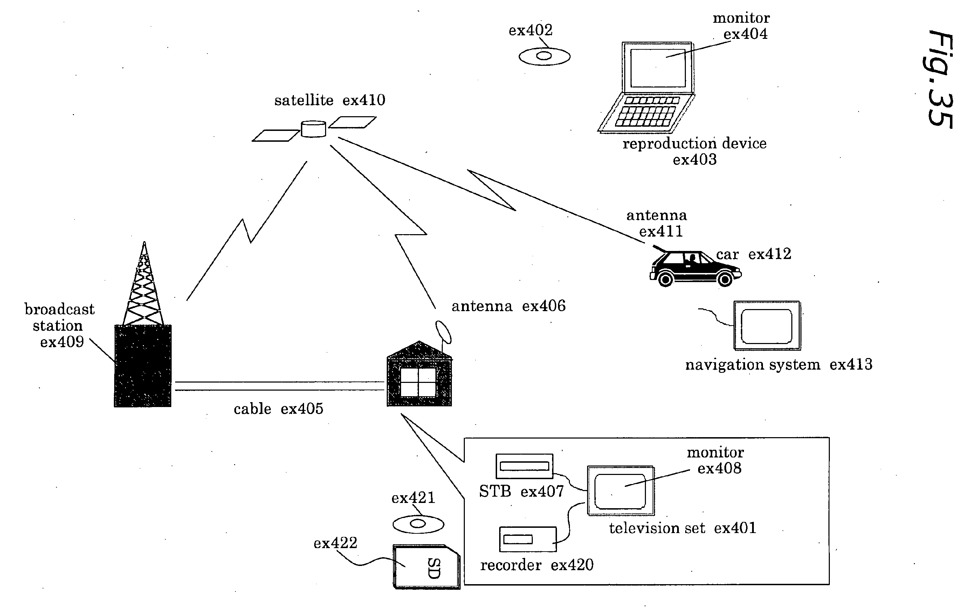

Note that the present invention is not limited to the example of the system described above. Digital broadcasting by satellite or terrestrial signals has been a recent topic of discussion. As shown in Fig. 35, the image processing devices, the image processing methods and the image processing programs of the present invention can be incorporated into the digital broadcasting system, too.

More specifically, in a broadcast station ex409, a coded bit stream of image information is sent to a communication or a broadcasting satellite ex410 via a radio wave. The broadcasting satellite ex410 that received the coded bit stream of image information sends radio waves for broadcasting. These radio waves are received by an antenna ex406 of a house equipped with a satellite broadcasting reception facility, and a device such as a television set (a receiver) ex401 or a set top box (STB) ex407 decodes the coded bit stream and reproduces the same. In addition, the television set (the receiver) ex401 or the set top box (STB) ex407 may be provided with the image processing devices shown in the above-described embodiments, use the image processing methods shown in the above-described embodiments or execute the image processing programs shown in the above-described embodiments. In addition, a reproduction device ex403 for reading and decoding a coded bit stream that is recorded on a storage medium ex402 such as a CD or a DVD that is a recording medium may be equipped with the image processing devices, the image processing methods or the image processing programs shown in the above-described embodiments. In this case, the reproduced image signal and text track are displayed on a monitor ex404. In addition, it is possible to mount the image processing devices, the image processing methods or the image processing programs shown in the above-described embodiments, in a set top box ex407 that is connected to a cable ex405 for a cable television or the antenna ex406 for a satellite or surface wave broadcasting, so that the image can be reproduced on a monitor ex408 of the television set. In this case, it is possible to incorporate the image processing devices shown in the above-described embodiments not into the set top box but into the television set. In addition, it is possible that a car ex412 equipped with an antenna ex411 receives a signal from the broadcasting satellite ex410 or the base station ex107 and reproduces the moving image on a display of a navigation system ex413 in the car ex412.

Furthermore, it is possible to encode the image signal and record the encoded image signal in a recording medium. As a specific example, there is a recorder ex420 such as a DVD recorder for recording image signals on a DVD disk ex421 or a disk recorder for recording image signals on a hard disk. Furthermore, it is possible to record on an SD card ex422. In addition, in case that the recorder ex420 includes the image processing devices of the present invention, it is possible to process image signals recorded on a DVD disk ex421 or a SD card ex422, so as to display on the monitor ex408.

Note that in the structure of the navigation system ex413 shown in Fig. 74, the camera portion ex203, the camera interface portion ex303 and the image coding portion ex312 can be omitted. This can be also applied to the computer ex111 and the television set (the receiver) ex401.

In addition, the terminal device such as the cellular phone ex114 may include three types of assemblies. A first type is a transmission and reception terminal having both the coder and the decoder, a second type is a transmission terminal having only a coder and a third type is a reception terminal having only a decoder.

Thus, the image processing devices, the image processing methods or the image processing programs shown in the above-described embodiments can be used for any device and system described above, so that effects described above can be obtained.

### Industrial Applicability

The present invention can be usefully employed as an image processing device for which there is a need to provide an image processing device in which the storage capacity for storing lookup tables can be reduced while allowing the degree of processing of the various color processing operations to be freely adjusted, and in particular as an image processing device that performs color processing of an image signal.

## Claims

1. An image processing device that performs color processing of an image signal, comprising:
a color transformation lookup table creation unit operable to create a new color transformation lookup table that achieves a predetermined color processing to a predetermined degree of processing based on a plurality of base color transformation lookup tables, each of which achieves the predetermined color processing to a different degree of processing; and
a color processing execution unit operable to execute color processing of the image signal based on the new color transformation lookup table that has been created.

2. The image processing device according to claim 1,
wherein the color transformation lookup table creation unit has a creation execution unit operable to create the new color transformation lookup table based on a degree of synthesis of a plurality of base color transformation lookup tables, each of which achieves the predetermined color processing to a different degree of processing, and a lookup table storage unit operable to store the new color transformation lookup table that is created by the creation execution unit; and
wherein the color processing execution unit executes color processing of the image signal based on the new color transformation lookup table that has been stored in the lookup table storage unit.

3. The image processing device according to claim 1 or 2,
wherein the plurality of base color transformation lookup tables include a base color transformation lookup table that achieves the predetermined color processing to a default degree of processing, and a base color transformation lookup table that achieves the predetermined color processing to a degree of processing that is higher than the default or a degree of processing that is lower than the default.

4. The image processing device according to any one of claims 1 to 3,
wherein each of the base color transformation lookup tables is a color transformation lookup table that achieves a combination of a plurality of different color processing.

5. The image processing device according to any one of claims 1 to 3,
wherein the color transformation lookup table creation unit creates a new color transformation lookup table by synthesizing a plurality of color transformation lookup tables that are created for each color processing and that are created based on a plurality of base color transformation lookup tables that achieve a different degree of processing for each color processing.

6. An image processing method of performing color processing of an image signal, comprising the steps of:
creating a new color transformation lookup table that achieves a predetermined color processing to a predetermined degree of processing based on a plurality of base color transformation lookup tables, each of which achieves the predetermined color processing to a different degree of processing; and
executing color processing of the image signal based on the new color transformation lookup table that has been created.

7. An image processing program for performing color processing of an image signal through a computer, the image processing program causing the computer to perform an image processing method that comprises the steps of:
creating a new color transformation lookup table that achieves a predetermined color processing to a predetermined degree of processing based on a plurality of base color transformation lookup tables, each of which achieves the predetermined color processing to a different degree of processing; and
executing color processing of the image signal based on the new color transformation lookup table that has been created.

8. An integrated circuit including an image processing device according to any one of claims 1 to 5.

9. A display device comprising:
an image processing device according to any one of claims 1 to 5; and
display unit operable to perform a display of the image signal that has been color processed that is output from the image processing device.

10. An image-capturing device, comprising:
image-capturing unit operable to perform image capture of an image; and
an image processing device according to any one of claims 1 to 5 that performs color processing of an image captured by the image-capturing unit as the image signal.

11. A portable information terminal comprising:
data reception unit operable to receive image data that have been transmitted or broadcast;
an image processing device according to any one of claims 1 to 5 that performs color processing of the image data that are received as the image signal; and
display unit operable to perform a display of the image signal that has been color processed by the image processing device.

12. A portable information terminal comprising:
image-capturing unit operable to capture an image;
an image processing device according to any one of claims 1 to 5 that performs color processing of an image that has been captured by the image-capturing unit as the image signal; and
data transmission unit operable to transmit the image signal that has been color processed.

13. An image processing device that performs color processing of an image signal that has been received as input, comprising:
profile creation unit operable to create a profile to be used for color processing, based on a plurality of profiles for performing different color processing; and
image processing execution unit operable to perform the color processing using the profile that is created by the profile creation unit.

14. An image processing device that performs color processing of an image signal that has been received as input, comprising:
profile information output unit operable to output profile information for specifying a profile to be used for the color processing; and
image processing execution unit operable to perform the color processing using the profile specified based on the information that has been output from the profile information output unit.

15. The image processing device according to claim 14,
wherein the profile information output unit outputs the profile information in accordance with a display environment in which the image signal that has been color processed will be displayed.

16. The image processing device according to claim 14,
wherein the profile information output unit outputs the profile information in accordance with information included in the image signal that is relating to the profile.

17. The image processing device according to claim 14,
wherein the profile information output unit outputs the profile information in accordance with information relating to a characteristic of the color processing that has been obtained.

18. The image processing device according to claim 14,
wherein the profile information output unit outputs the profile information in accordance with information relating to an environment in which the image signal is created.

19. The image processing device according to claim 14,
wherein the image signal includes image data and property information of the image signal; and
wherein the profile information output unit outputs the profile information in accordance with the property information.

20. The image processing device according to claim 19,
wherein the property information includes overall property information relating to the image data overall.

21. The image processing device according to claim 19 or 20,
wherein the property information includes partial property information relating to some of the image data.

22. The image processing device according to claim 19,
wherein the property information includes creation environment property information relating to an environment in which the image signal is created.

23. The image processing device according to claim 19,
wherein the property information includes medium property information relating to a medium from which the image signal is obtained.

24. An image processing device according to any one of the image processing devices according to claims 13 to 23,
wherein the profile is a two-dimensional LUT; and
wherein the image processing execution unit includes an image processing device according to any one of claims 1 to 5.

25. An image processing device comprising:
image processing execution unit operable to perform color processing of an image signal that has been received as input;
profile information output unit operable to output profile information for specifying a profile with which favorable color processing is performed on the image signal that is received as input; and
profile information adding unit operable to add the profile information to the image signal or to the image signal that has been color processed by the image processing execution unit, and outputs the result.

26. An integrated circuit including an image processing device according to any one of claims 13 to 25.

27. A display device comprising:
an image processing device according to any one of claims 13 to 25; and
display unit operable to perform a display of the image signal that has been color processed by the image processing device.

28. An image-capturing device, comprising:
image-capturing unit operable to perform capture of an image; and
an image processing device according to any one of claims 13 to 25 that performs color processing of the image captured by the image-capturing unit as the image signal.

29. A portable information terminal comprising:
data reception unit operable to receive image data that have been transmitted or broadcast;
an image processing device according to any one of claims 13 to 25 that performs color processing of the image data that are received as the image signal; and
display unit operable to perform a display of the image signal that has been color processed by the image processing device.

30. A portable information terminal comprising:
image-capturing unit operable to perform capture of an image;
an image processing device according to any one of claims 13 to 25 that performs color processing of the image captured by the image-capturing unit as the image signal; and
data transmission unit operable to transmit the image signal that has been color processed.

31. A semiconductor device that performs color processing of an image signal, comprising:
a color transformation lookup table creation portion for creating a new color transformation lookup table that achieves a predetermined color processing to a predetermined degree, based on a plurality of base color transformation lookup tables, each of which achieves the predetermined color processing to a different degree of processing; and
a color processing execution portion that executes color processing of the image signal based on the new color transformation lookup table that has been created.

32. A semiconductor device that performs color processing of an image signal that has been received as input, comprising:
a profile creation portion that creates a profile to be used for color processing, based on a plurality of profiles for performing different color processing; and
an image processing execution portion that performs the color processing using the profile that is created by the profile creation portion.

33. A semiconductor device that performs color processing of an image signal that has been received as input, comprising:
a profile information output portion that outputs profile information for specifying a profile to be used for the color processing; and
an image processing execution portion that performs the color processing using the profile specified based on the information that has been output from the profile information output portion.

34. A semiconductor device comprising:
an image processing execution portion that performs color processing of an image signal that has been received as input;
a profile information output portion that outputs profile information for specifying a profile with which favorable color processing is performed on the image signal that is received as input; and
a profile information adding portion that adds the profile information to the image signal or to the image signal that has been color processed by the image processing execution portion, and outputs the result.
